(19) Europäisches Patentamt
European Patent Office
Office européen des brevets

(11) EP 0 578 826 B1

(12) EUROPEAN PATENT SPECIFICATION

(45) Date of publication and mention of the grant of the patent: **08.07.1998 Bulletin 1998/28**

(21) Application number: **92923005.0**

(22) Date of filing: **10.11.1992**

(51) Int Cl.[6]: **G01L 17/00**, B60C 23/06

(86) International application number: **PCT/JP92/01457**

(87) International publication number: **WO 93/10431 (27.05.1993 Gazette 1993/13)**

(54) **Tire air pressure detecting device using a resonance frequency**

Reifendruckmesser mit Resonanzfrequenz des Reifens

Dispositif de mesure de la pression dans un pneu ayant une fréquence de resonance

(84) Designated Contracting States:
**DE FR GB**

(30) Priority:
**11.11.1991 JP 294622/91**
**04.02.1992 JP 18983/92**
**10.02.1992 JP 57521/92**
**16.03.1992 JP 55942/92**
**17.04.1992 JP 125623/92**
**17.04.1992 JP 125624/92**
**20.04.1992 JP 128078/92**
**20.04.1992 JP 128079/92**
**30.05.1992 JP 164186/92**

(43) Date of publication of application:
**19.01.1994 Bulletin 1994/03**

(60) Divisional application: **97103562.1 / 0 783 982**

(73) Proprietor: **DENSO CORPORATION**
**Kariya-City, Aichi-Pref. (JP)**

(72) Inventors:
- **NAITO, Toshiharu Nippondenso Co., Ltd.**
  **Kariya-city Aichi-Pref. 448 (JP)**
- **TAGUCHI, Takeyasu Nippondenso Co., Ltd.**
  **Kariya-city Aichi-Pref. 448 (JP)**
- **TOKUDA, Hiromi Nippondenso Co., Ltd.**
  **Kariya-city Aichi-Pref. 448 (JP)**
- **INOUE, Yuichi Nippondenso Co., Ltd.**
  **Kariya-city Aichi-Pref. 448 (JP)**
- **FUJIMOTO, Shusaku Nippondenso Co., Ltd.**
  **Kariya-city Aichi-Pref. 448 (JP)**

(74) Representative: **KUHNEN, WACKER & PARTNER**
**Alois-Steinecker-Strasse 22**
**85354 Freising (DE)**

(56) References cited:

| | |
|---|---|
| EP-A- 0 083 771 | WO-A-88/03878 |
| WO-A-91/14586 | DE-A- 2 905 931 |
| DE-A- 3 541 494 | DE-A- 3 741 818 |
| JP-A- 2 096 613 | JP-A-63 138 229 |
| US-A- 4 574 267 | |

- **PATENT ABSTRACTS OF JAPAN vol. 11, no. 380 (M-650)(2827) 11 December 1987 & JP-A-62 149 503 (NIPPON SOKEN) 3 July 1987.**
- **PATENT ABSTRACTS OF JAPAN vol. 12, no. 227 (M-713)(3074) 28 June 1988 & JP-A-63 022 707 (KOMATSU) 30 January 1988.**
- **PATENT ABSTRACTS OF JAPAN vol. 10, no. 41 (P-429)(2098) 18 February 1986 & JP-A-60 187 837 (OKI DENKI KOGYO) 25 September 1985.**
- **Microfilm of the specification and drawings annexed to the written application of Japanese Utility Model Application No.180000037/1985 (Laid-Open NO. 87909/1987),(Diesel Kiki Co.,Ltd.), June 5, 1987 (05.06.87),"p.7,.8"(Family:none).**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 578 826 B1

## Description

### TECHNICAL FIELD

The present invention relates to a tire air pressure condition detecting device.

### BACKGROUND ART

Conventionally, as a device for detecting a tire air pressure, there has been proposed a device for directly detecting air pressure of a tire by providing a pressure responsive member which is responsive to air pressure within the tire. However, in case of the device to directly detect the air pressure of the tire, problems are encountered in that, since the pressure responsive member has to be provided within the tire, the construction becomes complicated and cost becomes high.

Therefore, there has also been proposed a device for indirectly detecting the air pressure of the vehicular tire on the basis of a detection signal of a wheel speed sensor which detects a wheel speed of each wheel by utilizing the fact that the radius of the tire is varied (becomes shorter) when the air pressure of the tire is lowered.

However, the radius of the tire, as an object to be detected, may be affected by a difference in each tire due to wearing as well as by a traveling condition such as cornering, braking, starting or so forth. Furthermore, radial tires, have a small deformation magnitude in the tire radius depending upon a change of the tire air pressure. (For instance, when the tire pressure is lowered in the extent of 1 $Kg/cm^2$, the deformation magnitude of the tire radius is approximately 1 mm.) In such reason, the method for indirectly detecting the tire air pressure, based on the deformation magnitude in the tire radius, encounters a problem in that it cannot certainly provide sufficient detecting precision.

In JP-A-60-149503 a natural frequency is measured after knocking. A natural frequency is also used in WO-A1-91-14586. US-A-4574267 uses a filter bank. The general theory of a simple vibrating system is e.g. explained in 'Vibration analysis for electronic equipment' by Dave.S.Steinberg, page 42 2.14. The damped free-vibration equation, and pages 43 to 46 2.15. Forced vibrations with viscous damping, especially figure 2.22. on page 45 A dynamic amplification curve for a simple system.

The present invention has an object to provide a tire pressure condition detecting device with improved detecting precision. This object is solved with the device of claim 1.

### BRIEF DESCRIPTION OF THE DRAWINGS

Fig. 1 is an illustration showing a construction of the first embodiment of the invention;
Fig. 2 is a characteristic chart showing a frequency characteristics of acceleration of an unsprung mass of a vehicle;
Fig. 3 is a characteristics chart showing variation of resonance frequencies of the unsprung mass of the vehicle due to variation of a tire air pressure in upward and downward as well as forward and backward directions;
Fig. 4 is an explanatory illustration showing a principle of detection of the tire air pressure in the first embodiment;
Fig. 5 is a chart showing a waveform of an output voltage of a wheel speed sensor;
Fig. 6 is a chart showing a waveform showing varying condition of a wheel speed v calculated on the basis of a detection signal of the wheel speed sensor;
Fig. 7 is a characteristic chart showing a result of frequency analyzing operation with respect to the wheel speed v of the waveform illustrated in Fig. 6;
Fig. 8 is an explanatory illustration for explanation of an averaging process in the first embodiment;
Fig. 9 is a characteristics chart showing a result of frequency analysis after moving averaging process in the first embodiment:
Fig. 10 is a characteristics chart showing a process of an electronic control unit of the first embodiment;
Fig. 11 is a characteristic chart showing a relationship between the tire air pressure and the resonance frequencies in the second embodiment of the invention;
Fig. 12 is a flowchart showing a difference of the process between the second embodiment and the first embodiment;
Fig. 13 is an illustration showing a construction of the third embodiment of the invention;
Fig. 14 is a flowchart showing a difference of the process between the third embodiment and the first embodiment;
Fig. 15 is an illustration showing a construction of the fourth embodiment of the invention;
Fig. 16 is an illustration showing a construction of the fifth embodiment of the invention;
Fig. 17 is a flowchart showing a process of the electronic control unit of the sixth embodiment;
Fig. 18 is a timing chart showing a variation of the wheel speed;
Fig. 19 is a characteristic chart illustrating an occurrence of peak in a degree of frequency corresponding to the number of a wheel rotation per unit time;

Fig. 20 is an explanatory illustration for discussion of an outline of the control in the seventh embodiment;
Fig. 21 is a flowchart illustrating a principle of the process of the seventh embodiment;
Fig. 22 is an explanatory illustration for discussion of an outline of the control in the eighth embodiment;
Fig. 23 is a flowchart illustrating a principle of the process of the eighth embodiment;
Fig. 24 is an explanatory illustration for discussion of an outline of the control in the ninth embodiment;
Fig. 25 is a flowchart illustrating a principle of the process of the ninth embodiment;
Fig. 26 is a flowchart illustrating a principle of the process of an outline of the control in the tenth embodiment;
Fig. 27 is a flowchart illustrating a principle of the process of the tenth embodiment;
Fig. 28 is an explanatory illustration for discussion of an outline of the control in the eleventh embodiment;
Fig. 29 is a characteristic chart showing a frequency distribution of the wheel speed in the eleventh embodiment;
Fig. 30 is a characteristic chart showing predicted gain distribution of a tire rotation degree component in the eleventh embodiment;
Fig. 31 is a characteristic chart showing a frequency characteristics from which the tire rotation degree component is removed, in the eleventh embodiment;
Fig. 32 is a flowchart illustrating a principle of the process of the eleventh embodiment;
Fig. 33 is an explanatory illustration for discussion of an outline of the control in the twelfth embodiment;
Fig. 34 is an explanatory illustration for discussion of an outline of the control in the twelfth embodiment;
Fig. 35 is an explanatory illustration for discussion of an outline of the control in the twelfth embodiment;
Fig. 36 is a flowchart illustrating a principle of the process of the thirteenth embodiment;
Fig. 37 is a flowchart illustrating a principle of the process of the thirteenth embodiment;
Fig. 38 is a characteristic chart showing a relationship between a vehicle speed ratio and a gain coefficient;
Fig. 39 is a flowchart illustrating a principle of the process of the fourteenth embodiment;
Fig. 40 is a characteristic chart showing a relationship between a vehicle speed and a gain of respective degrees of the frequency corresponding to the wheel rotation speed per unit time;
Fig. 41 is a flowchart illustrating a principle of the process of the fifteenth embodiment;
Fig. 42 is a flowchart illustrating a principle of the process of the sixteenth embodiment;
Fig. 43 is a flowchart illustrating a principle of the process of the sixteenth embodiment;
Fig. 44 is a flowchart illustrating a principle of the process of the seventeenth embodiment;
Fig. 45 is a flowchart illustrating a principle of the process of the seventeenth embodiment;
Fig. 46 is a characteristic chart showing a relationship of the number of data (SMP) in relation to an difference $\Delta f$ between a resonance frequency $f_k$ and a discriminated value $f_L$;
Fig. 47 is a characteristic chart showing a relationship of the number of an averaging process (SUM) with respect to an difference $\Delta f$ between a resonance frequency $f_k$ and a discriminated value $f_L$;
Fig. 48 is a flowchart showing a principle of the process in the eighteenth embodiment;
Fig. 49 is a flowchart showing a principle of the process in the eighteenth embodiment;
Fig. 50 is a flowchart showing a principle of the process in the nineteenth embodiment;
Fig. 51 is a chart showing a wave form of the vehicle speed in a time sequence calculated by ECU;
Fig. 52 is a characteristic chart showing a relationship between a wheel speed variation magnitude $\Delta v$ and the number of data (SMP) ;
Fig. 53 is a characteristic chart showing a relationship between a wheel speed variation magnitude $\Delta v$ and the number of the averaging processes (SUM) ;
Fig. 54 is a flowchart showing the process of the electronic control unit of the twentieth embodiment;
Fig. 55 is a timing chart showing a relationship between the wheel speed and resonance frequency in the twentieth embodiment;
Fig. 56 is a flowchart showing the principle of the process of the twenty-first embodiment;
Fig. 57 is a characteristic chart showing a relationship between the wheel speed, the tire air pressure and resonance frequency of the unsprung mass;
Fig. 58 is a characteristic chart showing a relationship between the tire pressure of the radial tire and stadless tire and resonance frequency in the unsprung mass;
Fig. 59 is a flowchart showing a process of the ECU of the twenty-second embodiment;
Fig. 60 is a flowchart showing a process of the ECU of the twenty-second embodiment;
Fig. 61 is a flowchart showing a process of the ECU of the twenty-third embodiment;
Fig. 62 is an explanatory illustration in the case discriminating lowering of the tire air pressure in relation of the resonance frequency and the tire air pressure;
Fig. 63 is an illustration showing a construction of a tire air pressure detecting device indicative of the arrangement of a set switch;
Fig. 64 is a flowchart of the process of the ECU of the twenty-fourth embodiment;
Fig. 65 is a graph showing a relationship of an effective rolling radius and the resonance frequenoy of the unsprung mass;

Fig. 66 is a flowchart of the signal processing of the electronic control unit in the twenty-fifth embodiment;

Fig. 67 is a flowchart of the signal processing of the electronic control unit in the twenty-fifth embodiment.

Fig. 68 is a graph showing a relationship of the tire air pressure and the resonance frequency of the unsprung mass;

Fig. 69 is a graph showing a relationship of an effective rolling radius and the resonance frequency of the unsprung mass;

Fig. 70 is a flowchart of the signal processing of the electronic control unit in the twenty-sixth embodiment;

Fig. 71 is a flowchart of the signal processing of the electronic control unit in the twenty-sixth embodiment;

Fig. 72 is a characteristic chart illustrating fluctuation of the tire air pressure with respect to the same resonance frequency depending upon the unsprung mass load;

Fig. 73 is a characteristic chart showing a relationship between resonance frequency difference and the tire air pressure;

Fig. 74 is a characteristic chart showing a relationship between resonance frequency $f_{MAX}$ and the resonance frequency difference;

Fig. 75 is a characteristic chart showing another relationship between resonance frequency $f_{MAX}$ and the resonance frequency difference; and

Fig. 76 is a flowchart of the signal processing of the electronic control unit in the twenty-seventh embodiment.

## DESCRIPTION OF THE PREFERRED EMBODIMENTS

The present invention will be explained hereinafter with reference to the drawings.

Fig. 1 is an illustration showing the overall construction of the first embodiment.

As shown in Fig. 1, wheel speed sensors are provided for each tire 1a ~ 1d of a vehicle. Each wheel speed sensor comprises gears 2a ~ 2d and pick-up coils 3a ~ 3d. The gears 2a ~ 2d are coaxially mounted on a rotary shaft (not shown) of each tire 1a ~ 1d, and are made from disc-shaped magnetic bodies. The pick-up coils 3a ~ 3d are positioned in close proximity to the gears 2a ~ 2d with a predetermined gap therebetween for outputting an alternating current signal which has a period corresponding to the rotational speed of both gears 2a ~ 2d and tires 1a ~ 1d. The alternating current signal output from pick-up coils 3a ~ 3d is input into a known electronic control unit (ECU) 4 comprising a wave shaping circuit, ROM, RAM and so forth so that a predetermined signal processing, which includes wave shaping, is performed. The result of this signal processing is input into display portion 5 which indicates the air pressure condition of each tire, 1a ~ 1d, to the driver. The display portion 5 may display the air pressure condition of each tire independently, or by providing only one alarm lamp, it may provide an alarm by turning on the alarm lamp when the air pressure of one of the tires is below a reference air pressure.

The tire air pressure detecting device will now be explained according to the present embodiment.

When a vehicle travels on a paved asphalt road, for example, the tires are subject to upward, downward, forward and backward forces due to fine undulation on the road surface. The tire therefore vibrates in upward, downward, forward and backward directions accordingly. A frequency characteristic of an accelaration of an unsprung mass of the vehicle during tire vibration is illustrated in Fig. 2. As shown in Fig. 2, the frequency characteristic of the acceleration has peak values at two points. Point a is a resonance frequency in the upward and downward directions for the unsprung mass of the vehicle, and point b is a resonance frequency in the forward and backward directions for the unsprung mass of the vehicle.

On the other hand, when the air pressure of the tire varies, the resonance frequencies in the upward, downward, forward and backward directions are also varied since the rubber portion of the tire has a spring constant. For instance, as shown in Fig. 3, when the air pressure of the tire is lowered, the spring constant of the rubber portion of the tire is also lowered to cause lowering of the resonance frequencies in the upward, downward, forward and backward directions. Accordingly, the air pressure condition of the tire can be detected by extracting at least one of the resonance frequencies in the upward, downward, forward and backward directions from the vibration frequency of the tire.

Therefore, in the present embodiment, the resonance frequencies in the upward, downward, forward and backward directions of the unsprung mass of the vehicle are extracted from a detection signal of the wheel speed sensor. Results of extensive study made by the inventors revealed that this is because the detection signal of the wheel speed sensor includes a frequency component of tire vibration. Namely, as a result of frequency analysis of the wheel speed sensor detection signal, it has been determined that the detection signal had two peak values (shown by Fig. 4) which are lowered when the tire air pressure is lowered.

In recent years, an increasing number of vehicles have been equipped with anti-skid control systems (ABS). Since these systems already have wheel speed sensors for each tire, tire air pressure can be detected in them without the addition of any sensors. Also, most of the variation magnitude of the resonance frequency is caused by variation of tire spring constants which are due to variation in tire air pressure. Therefore, the tire air pressure can be stably detected without concern for factors such as wearing of the tire or so forth.

In Fig. 10, there is a flowchart showing a process to be executed by ECU 4. It should be noted that although ECU 4 performs similar processes for wheels 1a ~ 1d, the flowchart of Fig. 10 shows the flow of the process with respect to a single wheel. Also, in the explanation given hereinafter, suffixes for respective reference numerals are omitted. In the flowchart shown in Fig. 10, there is illustrated a particular example, in which an alarm is provided for the driver when the tire air pressure is detected below, or equal to, the reference value.

In Fig. 10, at stap 100A, wheel speed v is calculated by waving shaping the alternating current signal output from the pick-up coil 3 (shown in Fig. 5) to form a pulse signal, and by dividing the pulse interval with an elapsed period. As shown in Fig. 6, the wheel speed v normally contains a large number of high frequency components including the vibration frequency component of the tire. At step 110A, it is determined if a variation magnitude $\Delta v$ of the calculated wheel speed v is equal to, or greater than, the reference value $v_0$. If $\Delta v$ is equal to, or greater, then reference value $v_0$, the process is advanced to step 120A. At step 120A, it is determined if the period $\Delta T$, within which the variation magnitude $\Delta v$ of the wheel speed v is held in excess of the reference value $v_0$, is equal to, or greater than, predetermined period $t_0$. The processes of the above-mentioned steps 110A and 120A are used to determine if the detection method of the present embodiment can be used on the current road surface for detection of the tire air pressure. Namely, in the present embodiment, the detection of the tire air pressure is performed based on variations of the resonance frequency which is contained in the vibration frequency component of the tire. Therefore, unless the wheel speed v is continuously varied to a certain magnitude, sufficient data for calculation of the above-mentioned resonance frequency cannot be obtained. It should be noted that, in the comparison of step 120A, the predetermined period $\Delta T$ is set when the variation magnitude $\Delta V$ of the wheel speed v is equal to, or greater than, the reference value $v_0$, and measurement of the period $\Delta T$ is continued when variation magnitude $\Delta v$ of wheel speed v is again equal to, or greater than, the reference value $v_0$.

It the answers at steps 110A and 120A are both positive, the process is advanced to step 130A. On the other hand, if the answer at either one of steps 110A and 120A is negative, the process returns to step 100A. At step 130A, a frequency analyzing operation (FFT) is performed with respect to the calculated wheel speed, and the cycles of operation N are counted. One example of the result of FFT operation is shown in Fig. 7.

As shown in Fig. 7, when the FFT operation is performed with respect to the wheel speed obtained through traveling of the vehicle on a normal road, substantially random frequency characteristics are typically obtained. This is because of irregularities in the small undulations (size and height) on the road surface. Accordingly, the frequency characteristics may vary for every wheel speed data. Therefore, in the present embodiment, in order to suppress variation of the frequency characteristics as much as possible, an average value of the results of FFT operation is derived over a multiple operation cycles. At step 140A, it is determined whether the number of the FFT operation cycles, N, reaches predetermined number $n_0$. If it does not reach the predetermined number of cycles, the processes at steps 100A through 130A are again executed. On the other hand, when the number of operation cycles reaches the predetermined number of cycles, the process is advanced to step 150A to perform an averaging process. As shown in Fig. 8, this averaging process is used to derive an average value corresponding to the results of respective FFT operations, from which an average value of gains for respective frequency components are derived. With such an averaging process, variations in the results of the FFT operation may be reduced depending upon the road surface.

However, the above-mentioned averaging process may be problematic in that the gains of the resonance frequencies are not always the maximum peaks in the upward, downward, forward and backward directions due to noise or so forth. Therefore, in the present embodiment, subsequent to the foregoing averaging process, a moving averaging process set out below is performed at step 160A.

This moving averaging process is performed by deriving a gain $Y_n$ of a nth frequency through the following equation:

$$Y_n = (Y_{n+1} + Y_{n-1})/2 \quad (1)$$

Namely, in the moving averaging process, the gain $Y_n$ of the nth frequency is derived as an average value of the gain of the (n+1)th frequency which was the result of operation in the preceding cycle, designated as $Y_{n+1}$, and the gain of the (n-1)th frequency which was previously derived as $Y_{n-1}$. Thus, the results of the FFT operation are a smoothly varying waveform. The results of operation derived through this moving averaging is shown in Fig. 9.

It should be noted that the wave shaping process is not specified to the foregoing moving averaging process, and that it can employ a low-pass filter for the results of the FFT operation. Alternatively, it is possible to perfom a differentiating operation to obtain wheel speed v in advance of step 130A, and to subsequently perform the FFT operation to obtain the result of the differentiating operation.

Next, at step 170A, resonance frequency $f_k$ of the unsprung mass in the forward and backward direction is derived on the basis of the smoothed results of the FFT operation. Then, at step 180A, a lowering difference ($f_0$ - $f_k$) is derived for comparison with a predetermined difference $\Delta f$. The predetermined difference, $\Delta f$, is set to an allowable lowest value (e.g. 1.4 kg/m$^2$) of the tire air pressure. Note that it is set both with reference to the initial frequency $f_0$ and corresponding to the normal tire air pressure. Accordingly, if judgement is made at step 180A that the lowering difference ($f_0$ - $f_k$) is equal to, or greater than, the predetermined difference $\Delta f$, the tire air pressure is regarded to be below the allowable lowest value. Thus, the process is advanced to step 190A to display an alarm for the driver on display portion 5.

It should be noted that although in the foregoing embodiment, an example is illustrated to detect decreases in the tire air pressure on the basis of resonance frequency in the forward and backward directions, it is also possible to detect the tire air pressure on the basis of the resonance frequency in the upward and downward directions, or on the basis of the resonance frequencies in the forward, backward, upward and downward directions.

Next, explanation will be given for the second embodiment of the present invention.

While the above-mentioned first embodiment detects the tire air pressure when it is below the allowable lowest value, the second embodiment detects the tire air pressure per se.

Therefore, in the second embodiment, a map is stored for each tire which is indicative of a relationship between the tire air pressure and the resonance frequency, as shown in Fig. 11. This map is used to derive the resonance frequency $f_k$ in the same manner as in the first embodiment, and the tire air pressure per se is directly predicted from the derived resonance frequency, $f_k$. In the second embodiment, only part of the processes of ECU 4 are differentiated from those in the first embodiment, and the construction is common to the first embodiment. Therefore, the explanation for the construction is neglected and only different portions in the process of ECU 4 will be explained.

Namely, in the second embodiment, step 180A of the flowchart of the first embodiment (shown in Fig. 10) is modified to the process of Fig. 12.

In Fig. 12, at step 182B, the tire air pressure, P, is derived in accordance with the preliminarily set map (Fig. 11) by using resonance frequency $f_k$ of the unsprung mass of the vehichle in the forward and backward directions (derived in step 170A). Then, at step 184B, the derived tire air pressure is compared with an allowable minimum value, $P_0$, of the preliminarily set tire air pressure. When the derived air pressure P is below, or equal to, the allowable minimum value $P_0$, the process is advanced to step 190A.

It should be noted that, in this second embodiment, the tire air pressure, P, derived at step 182B with respect to each tire may be directly displayed on display portion 5.

Next, explanation will be given for the third embodiment of the invention.

While the foregoing first embodiment employs the wheel speed sensor as a sensor for outputting a signal containing the vibration frequency component of the tire, the third embodiment employs an acceleration sensor for outputting a signal containing the vibrational frequency component of the tire. This sensor, 11, is arranged on an unsprung mass member (e.g. lower arm) of the vehicle (shown in Fig. 13). It is used as a sensor

As already mentioned, it is possible to derive the resonance frequencies in the upward, downward, forward and backward directions by detecting the acceleration of the unsprung mass of the vehicle, and by performing an FFT operation the results. In addition, since the detection signal can be a direct object for the FFT operation, it provides an advantage in that the operational processes of ECU 4 are simplified in comparison with that of the first embodiment.

Accordingly in the third embodiment, the process shown in Fig. 14 is executed in lieu of step 100A of the flowchart in Fig. 10. Namely, as shown in Fig. 14, at stap 102, an acceleration signal output, from acceleration sensor 11, is read in. Then, with respect to that acceleration signal, signal processing similar to the above-mentioned first embodiment is performed.

Next, the fourth embodiment of the present invention will be explained.

While the foregoing first embodiment employs the wheel speed sensor as a sensor for outputting the signal containing the tire vibration frequency component, the fourth embodiment employs vehicle height sensor 20 as a sensor for detecting a relative displacement between a vehicle body (sprung mass member) and the tire (unsprung mass member). Thus, this sensor may be used to output the tire vibration frequency component in the fourth embodiment.

When vehicle height sensor 20 is employed (shown in Fig. 15), a differentiating process is performed twice after an appropriate low-pass filtering process is performed on the detection signal of vehicle height sensor 20. Thus, the detection signal of the vehicle height sensor becomes a signal representative of a relative acceleration between the vehicle body and the tire. Then, by performing the processes of step 110A and subsequent steps in the flowchart of Fig. 10, the tire air pressure can be detected with respect to this signal and similarly to the foregoing first embodiment.

Next, the fifth embodiment of the present invention will be explained.

A load sensor 30 for detecting a load between the vehicle body (sprung mass member) and the tire (unsprung mass member) can be employed, and used, as the sensor for outputting the signal containing the tire vibration frequency.

In Fig. 16, load sensor 30 comprises a piezoelectric element which generates a charge corresponding to the load and which is disposed within a piston rod of a shock absorber. Load sensor 30 outputs a signal corresponding to a damping force of the shock absorber. With respect to this signal, the tire air pressure can be detected by performing signal processing similar to the foregoing third embodiment.

Next, explanation will be given for the sixth embodiment.

As a result of experiments made by the inventors, it has been found that the signal which contains the actual tire vibration frequency component, contains a noise signal. This noise signal corresponds to unbalances (caused by uneven wearing, standing wave phenomenon and so forth) of the tire which are an integral multiple of frequency that is the number of rotations of the wheel during a unit period in addition to the resonance frequency of the unsprung mass in the upward and downward or forward and backward directions. Accordingly, in the above-mentioned embodiments, reliability of the resonance frequency of the unsprung mass is low in the upward and downward or forward and backward directions, which are extracted from the signal containing the tire vibration frequency component. It is therefore hard to say that satisfactory detection accuracy will always be provided. Therefore, further improvements in the detection accuracy are desired.

The sixth to fifteenth embodiments will achieve the improvement of the detection accuracy in view of the problem set forth above.

In the sixth embodiment, the processes of Fig. 17 are performed. At first, steps 1000F to 1200F are the same as steps 100A to 120A of Fig. 10.

However, at step 1300F, wheel speed variation ratio A is derived on the basis of the variation magnitude $\Delta v_2$ of wheel speed v within the predetermined period $t_{02}$ ($t_{02} >> \Delta T$), as shown in Fig. 18.

$$A = \Delta v_2 / t_{02} \quad (2)$$

When the wheel speed variation ratio A is derived, it is compared with predetermined value $A_0$ at step 1400F. The processes in steps 1300F and 1400F are performed for determining whether variation $\Delta v_2$ of wheel speed v within the predetermined period $t_{02}$ ($t_{02} >> \Delta T$) permits detection of the tire air pressure by the detecting method of the present embodiment. Namely, when the variation $\Delta v_2$ of the wheel speed v is small, the peaks (herein after referred to as "tire rotation degree components") appear at the degree (integral multiple) of the frequency that is the number of wheel rotations within the unit period, as shown in Fig. 19. When the tire rotation degree component is greater than the resonance frequency component, there is a possibility of making mistakes concerning the resonance frequency component. Therefore, unless wheel speed v varies above a certain magnitude within the predetermined period, the tire rotation degree component cannot be removed.

If judgement is made that wheel speed variation ratio A is equal to, or greater than, predetermined value $A_0$ at step 1400F, the process is advanced to step 1500A. Alternatively, when the judgement is made that the wheel speed variation ratio A is smaller than predetermined value $A_0$, the process returns to step 1000F. Then, at steps 1500F ~ 1900F, processes similar to those in steps 130A ~ 170A are performed.

At step 2000F, the resonance frequency $f_k$ is compared with both an upper limit value, $f_H$, of the resonance frequency of the unsprung mass and a lower limit value, $f_L$, of the resonance frequency of the unsprung mass. Upper limit value $f_H$ and lower limit value $f_L$ are set corresponding to allowable upper and lower limit values of the tire air pressure (e. g. upper limit value is 2.5 $kg/cm^2$ and the lower limit value is 1.4 $kg/cm^2$). When resonance frequency $f_k$ is judged as equal to or greater than the upper limit value of the resonance frequency, the tire air pressure is regarded to be in excess of the allowable upper value. Alternatively, when the resonance frequency $f_k$ is judged to be equal to, or smaller than, the lower limit value of the resonance frequency of the unsprung mass, the tire air pressure is regarded to be lower than the allowable lower limit value. In either case, the process is advanced to step 2100F to display alarm to the driver via display portion 5.

As set forth above, in the sixth embodiment, since the FFT operation for deriving the tire vibrational frequency component is performed only when the wheel speed variation ratio A is equal to, or greater than, predetermined value $A_0$, the tire rotation degree component which appears while the speed variation ratio A is small, can be eliminated.

Next, explanation will be given for the seventh embodiment.

While resonance frequency $f_k$ is derived only when the wheel speed variation ratio A is equal to, or greater than, predetermined value $A_0$, resonance frequency $f_k$ is derived when variation magnitude $\Delta v_3$ is different from any of the previously derived variation magnitudes. Resonance frequency f is then performed through an FFT operation as shown in Fig. 20 in the seventh embodiment.

The processes of steps 1300F and 1400F in the flowchart of the sixth embodiment illustrated in Fig. 17) are modified as shown in Fig. 21.

In Fig. 21, at step 1310G, the variation magnitude $\Delta v_3$ of the wheel speed v within unit period $t_{03}$ is derived. At step 1311G, the variation magnitude $\Delta v_{3(N)}$ of wheel speed v, which is derived as the Nth wheel speed of step 1310G, is compared to variation magnitudes $v_3(1)$ - $v_3(N-1)$ of wheel speed v which are derived in the 1st ~ (N-1)th cycles of step 1310G. If it is not equal to any of them, the process is advanced to step 1500A to perform the FFT operation. However, if it is equal to any of them, the process is returned to step 1000F. Therefore, at step 1500A of this embodiment the tire vibration frequency component is subject to the FFT operation and has wheel speed variation magnitudes $\Delta v_3$ which are all different from each other. Thus, the peak appearing in the tire vibration frequency component has the resonance frequency component of the unsprung mass in the forward and backward or upward and downward directions which appear in the same frequency. The tire rotational degree components appearing at the different frequencies are removed by the FFT operation performed at step 1500F and the subsequent steps.

It should be noted that, although the FFT operation is performed when the variation magnitude $\Delta v_3(N)$ is different from any variation magnitudes $\Delta v_3(1)$ - $\Delta v_{3(n-1)}$ derived up to the Nth operation in the seventh embodiment, it is possible to perform the FFT operation only when an average wheel speed, $v_{C(N)}$, during the predetermined period $t_{03}$ derived at the Nth operation is different from any average wheel speeds, $v_{c(1)} \sim v_{c(N-1)}$, derived up to the Nth operation.

Next, eighth embodiment of the invention will be explained.

In the foregoing sixth and seventh embodiments, the FFT operation is performed after processing for removal of the tire rotation degree component. In the present embodiment, the tire rotation degree component is removed after the FFT operation.

The gain of the tire vibration frequency component as well as the gain of the tire rotation degree component are affected by the road surface condition. Namely, as shown in Fig. 22, when the vehicle travels on a rough road, such as unpaved road, the gain of the tire vibration frequency component becomes large, and the gain of the tire rotation degree component also becomes large. Therefore, in the present embodiment, among the tire vibration frequency components derived through the FFT operation, the averaging process is performed only when the maximum gain $v_a$ in predetermined frequency band $f_b$ falls within predetermined range $v_{MAX}$ - $v_{MIN}$. Therefore, the gains resulting from the FFT operation, which are used for performing the averaging process, are consistant, and the influence of the tire rotation degree component after the averaging process becomes small.

Namely, in the eighth embodiment, processes 1300F ~ 1600F of the flowchart of the sixth embodiment of Fig. 17 are modified to the processes shown in Fig. 23.

In Fig. 23, after performing the FFT operation at step 1320H, judgement is made whether the maximum gain $v_a$, which is among the tire vibration frequency components derived through the FFT operation, falls between upper limit value $v_{MAX}$ and lower limit value $v_{MIN}$, at step 1321H. If the answer is negative, the process returns to step 1000F. If the answer is positive, the process is advanced to step 1322H. At step 1322H, the number of times, $N_A$, where the positive answer is obtained, namely the number of results of the FFT operation having the maximum gain $v_a$ falling within the range between upper limit value $v_{MAX}$ and lower limit value $v_{MIN}$, is incremented. This counter, $N_A$, counts only the tire vibrational frequency components resulting from the FFT operation which have the maximum gain $v_a$ between upper limit value $v_{MAX}$ and lower limit value $v_{MIN}$, Then, at step 1323H, judgement is made whether the number $N_A$ of occurrences of the positive answer reaches the predetermined value $N_B$, or not. A negative answer results in returning the process to step 1000. However, when the answer is positive, the process is advanced to step 1700F. Thus, the data, during traveling through the rough road, is removed so that the influence of the tire rotation degree component which has large peaks can be suppressed.

Therefore, the eighth embodiment removes the tire vibration frequency component derived from the FFT operation, unless the maximum gain $V_a$ from within predetermined frequency band $f_b$ both falls within the range between upper limit value $v_{MAX}$ and lower limit value $v_{MIN}$, and performs the averaging process of only those having maximum gain $v_a$ between upper limit value $v_{MAX}$ and lower limit value $V_{MIN}$.

Next, the ninth embodiment of the present invention will be explained.

The present embodiment features removal of the tire rotation degree components by eliminating excessively large (or small) data through multiplying a rate, $K_i$, of the maximum gain $v_a$ which is within the predetermined frequency band $f_b$ and the predetermined gain $v_0$, to the tire vibration frequency components resulting from the FFT operation.

Namely, in the ninth embodiment, steps 1300F ~ 1500F of the flowchart of the sixth embodiment of Fig. 17 are modified with the process as shown in Fig. 25.

In Fig. 25, the FFT operation is performed at step 1330I. Next, at step 1331I, a coefficient, $K_f$ is obtained as the rate of the maximum value between gain $v_a$ which is within predetermined frequency band $f_b$, and predetermined gain $v_0$. It is therefore obtained on the basis of the FFT operation result at step 1330I.

$$K_i = v_0/v_a \qquad (3)$$

Then, at step 1332I, coefficient $K_i$ is multiplied to the tire vibration frequency component, resulting from the FFT operation, to correct the FFT operation results. Once correction is completed, the number of cycles of the FFT operations is counted at step 1333I, after which the process is advanced to step 1600F. Thus, all the maximum gains $v_a$ become $v_0$, and no excessively large (or small) data will be present.

Next, explanation will be given for the tenth embodiment of the invention.

The foregoing eighth and ninth embodiments reduce the influence of the tire rotation degree component by utilizing the statistical nature of the averaging process after the FFT operation. The tenth embodiment features that the tire rotation degree component from the result of the FFT operation. Namely, the tenth embodiment utilizes the fact that the tire rotation degree component is necessarily present within a frequency range, and that frequency range must correspond to the variation range of the wheel speed, or an integral multiple thereof.

For example, as shown in Fig. 26, assuming that the wheel speed variation range within a certain period $T_0$ falls within a range of a(min) ~ b(max) in Fig. 26(a). Deriving frequencies A and B corresponding to wig. 27heel speeds a and b (in Fig. 26(b)), requires connecting between values p and q, because resultant values of the FFT operation may correspond to frequencies A and B with a straight or curved line. Thus, the portion between p and q, illustrated by the broken line in Fig. 26(c), is eliminated. Such a series of process is hereinafter referred to as "interpolation".

Therefore, in the tenth embodiment, steps 1300F ~ 1500F of the flowchart for the sixth embodiment (shown in Fig. 17) are modified with the processes shown in Fig. 27.

In Fig. 27, at step 1340J, minimum value a and maximum value b of variation of the wheel speed within the certain period $T_0$ are derived. Then, at step 1341J frequencies A and B, which correspond to foregoing minimum value a and maximum value b, are derived. At step 1342J, the FFT operation is performed. Since the tire rotation degree components are present within the frequency range of A ~ B, the interpolation is performed by connecting the resultant values q and p of the FFT operation at frequencies A and B with a straight line at step 1343J. Thus, the gain of the tire rotation degree components present in the frequency range of A ~ B can be made smaller. Then, the number of cycles of the FFT operation is counted at step 1344, and the process is advanced to step 1600F.

Explanation will now be given for the eleventh embodiment of the present invention.

The eleventh embodiment features that the interpolation of the above-mentioned tenth embodiment is performed with higher precision. Namely, in the tenth embodiment, a distribution of wheel speed frequency $A_i$, which is between the wheel speed range between maximum value b and minimum value a and varying within period $T_0$, is derived as shown in Fig. 28(a) and (b). The distribution of wheel speed frequency $A_f$ is derived by sorting speeds within the wheel speed range of a ~ b from small to large (or from large to small). The number of data points taken from equivalent wheel speeds are then counted. Here, as discussed with respect to the tenth embodiment, the tire rotation degree component, derived by the FFT operation, is present within the frequency range between A and B which corresponds to the wheel speed variations between a ~ b. The distribution of the gain of the tire rotation degree component has a similar relationship to the frequency distribution of the wheel speed. Namely, since the tire rotation degree component is apparent from the number of rotations of the wheel within a unit period, the wheel speed, which is the largest frequency distribution, can be regarded as the number of rotations of the wheel within the unit period.

Then, coefficient $K_i$ (which is the coefficient for converting the wheel speed frequency $A_f$ Into the FFT operated value $v_i$ at the frequency corresponding to the wheel speed) is multiplied with wheel speed frequency Ai to predict the distribution of the gains of the tire rotation degree components (see Fig. 29 and 30). Subsequently, as shown in Fig. 31, by subtracting the predicted distribution of gains of the tire rotation degree components from the result of the FFT operation within the frequency range of A ~ B, the influence of the tire rotation degree components are eliminated. Consequently, interpolation between the resultant values q and p of the FFT operation within the frequency range of A ~ B can be performed.

The foregoing process is illustrated in a flowchart in Fig. 32. In Fig. 32, at step 1350K, maximum wheel speed b and minimum wheel speed a from within the period $T_0$ are derived and the results are stored in ECU. Then, at step 1351K, the stored resultant wheel speeds are sorted from small to large (or from large to small), and the number of equivalent wheel speeds are counted to attain the wheel speed frequency $A_i$.

Then, at step 1352K, the frequency corresponding to the wheel speed is derived. At step 1353K, the gains (υi) of the tire rotation degree components are derived from the distribution of wheel speed frequency $A_i$. This is done by multiplying coefficient $K_f$ to the distribution of wheel speed frequency $A_i$ which was obtained at step 1351, previously. Next, at step 1354K, the FFT operation is performed. At step 1355K, the gains of the tire rotation degree component, derived at step 1353K, are subtracted from the resultant value ($v_i$) of the FFT operation from within frequency range A ~ B to derive a corrected value ($v_f'$) ) of the FFT operation.

The resultant values of the FFT operation, from which the tire rotation degree components are removed, are as illustrated in Fig. 31. At step 1356K, the number of FFT operation cycles are counted. Then, the process is advanced to step 1600F.

Next, the twelfth embodiment of the present invention will be explained.

The foregoing eleventh embodiment removes the tire rotation degree component by accurately subtracting the gains of the tire rotation degree component from the result of the FFT operation on the basis of the configuration of the frequency distribution of the wheel speed. The twelfth embodiment features that approximating the frequency distribution of the wheel speed with a convenient configuration, and subtracting the approximated configuration from the result of the FFT operation.

As shown in Fig. 33(a) and (b), the manner used to derive the frequency distribution as the wheel speed from a to b is the same as that of the eleventh embodiment. Here, most frequency wheel speed is assumed as c, and the frequency distribution is approximated by triangle abc' as shown in Fig. 33(c). Then, as shown in Fig. 34 and 35, by multiplying predetermined coefficient $K_f$ with the triangle abc', predicted gains (υi) of the tire rotation degree components are derived. By subtracting the derived predicted gains from the resultant values of the FFT operation ($v_f$), the tire rotation degree components are removed.

It should be noted that the flowchart is neglected because it is substantially the same as that of the eleventh embodiment.

On the other hand, in the twelfth embodiment, by employing the highest frequency wheel speed c, an average value of the wheel speed variation, a ~ b, may be used without removing the tire rotation degree component. Also, instead of approximating the wheel speed frequency distribution with triangle abc', statistic distributions, such as normal distribution, Gaussian distribution and so forth, may be employed.

Next, the thirteenth embodiment will be explained with reference to Fig. 36 and 37. Steps 101M - 104M are the same as those in the first embodiment. At subsequent step 105M, vehicle speed V is derived on the basis of wheel speed v used for the FFT operation process. The vehicle speed, V, derived after the initiation of process, is stored in the RAM as the vehicle speed $V_0$. Vehicle speed V is derived to provide a center speed component of the wheel speed v in addition to the tire vibration frequency component. At subsequent step 106M, determination is made whether flag F is set to "1", or not, where flag F is reset to "0" in response to turning OFF of an ignition switch. Therefore, in the first process after turning ON the ignition switch, the negative judgement is made in step 106M to advance the process to step 107M.

At step 107M, vehicle speed $V_0$, initially derived immediately after starting, is subject to a frequency conversion to obtain a primary frequency. This primary frequency corresponds to the number of wheel rotations within a period and is used to obtain frequencies corresponding to degrees up to i by integral multiplying the primary frequency. At subsequent step 108M, gains $JV_1 \sim JV_i$ of the tire rotation degree components are read into the RAM on the basis of the results of FFT operation. Then, at step 109M, flag F is set to "1" and the process is returned to step 101M. Flag F is set to "1" in order to limit execution of processes 107M and 108M to only once, immediately after starting.

In the process of the second and subsequent cycles, the process is directly advanced to step 110M, since flag F is set to "1". Thus, a vehicle speed rate ($V/V_0$), which is relative to the vehicle speed $V_0$, is derived at step 107M. At step 111M, gain coefficients $K_1$ ~ $K_i$ are derived by reading gain coefficients, in terms of the vehicle speed rate ($V/V_0$), from a map shown in Fig. 38 which was preliminarily stored in ECU 4. At step 112M, gains are derived on the basis of both the determined gain coefficients $K_1 \sim K_i$ and the gains tire rotation degree components $JV_1 \sim JV_i$ read in step 108M. Then, T step 113M, gains $dV_1 \sim dV_i$ are subtracted from the results of the FFT operation to eliminate the influence of the tire rotation degree components. The processes at, and after, step 114M are similar to those in the foregoing embodiments.

The above-mentioned embodiment can shorten the operation process period. It does so by deriving the gains of the degree component of the wheel rotation speed in units of time from a map which relates the gain of the degree component of the wheel rotation speed in units of period (T) initially derived at the beginning of the process, the vehicle speed rate derived in the subsequent process, and the initially derived vehicle speed $V_0$.

The fourteenth embodiment will be explained with reference to the flowchart of Fig. 39.

The explanation for processes at and before, step 205N are neglected since they are similar to those in steps 101M to 105M of the thirteenth embodiment. At step 206N, derived vehicle speed V is converted by frequency conversion to derive the primary frequency of the tire rotation degree component. This is used to obtain frequencies which correspond to the degrees by integral multiplication up to i. At step 207N, the gains at respective degrees $dV_1 \sim dV_i$ corresponding to vehicle speed V from the map (shown in Fig. 40) preliminarily stored in ECU 4 are read. At step 208M, the gains $dV_1$ to $dV_i$ of the respective degrees of the gains are subtracted from the results of the FFT operation so as to eliminate the influence of the tire rotation degree component. Since the processes at, and after, step 209N are similar to the processes at steps 114M ~ 120M of the thirteenth embodiment, the explanation therefor is neglected.

The fifteenth embodiment will be explained with reference to the flowchart shown in Fig. 41.

As in Fig. 41, vehicle speed V, derived from the wheel speed, is frequency converted so that the frequency range of the tire rotation degree component is derived through steps 301o to 303o. Based on the result of this conversion, a band frequency, ($f_a \sim f_{b'}$) of band-pass filter (B.P.F.) $F_1$, is used to set multiple band-pass filters, $F_1 \sim F_i$, at step 304o. The band frequency of band-pass filters $F_2 \sim F_i$ are respectively set as integral multiples of band-pass frequencies $f_a \sim f_b$. Then, at step 305o, a waveform in a time sequence, not including the tire rotation degree components, can be obtained by subtracting the original waveform after passing through respective band-pass filters $F_1 \sim F_i$. Using this waveform, the FFT operational process and subsequent averaging processes are explained with respect to the thirteenth and the fourteenth embodiments to derive the resonance frequency $f_K$ for determining decreases in the tire air pressure.

It should be noted that the frequency of the tire rotation degree component may be directly removed by using the band-pass filter. Also, it may be possible to make FFT analysis for the waveform after passing through respective band-pass filters, and to subtract the results of the FFT analysis from the original waveform.

Here, in the foregoing embodiment, since the frequency analysis (FFT operation) is performed for extracting the resonance frequency, a large amount of summing and multiplying operations must be performed. This causes prolonged operation periods. Therefore, the sixteenth to nineteenth embodiments modify the FFT operation periods depending upon necessity to enhance response characteristics and detection accuracy in the tire air pressure detection.

The foregoing FFT operation reads a predetermined number of data in the RAM of ECU 4 and repeats summing and multiplying operations for extracting the resonance frequency. In case the resonance frequency to be derived is known, as in the present invention, a frequency range, $w_f$, for performing the operation can be preliminarily set. Accordingly, when more data is read into the RAM of ECU 4, division of the frequency into smaller ranges may occur (number of division will be referred to as $n_f$). Thus, it is possible to raise frequency resolution (= $w_f/n_f$), thereby improving the detecting precision.

However, more data to be read into RAM requires a longer period for obtaining one result of the FFT operation (hereinafter referred to as "FFT data"), thereby causing a heavier load on ECU 4. Further, the averaging process, set out later for eliminating the influence of the road noise, requires a large number of FFT data to raise the frequency resolution. When the frequency resolution is low, the FFT operation per se exhibits an averaging process like effect and the number of the FFT data can be smaller.

The sixteenth to nineteenth embodiments utilize the foregoing nature of the FFT operation, so that the number of averaging process is reduced while the tire air pressure is normal. Thus, the difference between the derived resonance frequency and the reference value is large to require less detection accuracy and to permit quicker response to relatively swift variation of the tire air pressure. The response characteristics are therefore improved by shortening the operation period of the FFT data. On the other hand, when the tire air pressure is close to the reference value, the number of FFT data to be read into RAM is increased to a rise the frequency resolution, and the number of averaging processes is also increased to raise the detection accuracy.

The sixteenth embodiment will be explained with reference to Fig. 42. Upon starting the process in response to turning ON the ignition switch, a specification of the FFT operation is read in at step 101P. Here, the specification of the operation to be read is for lower detection accuracy. At subsequent steps 102P ~ 105P, processes similar to those in the above-mentioned embodiments are performed and will not be discussed.

At step 106P, the number N of the FFT operation at Step 105P is compared to a predetermined number, SUM. If the number N of operation cycles does not reach the predetermined number SUM, then steps 102P ~ 105P are again performed. On the other hand, when the number N of the operation cycles reaches the predetermined number SUM, the process is advanced to step 107P to perform the averaging process, moving averaging process at step 108P, and derivation of the resonance frequency $f_K$ at step 109P.

Then, as shown in Fig. 43, at step 110P, a difference between the derived resonance frequency $f_K$ and a preset air pressure lowering reference value (hereinafter referred as reference value), $f_L$, is derived. At step 111P, a determination is made whether the difference is smaller than, or equal to, preset value $f_a$. Namely, a determination is made whether the tire air pressure has lowered to become close to the reference value $f_L$, thus causing the detection accuracy is to be raised. When the answer at step 111P is negative, the process jumps to step 115P to determine whether resonance frequency $f_K$ is lower than, or equal to, reference value $f_L$. If not lower than, or equal to, the reference value $f_L$, the process is returned to step 102P to repeat the FFT operation. However, if resonance frequency $f_K$ is lower than, or equal to, reference value $f_L$, the process is advance to step 116 to generate an alarm for lowering of the air pressure of the tire as the object for detection.

On the other hand, when the answer at step 111P is positive, since it implies that the tire air pressure is close to the reference value $f_L$, it becomes necessary to increase the number of the sample data, SMP, and the number of the averaging process cycles, SUM, for higher detection accuracy. Flag F confirmed at step 112P is adapted to be reset in response to turning OFF of the ignition switch. At the judgement of the flag after positive judgement at step 111P, the answer of step 112P becomes negative to advance the process to step 113P and to update the number of the sample data, SMP, to $m_L$ ($m_L > m_S$), while setting the number of the averaging process cycles, SUM, to $N_L$ ($N_L > N_S$). Then, at step 114P, flag F is set to "1". At step 115P, if the result, $f_K$, of the most recent resonance frequency calculation is greater than reference value $f_L$, the calculation of the resonance frequency $f_K$ is updated with the specification of the FFT operation through the processes of step 102P and subsequent steps. Otherwise it advances to step 116P as described above.

After starting the process, if the tire air pressure gradually approaches the reference value $f_L$, and the specification of the FFT operation is updated, the air pressure will never have been supplied to the tire until the vehicle Stops. Therefore, in order to avoid redundant processing of step 113P, the setting of F to "1" is confirmed when updating the specification of the FFT operation, and the process of step 115P is performed.

The above-mentioned sixteenth embodiment employs two levels of the specification for the FFT operation. Thus, when the tire air pressure is lowered to approach reference value $f_L$, the specification of the FFT operation is switched to expand the signal extraction period increasing both the number of sample data, SMP, to be sampled, and the number of averaging process cycles, SUM, to raise the frequency resolution and corresponding tire air pressure detecting precision, thereby avoiding erroneous detection for higher reliability. On the other hand, in the normal condition, where the tire air pressure does not approach reference value $f_L$, the tire air pressure detecting process is performed in a shorter period under the specification of the FFT operation for lower frequency resolution to provide higher response characteristics.

The seventeenth embodiment will be explained with reference to the flowcharts of Fig. 44 and 45, and Fig. 46 and 47. Fig. 46 shows a map of the number of sample data (SMP) relative to the difference $\Delta f$ of the resonance frequency $f_K$ is derived on the basis of the result of the FFT operation and reference value $f_L$. Fig. 47 shows a map of the averaging process circuit (SUM) relative to the foregoing $\Delta f$. Both maps are preliminarily stored in ECU 4.

When the signal processing of ECU 4 is initiated in response to turning ON of the ignition switch, the specification of the FFT operation is read out at step 201Q. Here, the specification of the FFT operation with the lowest detecting precision (SMP shown in Fig. 46 = DAT4 and SUM shown in Fig. 47 = $N_1$) is read cut. Subsequently, similarly to the first embodiment, the calculation of the wheel speed v, discrimination of the road condition, judgment of the road surface length, computation of the FFT operation, integration of the number of FFT operation, determination of the number of cycles, averaging process, moving averaging process, calculation of the resonance frequency $f_K$, and calculation of $\Delta f$ are performed through steps 202Q ~ 210Q. At step 211Q, the SMP corresponding to $\Delta f$, which was derived through calculation at step 210Q, is obtained from the map of Fig. 46. The SUM is similarly obtained from the map of Fig. 47, and the specification of the FFT operation is updated.

Then, at step 212Q, resonance frequency $f_K$ and reference value $f_L$ are compared. When $f_K \leq f_L$, the process is advanced to step 213Q for generating an alarm indicating a decrease in the air pressure of the tire as the object for detection. However, if $f_K > f_L$, the process returns to step 202Q to derive resonance frequency $f_K$ under the updated specification of the FFT operation, and to perform the tire air pressure detection.

The seventeenth embodiment set forth above expands the signal extraction period corresponding to a decreasing of difference $\Delta f$ between resonance frequency $f_K$ and reference value $f_L$. Thus, the SMP (number of data) and the SUM (number of the FFT data) are increased. Therefore, the levels of specification of the FFT operation which are to be set in ECU 4 become multiple, and the tire air pressure detecting precision can be further improved.

The seventeenth embodiment will be explained with reference to the flowcharts of Figs. 48 and 49.

When ECU 4 initiates signal processing in response to turning ON the ignition switch, the initial value of the specification of the FFT operation is read out at step 301R. Subsequently, after calculating wheel speed v at step 302R, the FFT operation and integration of the number of operation cycles are performed at step 303R. Thus, at step 304R, discrimination of vehicle speed V is performed, in which vehicle speed V and predetermined value $V_H$ are compared to determine which is larger and which is smaller. If $V \geq V_H$, the process is advanced to step 305R where it is determined if flag F is set to "1", where flag F is adapted to be reset in response to turning OFF of the ignition switch. Accordingly, the process is advanced to step 306R only at its first judgement.

At step 306R, the period T, in which vehicle speed V reaches set value $V_H$, and an operation period $t \times m_S \times N_S$ (here, t is a sampling period, $m_S$ is number of data, and $N_S$ is the number of FFT data) for performing operation with the specification of the FFT operation read before starting the process, are compared to see which is larger. If the period, T, is less than, or equal to, the operational period, the process is advanced to step 307R. This indicates that the period, in which the vehicle speed V reaches the set value $V_H$, is shorter than the FFT operation period. Normally, such cases frequently appear during an acceleration state before entry into high speed traveling. Therefore, if the tire air pressure is low, it is required to speed up the FFT operation period as fast as possible to generate an alarm for low tire air pressure.

Therefore, at step 307R, a possible number $N_S'$, (truncated at radix point) corresponding to maximum number of cycles of the FFT operation within a period T, is derived. At step 308R, the number $N_S'$ is set as the number of the FFT data (SUM). Subsequently, at step 309R, flag F is set to "1". Then, the averaging process is performed at step 310R, and the moving averaging process is performed at step 311R. At step 312R, with the foregoing number $N_S'$ of the averaging process cycles, resonance frequency $f_K$ is calculated. On the basis of resonance frequency $f_K$, determination of decreased tire air pressure is performed at step 313R. If $f_K \leq f_L$, displaying of alarm indicating decreased tire air pressure is performed at step 314R.

On the other hand, when the answers at steps 304R and 306R are negative or the answer at step 305R is positive, the process is advanced to step 315R, where the number of FFT operation cycles (N) are compared to the number of FFT data (SUM). If $N \geq SUM$, the process is advanced to the averaging process of step 310R. However, if $N < SUM$ or $f_K > f_i$, the tire air pressure detecting processes at step 302R and subsequent steps are performed.

As set forth above, the eighteenth embodiment raises the response speed for the air pressure detection by shortening the operation time to quickly engage the alarm when the tire air pressure is decreased, thereby enhancing safety when the tire air pressure is low in the acceleration state for entering into a highway.

It should be noted that while the present embodiment varies the specification of the FFT operation corresponding to the vehicle speed V, it is possible to vary the specification according to the vehicle speed variation rate dV/dT.

The nineteenth embodiment will be explained with reference to the flowchart of Fig. 50 and Figs. 51, 52 and 53. Fig. 51 shows a waveform in a time sequence of vehicle speed v which is calculated by ECU 4. It should be noted that in the waveform, a low frequency signal component of the wheel speed signal is cut by a filter. As shown in Fig. 51(a) and (b), on a relatively smooth road, the variation magnitude $\Delta v$ of the wheel speed is small, and on a rough road, the variation magnitude becomes large. The resonance frequency $f_K$, employed as a detection parameter for the tire air pressure is adapted to detect the resonation phenomenon of the unsprung mass. Because resonation appears with a large magnitude on rough roads, the resonance frequency $f_K$ can be easily detected to permit the SMP (number of data) and the SNM (number of the FFT data) as the specification of the FFT operation. Conversely, on smooth roads, SMP and SNM are required to be increased for higher detection precision.

The present embodiment has been worked out in view of the point set forth above.

Fig. 52 shows a map of SMP relative to variation magnitude $\Delta v$ of the wheel speed, and Fig. 53 shows a map of the SUM relative to the variation magnitude $\Delta v$ of the wheel speed. Both maps are stored in ECU 4.

Upon starting the signal processing by the ECU 4 in response to turning ON of the ignition switch, vehicle speed V is calculated at step 402S, and variation magnitude $\Delta V$ of the wheel speed is derived at step 403S. Discrimination of the road surface condition is performed for discriminating between the rough road and the smooth road with preliminarily set wheel speed variation magnitudes $\Delta v_1$ and $\Delta v_2$. Then, at step 403S, the SMP corresponding to the vehicle speed variation magnitude $\Delta v$ is derived from the map of Fig. 52, the SUM is derived from the map of Fig. 53, and the specification of the FFT operation is updated. The FFT operation, integration process of the number of operation cycles at step 404S, the subsequent judgement of the number of operation cycles, the averaging process, the moving averaging process, the calculation of resonance frequency $f_K$, the calculation of $\Delta f$, the comparison between resonance frequency $f_K$ and the reference value $f_L$, and the detection process of the tire air pressure are similar to those of the seventeenth embodiment, and thus the flowchart of the corresponding portion, and the detailed description, therefor are neglected.

It should be noted that multiple wheel speed variation magnitudes $\Delta v_1$ and $\Delta v_2$, which are used for discrimination between the rough road and the smooth road, are simultaneously set depending upon the road surface condition.

The above-mentioned embodiment varies the specification of the FFT operation by modifying the signal extraction period with discrimination of the road surface condition. It does so on the basis of maximum and minimum wheel speed variations, and it permits detection of decreased tire air pressure over short periods while on non-paved roads or off-road traveling.

Next, explanation will be given for the twentieth embodiment. In Fig. 54, steps 100T ~ 107T are similar to the foregoing embodiment and will therefore be neglected. When the process at step 170T is executed, the initially calculated resonance frequency $f_K$ is stored as an initial resonance frequency $f_S$.

Then, through steps 180T ~ 240T, processes are performed for correcting unsprung mass resonance frequency upper limit value $f_H$ and unsprung mass resonance frequency lower limit value $f_L$ corresponding to the allowable upper and lower limit values (for instance, upper limit value is 2.5 $kg/cm^2$ and lower limit value is 1.4 $kg/cm^2$) of the tire air pressure while taking into consideration heating of the tire which is generated during high speed running for a long period of time. Namely, when the tire is heated, the air in the tire is expanded to raise the tire air pressure, despits the same amount of air contained in the tire. Thus, it is impossible to detect the tire air pressure based on the actual amount of air in the tire. Therefore, through steps 180T ~ 240T, unsprung mass resonance frequency upper limit value $f_H$ and unsprung mass resonance frequency lower limit value $f_L$ are corrected to allow accurate detection of the tire air pressure irrespective of tire heating.

At step 180T, determination is made as to whether wheel speed v exceeds predetermined speed $v_T$ and whether rising difference $\Delta f$ (= $f_K$, - $f_S$) is equal to, or greater than, the predetermined difference $\Delta f_0$, or not. The predetermined difference $\Delta f_0$ is preliminarily set with reference to the initial resonance frequency $f_S$ by taking heating characteristics of the tire into consideration. If the above determination is YES, the vehicle is running at high speed and the resonance frequency increases. Therefore, the tire can be regarded as heated. Then, the process is advanced to step 190T to set flag F equal to "1", thereby indicating that unsprung mass resonance frequency upper limit value $f_H$ and unsprung mass resonance frequency lower limit value $f_L$ are corrected. Next, the process is advanced to step 200T to perform a temperature dependent correction. This is done by adding the rising difference $\Delta f$ to the unsprung mass resonance frequency upper limit value $f_H'$ and unsprung mass resonance frequency lower limit value $f_L'$, before correction for the heat, and to derive unsprung mass resonance frequency upper limit value $f_H$ and unsprung mass resonance frequency lower limit value $f_L$.

On the other hand, when judgement NO is made at step 180T, the process is advanced to step 210T to determine whether wheel speed v is equal to, or lower than, predetermined speed $v_T$ and whether rising difference $\Delta f$ is smaller than predetermined difference $f_0$. Here, if both answers are YES, the vehicle is running at a low speed and the resonance frequency decreases. Therefore, the tire can be regarded as not heating. Then, the process is advanced to step 230T to set flag F to "0", thereby indicating that unsprunq mass resonance frequency upper limit value $f_H$ and unsprung mass resonance frequency lower limit value $f_L$ are corrected. Next, the process is advanced to step 240T, to set unsprung mass resonance frequency upper limit value $f_H$ and unsprung mass resonance frequency lower limit value $f_L$ equal to unsprung mass resonance frequency upper limit value $f_H'$ and unsprung mass resonance frequency lower limit value $f_L'$ before heat responsive correction.

On the other hand, if the answer at step 210T is NO, two options exist. The first option is that wheel speed v is equal to, or lower than, predetermined speed $v_T$, and the rising difference $\Delta f$ is greater than, or equal to, predetermined difference $\Delta f_0$. The second option is that wheel speed v exceeds predetermined speed $v_T$ and rising difference $\Delta f$ is lower than predetermined difference $\Delta f_0$. In either such case, straightforward judgement cannot be made whether the tire is heated or not. For instance, when the vehicle speed V exceeds predetermined speed $V_T$, and rising difference $\Delta f$ is smaller than predetermined difference $V_0$. Therefore, it can be determined that rising difference $\Delta f$ is temporarily lowered if the preceding state is in correction; however, if not in correction, wheel speed v can be regarded as increased due to temporary acceleration of the vehicle. Thus, when this occurs, the preceding condition is maintained. Moreover, when the answer is NO at step 210T, the process is advanced to step 220T to make judgement whether flag F which is indicative of the correction state is "1", or not. If flag F is "1", it can be regarded as being in correction, and the process is advanced to step 200T to continue correction. On the other hand, if flag F is "0", it can be regarded as not being in correction, and the process is advanced to step 240T, so as not to perform correction.

A timing chart of the processes of steps, 180T ~ 240T, set forth above can be illustrated as shown in Fig. 55. As can be clear from Fig. 55, when wheel speed v becomes higher than predetermined speed $v_T$ and rising difference $\Delta f$ becomes greater than predetermined difference $\Delta f_0$, correction is initiated. When wheel speed v becomes lower than predetermined speed $V_T$, and rising difference $\Delta f$ becomes smaller than predetermined difference $\Delta f_0$, correction is released. Thus, once correction is initiated, the correction will only be released in response to lowering of both wheel speed v and rising difference $\Delta f$.

It should be noted that the above-mentioned embodiment shows an example of detecting decreases in tire air pressure based only on the resonance frequency of the unsprung mass of the vehicle in the forward and backward directions. It is also possible to detect decreases in the tire air pressure only based on the resonance frequency in the upward and downward directions, or based on the resonance frequencies, in each of the upward, downward, forward and backward directions.

Also, note that rising difference $\Delta f$ can be an initially set value Instead of the derived value ($f_K$ -$f_S$).

The foregoing embodiment performs correction of both unsprung mass resonance frequency upper limit value $f_H$ and unsprung mass resonance frequency lower limit value $f_L$ for each wheel independently. However, it may be possible to perform correction for unsprung mass resonance frequency upper limit value $f_H$ and unsprung mass resonance frequency lower limit value $f_L$ for all wheels simultaneously when the rising difference $\Delta f$ exceeds the predetermined difference $\Delta f_0$. In this case, for the wheel in which rising difference $\Delta f$ exceeds predetermined difference $\Delta f_0$, rising difference $\Delta f$ is added to both unsprung mass resonance frequency upper limit value $f_H$ and unsprung mass resonance frequency lower limit value $f_L$ in the similar manner to step 200T, For the wheels in which rising difference $\Delta f$ does not exceed predetermined difference $\Delta f_0$, the correction in performed with an average value, $\Delta f_{ave}$, of the rising differences, $\Delta f$, of the wheel.

Until the predetermined vehicle speed is reached, the initial resonance frequency $f_S$ may be set either with an average value of resonance frequencies derived, or, in the alternative, with the final value of resonance frequencies derived.

Next, the twenty-first embodiment of the present invention will be discussed.

The above-mentioned twentieth embodiment makes correction of unsprung mass resonance frequency upper limit value $f_H$ and unsprung mass resonance frequency lower limit value $f_L$ as an approach for heating of the tire. In addition to the effect in the twentieth embodiment, the twenty-first embodiment makes correction of unsprung mass resonance frequency upper limit value $f_H$ and unsprung mass resonance frequency lower limit value $f_L$ for preventing bursting or standing wave phenomenon which are caused by increasing the vehicle speed.

Typically, the tire has a range of the applicable vehicle speeds which depend upon its grade, and the minimum and maximum air pressures to be maintained with respect to tne vehicle speed are set as reference values (allowable lower limit value is $P_0$ and allowable upper limit value is $P_z$). However, if the tire air pressure is low when the vehicle speed is increased, bursting or standing wave phenomenon may occur. Thus, it is desirable to raise the overall allowable tire pressure range by raising the allowable lower limit value, $P_0$, and the allowable upper limit value, $P_z$. The twenty-first embodiment provides a solution therefor, and it adds a correction value for initial unsprung mass resonance frequency upper limit value $f_H''$ and unsprung mass resonance frequency lower limit value $f_L''$ with respect to the vehicle speed.

Accordingly, in the twenty-first embodiment, between steps 170T and 180T, the processes illustrated in Fig. 56 are performed.

In Fig. 56, at step 171U, determination is made whether wheel speed v exceeds a first speed, $v_0$ ($v < v_0$). If the wheel speed v does not exceed the first speed $v_0$, it can be regarded that the traveling speed is not too high. flus, the corrections for initial unsprung mass resonance frequency upper limit value $f_H''$ and unsprung mass resonance frequency lower limit value $f_L$" are unnecessary. Therefore, the process is advanced to step 172U, where the initial unsprung mass resonance frequency upper limit value $f_H$" and unsprung mass resonance frequency lower limit value $f_L$" are set equal to unsprung mass resonance frequency upper limit value $f_H$' and unsprung mass resonance frequency lower limit value $f_L$' before heating dependent correction. When wheel speed v exceeds the first speed $V_0$, the process is advanced to step 173U to determine whether wheel speed v exceeds second speed $V_H$ ($V_0 < V_H$). Here, if wheel speed v does not exceed the second value $V_H$, the process is advanced to step 174U to derive unsprung mass resonance frequency upper limit value $f_H$' and unsprung mass resonance frequency lower limit value $f_L$' before the heating dependent correction. This is done by adding a correction value ΔQ' to unsprung mass resonance frequency upper limit value $f_H$", and by adding a correction value ΔQ to unsprung mass resonance frequency lower limit value $f_L$".

If the vehicle speed exceeds the second speed $v_H$, the process is advanced to step 175U to determine whether wheel speed v exceeds a third speed, $v_V$ ($v_H < V_V$), or not. If wheel speed v does not exceed third speed $v_V$ at step 176U, unsprung mass resonance frequency upper limit value $f_H$' and unsprung mass resonance frequency lower limit value $f_L$' are corrected before the heating dependent correction. This is done by adding correction value ΔH' to unsprung mass resonance frequency upper limit value $f_H$", and by adding the correction value ΔH to unsprung mass resonance frequency lower limit value $f_L$". Therefore, if the vehicle speed exceeds the third speed $v_V$, the process is advanced to step 177U to derive unsprung mass resonance frequency upper limit value $f_H$' and unsprung mass resonance frequency lower limit value $f_L$' before the heating dependent correction. This is done by adding a correction value ΔV' to the unsprung mass resonance frequency upper limit value $f_H$', and by adding a correction value ΔV to the unsprung mass resonance frequency lower limit value $f_L$".

The result of the processes in the foregoing steps, 171U - 177U, may be illustrated as shown in Fig. 57. When wheel speed v is lower than predetermined speed $V_0$, initial unsprung mass resonance frequency upper limit value $f_H$" is set equal to unsprung mass resonance frequency upper limit value $f_H$', and unsprung mass resonance frequency lower limit value $f_L$" is set equal to unsprung mass resonance frequency lower limit value $f_L$' before the heating dependent correction. When wheel speed v is increased, initial unsprung mass resonance frequency upper limit value $f_H$" and unsprung mass resonance frequency lower limit value $f_L$" are corrected. This unsprung mass resonance frequency upper limit value $f_H$' and the unsprung mass resonance frequency lower limit value $f_L$' are gradually increased before the heating dependent correction. Consequently, allowable lower limit value $P_0$ and allowable upper limit value $P_z$ are also increased to raise the overall allowable range of the tire air pressure, thereby preventing the bursting or the standing wave phenomenon.

The above-mentioned embodiments are established in view of the same type of tires. If any of the tires are different in type, the tire air pressure may also be different, and the reference value (unsprung mass resonance frequency) for determining decreases in tire air pressure may correspondingly change even when the unsprung mass resonance frequencies are the same. Therefore, depending upon the type of the tire to be equipped, the reference value for discriminating abnormalities in the tire air pressure has to be set. As a result of study made by the inventors, it has been found that there are definite differences in the tire air pressure (unsprung mass resonance frequency characteristics) between a normal radial tire and a stadless tire (winter tire). These are demonstrated in Fig. 58.

In Fig. 58, the fluctuation range of the unsprung mass resonance frequency of the normal radial tire (hereinafter simply referred to as radial tire) is shown by reference A in Fig. 58. It has a higher range than that of the unsprung mass resonance frequency of the stadless tire which is shown by the reference sign B. This fluctuation depends on differences of tire manufacture (brand), and on the weight of the wheel to which the tire is equipped. $A_{max}$ and $B_{max}$ show the upper limit characteristics of the fluctuation in the case where the lightest wheel is employed, and $A_{min}$ and $B_{min}$ show the lower limit characteristics of the fluctuation in the case where the heaviest wheel is employed. This is because unsprung mass resonance frequency f is proportional to $(k/m)^{½}$ (where m is an unsprung mass weight, k is a spring constant of the tire).

Here, assuming that the tire air pressure range (kg/cm$^2$] for alarm is defined by a lower limit $P_L$ and an upper limit $P_H$, the reference resonance frequency (unsprung mass resonance frequency) $f_L$ for determining the radial tire air pressure becomes $f_{RA}$. Similarly, the reference resonance frequency $f_L$ of the stadless tire becomes $f_{ST}$. For example, in this case, the minimum air pressure (1.4 kg/cm$^2$) as defined in JIS standard can be used. Also, the maximum air pressure (2.3 kg/cm$^2$) as defined in JIS standard can be used for $P_H$.

Hereinafter, the twenty-second embodiment will be explained with reference to the flowcharts of Fig. 59 and 60.

Upon initiation of signal processing by ECU 4 in response to turning ON of the ignition switch, it is determined whether flag F is set to "1", or not, at step 101V. Again recall that flag F is reset to "0" by turning OFF of the ignition switch. Accordingly, immediately after initiation of the signal processing, the result of step IOIV is negative, and the process proceeds to step 102V.

At step 102V, determination is made whether both of selection switches, 6a and 6b, are in ON state, or not. If both are in the ON state, judgement is made in step 105V that the stadless tires are used on all four wheels. Then, at step 105aV, the reference resonance frequency $f_L$ is set equal to $f_{ST}$ for all four wheels. If the answer at step 102V is NO, the process is advanced to step 103V to determine whether both selection switches 6a and 6b are OFF. If both of the switches are OFF, judgement is made that the radial tires are used on all four wheels at step 106V. Then, at step 106aV, reference resonance frequency $f_L$ is set equal to $f_{RA}$ for all four wheels. If the answer at step 103V is NO, the process is advanced to step 104V. If, in step 104V, the selection switch 6a is determined to be in the OFF state, selection switch 6b must be necessarily ON due to the results of prior tests. Therefore, in step 107V, judgement is made that radial tires are equipped on the two front wheels, and stadless tires are equipped on the two rear wheels. At step 107aV, reference resonance frequency $f_L$ for the two front wheels is set equal to $f_{RA}$, and reference resonance frequency $f_L$ for the two rear wheels is set equal to $f_{ST}$.

If the answer at step 104V is NO, judgement is made at step 108V that the stadless tires are equipped on the two front wheels, and the radial tires are equipped on the two rear wheels. Then, at step 108aV, resonance frequency $f_L$ is set equal to $f_{ST}$, and reference resonance frequency $f_L$ for two rear wheels is set equal to $f_{RA}$. Therefore, the processes of steps 105V ~ 108V are performed alternatively. The processes subsequent to step 109V, illustrated in Fig. 60, are explained with respect to the case where stadless tires are equipped on two front wheels, and radial tires are equipped on two rear wheels.

At steps 109V ~ 117V, similar processes to those of the former embodiments are performed.

Subsequently, at step 118V, when the derived resonance frequency, $f_K$, is lower than, or equal to, reference resonance frequency $f_{ST}$ for the stadless tire, or when it is lower than, or equal to, reference resonance frequency $f_{RA}$ for the radial tire, judgement is made that tire air pressure is below the allowable lower limit value. Thus, the process is advanced to step 119V to perform display of alarm to the driver on display portion 5.

In the above-mentioned embodiment, by using combinations of ON and OFF of two selection switches 6a and 6b, the type of the tires equipped on the two front wheels and two rear wheels can be selected. Based on this selection, reference resonance frequency $f_L$ is set equal to $f_{ST}$ in the case of stadless tires and to $f_{RA}$ in the case of radial tires. Therefore, even when the type of the tires are changed, the air pressure condition of the tires can be accurately detected.

It should be noted that although the foregoing embodiment employs $f_{ST}$ and $f_{RA}$ as reference resonance frequencies, it is possible to use differences between the resonance frequencies $f_{ST0}$ or $f_{RA0}$ at the normal air pressure, and calculated resonance frequencies $f_{KST}$ or $f_{KRA}$, as reference resonance frequencies ($f_{STO}$ - $f_{KST}$ or $f_{RAO}$ - $f_{KRA}$).

The twenty-third embodiment will be explained with reference to the flowchart of Fig. 61 and to Figs. 62 and 63. Fig. 62 is an explanatory illustration for the case where the lowering of the tire air pressure is determined based on the relationship between the resonance frequency and the tire air pressure.

Upon initiating signal processing by ECU 4 in response to turning ON of the ignition switch, respective processes of steps 201W - 208W are performed. Namely, calculating wheel speed v, discriminating the road surface condition, determining the road surface length, performing FFT operations and integrating the number of operation cycles, determining the number of operation cycles, averaging, moving averaging, calculating the resonance frequency $f_K$, and calculating $\Delta f$ are each performed in a similar manner to those of the twenty-second embodiment. At subsequent step 209W, determination is made whether flag F is set to "1", or not. The judgement at step 209W after initiation of process becomes negative, and the process is advanced to step 210W since the flag F is reset to "0" by turning OFF of the ignition switch.

At step 210W, determination is made whether the setting switch 16, shown in Fig. 63, is in ON state, or not. If not, the resonance frequency derived upon initiation of process is set as the reference resonance frequency $f_{KO}$ in step 211W. Thus, the lowering differences ($f_{KO}$ - $f_K$) with the sequentially derived resonance frequency $f_K$ can be derived for comparison with a reference difference, $\Delta f = (f_{KO} - f_L)$, which is between the above-mentioned $f_{K0}$ and the resonance frequency $f_{L,}$ and which corresponds to the tire air pressure lowering alarm pressure (Fig. 62). If ($f_{KO}$ - $f_{K,}$) $\leq \Delta f$, the processes following step 201W are performed. On the other hand, if ($f_{KO}$ - $f_L$) > $\Delta f$, the process is advanced to step 212W because the tire pressure is lowered below the allowable value, and the alarm is displayed for the driver on display portion 5.

When judgement is made at step 210W that the setting switch 16 is in the ON state, the process is advanced to step 213W. In this step, resonance frequency $f_K$, which was derived immediately after turning ON setting switch 16, is set as the reference resonance frequency $f_{KO}$ for each of the four wheels independently. Then, at step 214W, flag F is set to "1", and the process returns to step 201W. Accordingly, in the processes after turning ON the setting switch 16, a detection process for the tire air pressure is performed. This detection process includes comparing the difference between newly set reference resonance frequency $f_{KO}$ and sequentially derived resonance frequency $f_K$, and the difference, $\Delta f$, between the reference resonance frequency $f_{KO}$ and resonance frequency $f_L$.

The foregoing embodiment can set the derived resonance frequency $f_K$ to the reference resonance frequency $f_{KO}$ with respect to a normal tire air pressure upon changing of the tire, or upon turning ON of setting switch 16 by the driver after the tire changing operation. Therefore, the tire air pressure can be detected with high precision irrespective of the type of new tires used.

It should be noted that while the reference resonance frequency $f_{KO}$ can be set independently for each of the four wheels as mentioned above, it is also possible (1) to set at an average value of the resonance frequencies, $f_K$, derived with respect to each of the four wheels, (2) to set at an average value of two wheels excluding the maximum and minimum values, or (3) to set the maximum or minimum value of the resonance frequencies $f_K$, as the reference resonance frequency $f_{KO}$ for respective four wheels.

The twenty-fourth embodiment will be explained with reference to the flowchart of Fig. 64, wherein steps 201X ~ 209X are the same as steps 201W ~ 209W of Fig. 61.

At step 209X, determination is made whether flag F is set to "1", or not. If the answer is negative, the process is advanced to step 213. On the other hand, when the answer is positive, the process is advanced to stap 211.

The foregoing embodiment regards the tire air pressure immediately after starting of running of the vehicle as normal, neglecting setting switch 16, and it sets the rescnance frequency $f_K$ derived immediately after starting the tire pressure detecting process equal to reference resonance frequency $f_{KO}$. Thus, a decrease in the tire air pressure which occurs during running can be detected irrespective of the tire type. It should be noted that the above-mentioned reference resonance frequency, $f_{KO}$, can be set in the above-mentioned manner of (1) ~ (3), similarly to the case of the twenty-third embodiment.

Next, the twenty-fifth embodiment will be explained. The present embodiment uses an effective rolling radius and the unsprung mass resonance frequency to determine the type of the tire. Namely, as shown in Fig. 65, the effective rolling radius $r_S$ and the unsprung mass resonance frequency fs become substantially constant depending on the type of the tire. For instance, in the drawing, line x is normal radial tire, line y is stadless tire, and line z is a low profile tire, each of which corresponds to the previously explained types of tire. Based on both values, the type of the tire can be determined. Therefore, a tire changing judgement map is stored in electronic control unit 1.

The signal processing of electronic control unit 1 for alarming by detection of the air pressure will be explained with reference to the flowcharts of Figs. 66 and 67.

Upon initiation of the process by turning ON of the ignition switch, wheel speed v is derived on the basis of the signal from the wheel speed sensor in step 101Y. Immediately after ignition, when the effective rolling radius is not yet subject to a centrifugal force, flag F is checked at step 102Y. If the flag F is not set to "1", the process is advanced to step 103Y and subsequent steps. It should be noted that wheel speed v is calculated by waveshaping the output signal of the wheel speed sensor, and by dividing the number of the resultant pulses with a corresponding period.

At step 103Y, vehicle speed V is detected by means of a doppler type vehicle speed meter, or by a rotational speed of a transmission rotary shaft. At step 104Y, tire load radius $r_a$ is derived on the basis of vehicle speed v and wheel speed v.

At steps 105Y and 106Y, the frequency analysis by way of fast Fourier transformation (FFT) operation is performed with respect to the wheel speed. The process is repeated until the number of operation cycles of the frequency analysis, K, reaches a predetermined number, $K_O$. At step 107Y, the derived values through the frequency analysis are averaged to calculate the unsprung mass resonance frequency, $f_S$, on the basis of the results of averaging (step 108Y).

At step 109Y, effective rolling radius $r_S$ and unsprung mass resonance frequency $f_S$ derived at step 108Y, are used to discriminate the type tire by utilizing the map of Fig. 65. At subsequent stap 110Y, on the basis of the map of Fig. 68, the discrimination reference values for the unsprung mass resonance frequency corresponding to the discriminated kind of the tire, $f_{La}$, $f_{Lb}$, $f_{Lc}$, $f_{Ha}$, $f_{Hb}$, $f_{Hc}$, are selected to store $f_L$ and $f_H$ as an alarming reference value.

Thereafter, flag F is set to "1" (step 111Y). By this, steps 103Y ~ 110Y which are used to determine a tire change are executed only immediately after ignition of the vehicle. It should be noted that, in practice, the foregoing step, 110Y, is executed only when it is determined in step 109Y that tires are changed on either the two drive wheels, or on all four wheels.

The process of Fig. 67 is the same as the foregoing embodiment.

It should be noted that, in the present embodiment, the discrimination of the tire type at step 109Y of Fig. 66 may be performed with a regional map as illustrated in Fig. 69, instead of the linear map shown in Fig. 65. Depending upon which X region, Y region, and Z region, the effective rolling radius $r_S$ and the unsprung mass resonance frequency, are included, discrimination between the normal radial tire, the stadless tire, and the low profile tire is made. Even in this case, the alarming reference value is finally modified only when changing of tires is checked with respect to either the two drive wheels or on all four wheels.

With such construction, an effect similar to the former embodiment can be achieved.

Furthermore, determination of the tire type can be performed by employing the matrix shown in TABLE 1. Namely, it is made using nine kinds of matrices based on variation in effective rolling radius $r_S$ and unsprung mass resonance frequency $f_S$ which are measured upon starting of running, with reference to tire load radius $r_S$ and unsprung mass resonance frequency $f_S$ upon delivery from the factory.

TABLE 1

| | | Tire Load Radius (r.) | | |
|---|---|---|---|---|
| | | Decreased | Unchanged | Increased |
| Unsprung Mass Resonance Frequency | Increased | c (Low Profile Tire) | c (Low Profile Tire) | a (Normal Tire) |
| | Unchanged | c (Low Profile Tire) | a (Normal Tire) | b (Stadless Tire) |
| | Decreased | a (Normal Tire) | b (Stadless Tire) | b (Stadless Tire) |

For instance, when a normal radial tire is used, the unsprung mass resonance frequency is decreased due to decreasing tire air pressure, and the effective rolling radius is also decreased. Conversely, upon supplying tire air pressure, the effective rolling radius is increased corresponding to increased unsprung mass resonance frequency. This characteristic is illustrated in the matrix as portions a.

When stadless tires are being used, since the employed rubber is soft, the unsprung mass resonance frequency becomes generally low. Therefore stadless tires correspond to portions b in TABLE 1. On the other hand, when low profile tires are being used, since the low profile tire generally has a high tire spring constant, the unsprung mass resonance frequency is generally high. This corresponds to portions c in TABLE 1.

In this case, the hatched portion of TABLE 1 is a difficult portion to discriminate between the normal radial tire and other tires. However, with aggregating the results of the discrimination for the other wheels, it can be predicted, because it is rare to cause lowering, or rising of the air pressure for two or four wheels simultaneously. Therefore, judgement can be made that the tires are changed. When the unsprung mass resonance frequency and the effective rolling radius are decreased simultaneously at four or two of the wheels, it can be inferred that the tires are changed to the stadless tire. Conversely, when both or all four have risen, judgement can be made that the tires have been changed to low profile tires.

Even with the present embodiment, effects similar to those in the foregoing embodiment can be achieved.

It should be noted that either a value at an optimal air pressure of the normal radial tire, or a value immediately before the vehicle stops, can be used for the above-mentioned reference values $r_O$ and $f_O$.

Also, in each above-mentioned embodiment, the value itself of the tire air pressure, as well as the abnormal alarm of the tire air pressure may be displayed directly.

Next, the twenty-sixth embodiment will be discussed. Causes of decreased tire air pressure may be natural leakage with relatively moderate lowering, or puncture due to running over a nail or so forth, where the cause having the highest frequency of occurrence is lowering of the tire air pressure due to puncture. However, it is rare that the puncture is caused at left and right wheels simultaneously. Also, a variation of the unsprung mass weight which affects the upward, downward, forward and backward resonance frequency components in the unsprung mass of the vehicle is changing of the tire or wheel materials. Generally, however, it cannot be expected to different the tire and wheel combinations at the left and right wheels. Therefore, by deriving and comparing the resonance frequencies of the left and right wheels with respect to each of the drive wheels and driven wheels, judgement can be made that the tire air pressure has decreased in the tire which has the lowest resonance frequency. That is only if there is definite difference between the resonance frequencies. In the present embodiment, control is performed using the foregoing point. Specifically, the process of step 109Z in Fig. 70 is performed in a manner illustrated in Fig. 71.

At step 201Z, resonance frequency $f_L$, derived with respect to the left side wheel of the front or rear wheel, is compared with the resonance frequency $f_R$, derived with respect to the right side wheel. At steps 202Z and 203Z, higher resonance frequency is set as $f_{MAX}$ and lower resonance frequency to $f_{MIN}$. At a subsequent step 204Z, the minimum value $P_{MIN}$ of the tire air pressure, with respect to the resonant frequency $f_{MIN}$, is derived from a relationship between the resonance frequency (Hz) and the tire air pressure (kg/cm$^2$). This is because, when the unsprung mass weight is varied by varying the tire, wheel material or so forth, the relationship between the resonance frequency and the tire air pressure fluctuates as shown by the hatched region in Fig. 72 so that different tire air pressures will be obtained even when the resonance frequency remains the same.

Then, the process is advanced to step 205Z to compare the minimum value $P_{MIN}$ of the tire air pressure with a threshold level $P_{TH}$ set for detecting abnormal decreases in tire air pressure. It $P_{MIN} < P_{TH}$, the process jumps to step 209Z to display an alarm indicative of the abnormal decreases in tire air pressure on display portion 5. This process can be a preventive measure for the case where the tire air pressures of both of the left and right wheels are lowered simultaneously.

It should be noted that in the foregoing, the decreases in tire air pressure can be determined by employing resonance frequency $f_{MAX}$, instead of resonance frequency $f_{MIN}$. Selection of $f_{MIN}$ or $f_{MAX}$ is made by taking the degree of the tire air pressure decrease for the left and right wheels. In other words, the relative magnitude of decrease in the tire air pressure between the left and right wheels on the actual vehicle or so forth into consideration. However, the relationship between the resonance frequency and the tire air pressure shown in Fig. 72, is preliminarily stored in the form of a map in ECU 4.

If $P_{MIN} \geq P_{TH}$ at step 205Z, the process is advanced to step 206Z, where a difference, $\Delta f$ between resonance frequencies $f_{MAX}$ and $f_{MIN}$ of the left and right wheels, is derived. As set forth above, when the unsprung mass weight is varied via tire variation, wheel material or so forth, the characteristics between the resonance frequency and the tire air pressure are also varied. Accordingly, as shown in Fig. 73, the difference, $\Delta f_A$, is between resonance frequency $f_{AN}$ which corresponds to normal tire air pressure, $P_M$, (shown as characteristic curve (A)) and resonance frequency $f_{AW}$ which corresponds to abnormally decreasing tire air pressure. This becomes greater than the difference, $\Delta f_B$, which is between resonance frequency $f_{SN}$ which corresponds to the normal tire air pressure $P_M$ (shown as characteristic curve (B)) and resonance frequency $f_{SW}$ which corresponds to the abnormally decreasing tire air pressure. Therefore, there is a possibility of causing erroneous detection of abnormally decreasing tire air pressure when using simple comparison of the difference, $\Delta f$, which is between the resonance frequencies $f_{MAX}$ and $f_{MIN}$. Thus, threshold level $f_{TH}$, which is the difference between the resonance frequencies, is unconditionally determined for judgement of abnormally low tire air pressure.

Assuming that the variation of the unsprung mass coefficient factor in the left and right wheels is caused only by the difference of the tire air pressures at those wheels, the influence for the resonance frequency caused by the unsprung mass coefficient factors can be absorbed. This can be done by obtaining and using characteristic charts which relate the normal tire air pressure to the decreased alarming tire air pressure (shown in Fig. 74) with respect to various combinations of the tire and wheels. Then, by searching for the maximum resonance frequency, $f_{MAX}$, which is regarded as normal tire air pressure. It should be noted that the characteristic chart shown in Fig. 74 is stored in ECU 4.

Accordingly, at step 207Z, threshold level $f_{TH}$ is obtained from the map stored in ECU 4 with respect to resonance frequency $f_{MAX}$, and is regarded as normal tire air pressure. Then, the process is advanced to step 208Z to compare resonance frequency difference $\Delta f$ with new threshold level $f_{TH}$ map. If $\Delta f \geq f_{TH}$, the alarm indicative of abnormal decreasing of the tire air pressure is displayed on display portion 5 at step 209Z, On the other hand, if $\Delta f < f_{TH}$, the process simply returns.

It should be noted that, depending upon the vehicle traveling condition, different cases may be either dangerous or not dangerous given the same tire air pressure. Therefore, the map shown in Fig. 75 is provided with a plurality of characteristic curves which may be used for deriving threshold level $f_{TH}$ for the resonance frequency difference corresponding to the vehicle speed and cornering condition.

The foregoing embodiment can improve reliability by avoiding erroneous detection of abnormally low tire air pressure. It does so by correcting the threshold level $f_{TH}$ for the resonance frequency difference with the resonance frequency $f_{MAX}$, which is regarded to be normal tire resonance frequency. $f_{MAX}$ is regarded as normal tire resonance frequency because the relationship between the variation magnitude ($\Delta f$) of the resonance frequency of both left and right wheels, and the variation magnitude of the tire air pressure may be affected by the unsprung mass coefficient factor.

On the other hand, there is provided a solution for natural leakage, where the tire air pressure of left and right wheels are lowered simultaneously. By setting $f_{MAX}$ or $f_{MIN}$ of the resonance frequencies of the left and right wheels as the threshold value for judgement, an absolute limit value can be set. In this case, with respect to fluctuation of characteristics between the resonance frequency and the tire air pressure, which depends upon the type of the tire and wheel used, the set threshold value for judgement may be adjusted by selecting set absolute limit value, as well as selections of either $f_{MAX}$ or $f_{MIN}$ for the resonance frequency.

Next, discussion will be given for the twenty-seventh embodiment with reference to Fig. 76. In steps 101α - 108α, the same processes to those in the former embodiment are performed. Then, at step 109α, determination is made whether the derived resonance frequency, $f_K$, is lower than or equal to, predetermined air pressure lowering discrimination value $f_L$. Next, at step 110α, variation rate $df_K$ of resonance frequency $f_K$ within the unit of period is compared with judgement value ($\Delta f_K/\Delta t$) to determine the degree of decrease in the tire air pressure. Here, $\Delta f_K$ is the difference between the calculation result of the resonance frequency in the current cycle and the calculation result from the preceding cycle, and $\Delta t$ is an elapsed period therebetween. When the variation rate is less than, or equal to, the foregoing judgement value, namely in the case of gradual decrease in the tire air pressure, the process is advanced to step 111α to set a counter. Subsequently, at step 112α, determination is made whether the derived variation rate of the derived resonance frequency, $f_K$, is smaller than, or equal to the judgement value, and whether it has remained smaller than, or equal to, the tire air pressure lowering discrimination value $f_L$ for $M_o$ times. If the answer at step 112α is positive, the process is advanced to step 113α to display the alarm indicating low tire air pressure for the relevant tire.

On the other hand, when the answer step 109α is negative, the counter value is initialized to "0" for counting the number of sequential processes of step 109α and subsequent steps. Also, when the variation rate of resonance frequency $f_K$ is greater than the judgement value as checked in step 110α, judgement is made that the tire air pressure is abruptly lowered due to occurrence of abrupt leakage of the tire air pressure. Therefore, the process jumps to step 113α to permit alarming display of the foregoing content.

It should be noted that once the alarming display has initiated in step 113α, the present embodiment maintains alarming display until the vehicle stops. Then, upon restarting the vehicle by turning ON the ignition switch, if the resonance frequency, $f_K$, is higher than the air pressure judging value, the tire air pressure detection state is released to terminate alarming display. However, if the resonance frequency, $f_K$, is lower than, or equal to, the air pressure lowering judgment value, the alarming display is maintained until the next stop of the vehicle to repeat the foregoing steps.

The foregoing embodiment can improve the reliability while avoiding erroneous detection by performing alarming for decreases in the tire air pressure based on the result of a two stage judgement in which the variation rate of resonance frequency $f_K$ is obtained within a unit period. Determination is then made both as to whether or not the variation rate becomes smaller than, or equal to, the judgement value, and whether or not the variation rate continues to be less than, or equal to, the judgement value for cycles more than, or equal to, $M_o$ times.

Although the embodiments have been disclosed in detail, the present invention should not be limited to these embodiments. For instance, in Fig. 4, it is possible to detect the tire air pressure on the basis of variation of gain at a specific frequency or variation of the frequency at a specific gain.

## INDUSTRIAL APPLICABILITY

As set forth above, according to the present invention, an attention is paid to the fact that the predetermined frequency component in the tire vibration frequency component varies according to variation of the spring constant of the tire, so that the air pressure condition of the tire is detected based on the variation of the frequency component. Therefore, the vehicular occupant can monitor the air pressure during traveling of the vehicle. In addition, with employing a device for adjusting the air pressure of the tire, the vehicular driving performance can be significantly improved.

## Claims

**1.** A tire air pressure condition detecting device comprising:

output means (3a to 3d) installed on a vehicle for outputting a signal including tire vibration while the vehicle is moving;

extracting means (4; step 170A, 1900F, 118M, 109P, 209Q, 312R, 170T, 117V, 208W, 208X, 108Z, 108α) for extracting at least one of resonance frequency component due to vibration generated in a vertical direction and resonance frequency component due to vibration generated in a longitudinal direction of an unsprung mass of the vehicle from said signal including the tire vibration frequency component, when the unsprung mass of the vehicle vibrates; and

detecting means (step 180A, 2000F, 119M, 115P, 212Q, 313R, 250T, 118V, 211W, 211X, 109Z, 208Z, 110α) for detecting a tire air pressure condition based on said at least one resonance frequency component.

**2.** Device as set forth in claim 1, wherein said detecting means (4; 180A, 2000F, 119M, 115P, 212Q, 313R, 250T, 118V, 211W, 211X, 109Z, 208Z, 110α) preliminarily stores a resonance frequency value as a reference resonance frequency, and detects lowering of the tire air pressure condition based on a variation magnitude of the extracted resonance frequency relative to the resonance frequency value.

**3.** Device as set forth in anyone of the preceding claims, wherein said detecting means (4; 180A, 2000F, 119M, 115P, 212Q, 313R, 250T, 118V, 211W, 211X, 109Z, 208Z, 110α) preliminarily stores a relationship between said tire air pressure and the resonance frequency and predicts the air pressure of the tire from the extracted resonance frequency on the basis of the stored relationship.

**4.** Device as set forth in anyone of the preceding claims, wherein said detecting means (4; 180A, 2000F, 119M, 115P, 212Q, 313R, 250T, 118V, 211W, 211X, 109Z, 208Z, 110α) includes an alarming means for alarming to a driver when the tire air pressure lowering below a lower limit air pressure is detected.

**5.** Device as set forth in anyone of the preceding claims, which further comprises removing means (4; step 150A, 160A, 1700F, 1800F, 116M, 117M) for removing a degree component from said signal containing said tire vibration frequency component, the degree component being noise component appearing on frequencies which are integer times a frequency corresponding to a number of wheel rotations within a unit period of time.

**6.** Device as set forth in anyone of the preceding claims, wherein said extracting means (4; step 170A, 1900F, 118M, 109P, 209Q, 312R, 170T, 117V, 208W, 208X, 108Z, 108α) includes an extraction period varying means for modifying an extraction period.

**7.** Device as set forth in anyone of the preceding claims, wherein said detecting means (4; 180A, 2000F, 119M, 115P, 212Q, 313R, 250T, 118V, 211W, 211X, 109Z, 208Z, 110α) includes correcting means for correcting a reference value used to detect low tire air pressure based on a vehicle traveling speed.

**8.** Device as set forth in anyone of the preceding claims, which further comprises tire kind selection means (16, 109Y) for selecting a kind of the tire equipped on the vehicle.

**9.** Device as set forth in claim 8, wherein said tire kind selection means is a switch (16) to be operated by a vehicular occupant.

**10.** Device as set forth in claim 8, wherein said tire kind selection means (109Y) selects the kind of the tire depending on a load radius of the tire.

**11.** Device as set forth in anyone of the preceding claims, wherein said detecting means (4; 180A, 2000F, 119M, 115P, 212Q, 313R, 250T, 118V, 211W, 211X, 109Z, 208Z, 110α) comprises resonance frequency difference driving means for deriving a difference of the resonance frequencies of left and right wheels at front or rear wheels derived from the signals of respective resonance frequency and judgement means comparing said resonance frequency difference with the judgement value.

**12.** Device as set forth in anyone of the preceding claims, wherein said detecting means (4; 180A, 2000F, 119M, 115P, 212Q, 313R, 250T, 118V, 211W, 211X, 109Z, 208Z, 110α) performs discrimination of abnormality of the tire air pressure on the basis of said resonance frequency component and outputs an abnormality signal when said abnormality detection is maintained over a sequential plurality of cycles.

**Patentansprüche**

**1.** Vorrichtung zum Erfassen eines Reifenluftdruckzustands, die aufweist:

eine in ein Fahrzeug eingebaute Ausgabeeinrichtung (3a bis 3d) zum Ausgeben eines Signals, das eine Reifenschwingung beinhaltet, während sich das Fahrzeug bewegt;

eine Extrahierungseinrichtung (4; Schritt 170A, 1900F, 118M, 109P, 209Q, 312R, 170T, 117V, 208W, 208X, 108Z, 108α) zum Extrahieren mindestens einer Resonanzfrequenzkomponente aufgrund einer Schwingung, die in einer vertikalen Richtung erzeugt wird, und einer Resonanzfrequenzkomponente aufgrund einer Schwingung, die in einer longitudinalen Richtung erzeugt wird, einer ungefederten Masse des Fahrzeugs aus dem Signal, das die Reifenschwingungsfrequenzkomponente beinhaltet, wenn die ungefederte Masse des Fahrzeugs schwingt; und

eine Erfassungseinrichtung (Schritt 180A, 2000F, 119M, 115P, 212Q, 313R, 250T, 118V, 211W, 211X, 109Z, 208Z, 110α) zum Erfassen eines Reifenluftdruckzustands auf der Grundlage der mindestens einen Resonanzfrequenzkomponente.

2. Vorrichtung nach Anspruch 1, bei der die Erfassungseinrichtung (4; 180A, 2000F, 119M, 115P, 212Q, 313R, 250T, 118V, 211W, 211X, 109Z, 208Z, 110α) einleitend einen Resonanzfrequenzwert als eine Referenzresonanzfrequenz speichert und ein Verringern des Reifenluftdruckzustands auf der Grundlage einer Änderungshöhe der extrahierten Resonanzfrequenz bezüglich des Resonanzfrequenzwerts erfaßt.

3. Vorrichtung nach einem der vorhergehenden Ansprüche, bei der die Erfassungseinrichtung (4; 180A, 2000F, 119M, 115P, 212Q, 313R, 250T, 118V, 211W, 211X, 109Z, 208Z, 110α) einleitend eine Beziehung zwischen dem Reifenluftdruck und der Resonanzfrequenz speichert und den Luftdruck des Reifens aus der extrahierten Resonanzfrequenz auf der Grundlage der gespeicherten Beziehung vorhersagt.

4. Vorrichtung nach einem der vorhergehenden Ansprüche, bei der die Erfassungseinrichtung (4; 180A, 2000F, 119M, 115P, 212Q, 313R, 250T, 118V, 211W, 211X, 109Z, 208Z, 110α) eine Alarmierungseinrichtung zum Alarmieren eines Fahrers beinhaltet, wenn es erfaßt wird, daß sich der Reifenluftdruck unter einen unteren Grenzluftdruck verringert.

5. Vorrichtung nach einem der vorhergehenden Ansprüche, welche weiterhin eine Entfernungseinrichtung (4; Schritt 150A, 160A, 1700F, 1800F, 116M, 117N) zum Entfernen einer Gradkomponente aus dem Signal aufweist, das die Reifenschwingungsfrequenzkomponente enthält, wobei die Gradkomponente eine Rauschkomponente ist, die auf Frequenzen auftritt, welche ganzzahlig Vielfache einer Frequenz sind, die einer Anzahl von Radumdrehungen innerhalb einer Einheitszeitdauer entspricht.

6. Vorrichtung nach einem der vorhergehenden Ansprüche, bei der die Extrahierungseinrichtung (4; Schritt 170A, 1900F, 118M, 109P, 209Q, 312R, 170T, 117V, 208W, 208X, 108Z, 108α) eine Extrahierungsdaueränderungseinrichtung zum Ändern einer Extrahierungsdauer beinhaltet.

7. Vorrichtung nach einem der vorhergehenden Ansprüche, bei der die Erfassungseinrichtung (4; 180A, 2000F, 119M, 115P, 212Q, 313R, 250T, 118V, 211W, 211X, 109Z, 208Z, 110α) eine Korrektureinrichtung zum Korrigieren eines Referenzwerts beinhaltet, der verwendet wird, um einen niedrigen Reifenluftdruck auf der Grundlage einer Fahrzeugfahrgeschwindigkeit zu erfassen.

8. Vorrichtung nach einem der vorhergehenden Ansprüche, welche weiterhin eine Reifenartauswahleinrichtung (16, 109Y) zum Auswählen einer Art des Reifens aufweist, mit der das Fahrzeug ausgestattet ist.

9. Vorrichtung nach Anspruch 8, bei der die Reifenartauswahleinrichtung ein Schalter (16) ist, der von einem Fahrzeuginsassen zu betätigen ist.

10. Vorrichtung nach Anspruch 8, bei der die Reifenartauswahleinrichtung (109Y) die Art des Reifens abhängig von einem Lastradius des Reifens auswählt.

11. Vorrichtung nach einem der vorhergehenden Ansprüche, bei der die Erfassungseinrichtung (4; 180A, 2000F, 119M, 115P, 212Q, 313R, 250T, 118V, 211W, 211X, 109Z, 208Z, 110α) eine Resonanzfrequenzdifferenzansteuereinrichtung zum Ableiten einer Differenz der Resonanzfrequenzen der linken und rechten Räder an vorderen oder hinteren Rädern aufweist, die aus den Signalen einer jeweiligen Resonanzfrequenz abgeleitet wird, und eine Entscheidungseinrichtung aufweist, die die Resonanzfrequenzdifferenz mit dem Entscheidungswert vergleicht.

12. Vorrichtung nach einem der vorhergehenden Ansprüche, bei der die Erfassungseinrichtung (4; 180A, 2000F, 119M, 115P, 212Q, 313R, 250T, 118V, 211W, 211X, 109Z, 208Z, 110α) eine Unterscheidung einer Abnormalität des Reifenluftdrucks auf der Grundlage der Resonanzfrequenzkomponente durchführt und ein Abnormalitätssignal ausgibt, wenn die Abnormalitätsentscheidung über eine aufeinanderfolgende Mehrzahl von Zyklen aufrechterhalten wird.

## Revendications

1. Dispositif de détection d'état de pression d'air de pneu comprenant :

un moyen de sortie (3a à 3d) installé sur un véhicule afin de fournir en sortie un signal comprenant une vibration de pneu pendant que le véhicule se déplace,

un moyen d'extraction (4 ; étape 170A, 1900F, 118M, 109P, 209Q, 312R, 170T, 117V, 208W, 208X, 108Z, 108α) destiné à extraire au moins l'une de la composante de fréquence de résonance due à une vibration générée dans une direction verticale et de la composante de fréquence de résonance due à une vibration générée dans une direction longitudinale d'une masse non suspendue du véhicule à partir dudit signal comprenant la composante de fréquence de vibration de pneu, lorsque la masse non suspendue du véhicule vibre, et

un moyen de détection (étapes 180A, 2000F, 119M, 115P, 212Q, 313R, 250T, 118V, 211W, 211X, 109Z, 208Z, 110α) destiné à détecter un état de pression d'air de pneu sur la base de ladite au moins une composante de fréquence de résonance.

2. Dispositif selon la revendication 1, dans lequel ledit moyen de détection (4 ; 180A, 2000F, 119M, 115P, 212Q, 313R, 250T, 118V, 211W, 211X, 109Z, 208Z, 110α) mémorise au préalable une valeur de fréquence de résonance en tant que fréquence de résonance de référence, et détecte l'abaissement de l'état de pression d'air du pneu sur la base d'une amplitude de variation de la fréquence de résonance extraite par rapport à la valeur de la fréquence de résonance.

3. Dispositif selon l'une quelconque des revendications précédentes, dans lequel ledit moyen de détection (4 ; 180A, 2000F, 119M, 115P, 212Q, 313R, 250T, 118V, 211W, 211X, 109Z, 208Z, 110α) mémorise au préalable une relation entre ladite pression d'air du pneu et la fréquence de résonance et prédit la pression d'air du pneu à partir de la fréquence de résonance extraite sur la base de la relation mémorisée.

4. Dispositif selon l'une quelconque des revendications précédentes, dans lequel ledit moyen de détection (4 ; 180A, 2000F, 119M, 115P, 212Q, 313R, 250T, 118V, 211W, 211X, 109Z, 208Z, 110α) comprend un moyen d'alarme destiné à prévenir un conducteur lorsque l'on détecte un abaissement de la pression d'air du pneu en dessous d'une pression d'air de limite inférieure.

5. Dispositif selon l'une quelconque des revendications précédentes, qui comprend en outre un moyen de suppression (4 ; étapes 150A, 160A, 1700F, 1800F, 116M, 117M) destiné à supprimer une composante de degré dudit signal contenant ladite composante de fréquence de vibration du pneu, la composante de degré étant une composante de bruit apparaissant sur des fréquences qui sont des multiples entiers d'une fréquence correspondant à un certain nombre de rotations de roue à l'intérieur d'un intervalle de temps unitaire.

6. Dispositif selon l'une quelconque des revendications précédentes, dans lequel ledit moyen d'extraction (4 ; étape 170A, 1900F, 118M, 109P, 209Q, 312R, 170T, 117V, 208W, 208X, 108Z, 108α) comprend un moyen de variation de période d'extraction destiné à modifier une période d'extraction .

7. Dispositif selon l'une quelconque des revendications précédentes, dans lequel ledit moyen de détection (4 ; 180A, 2000F, 119M, 115P, 212Q, 313R, 250T, 118V, 211W, 211X, 109Z, 208Z, 110α) comprend un moyen de correction destiné à corriger une valeur de référence utilisée pour détecter une pression d'air de pneu basse sur la base d'une vitesse de circulation du véhicule.

8. Dispositif selon l'une quelconque des revendications précédentes, qui comprend en outre un moyen de sélection de type de pneu (16, 109Y) destiné à sélectionner un type des pneus dont est équipé le véhicule.

9. Dispositif selon la revendication 8, dans lequel ledit moyen de sélection de type de pneu est un commutateur (16) devant être actionné par un occupant du véhicule.

10. Dispositif selon la revendication 8, dans lequel ledit moyen de sélection de type de pneu (109Y) sélectionne le type du pneu suivant le rayon en charge du pneu.

11. Dispositif selon l'une quelconque des revendications précédentes, dans lequel ledit moyen de détection (4 ; 180A, 2000F, 119M, 115P, 212Q, 313R, 250T, 118V, 211W, 211X, 109Z, 208Z, 110α) comprend un moyen d'obtention de différence de fréquence de résonance destiné à obtenir une différence des fréquence de résonance des roues gauche et droite au niveau des roues avant ou arrière, obtenue d'après les signaux de fréquence de résonance respectifs et un moyen d'évaluation qui compare ladite différence de fréquence de résonance à la valeur d'évaluation.

**12.** Dispositif selon l'une quelconque des revendications précédentes, dans lequel ledit moyen de détection (4 180A, 2000F, 119M, 115P, 212Q, 313R, 250T, 118V, 211W, 211X, 109Z, 208Z, 110α) réalise une discrimination d'une anomalie de la pression d'air de pneu sur la base de ladite composante de fréquence de résonance et fournit en sortie un signal d'anomalie lorsque ladite détection d'anomalie est maintenue sur une pluralité séquentielle de cycles.

FIG.1

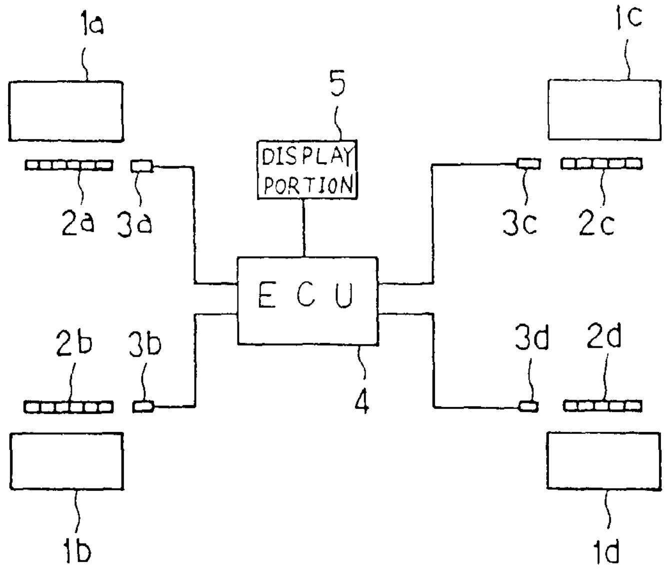


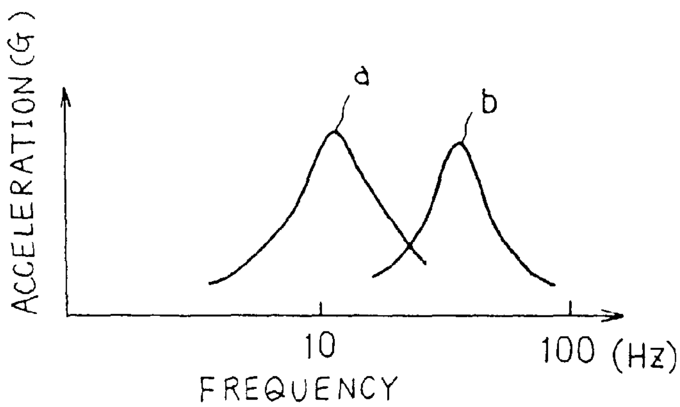


FIG.2

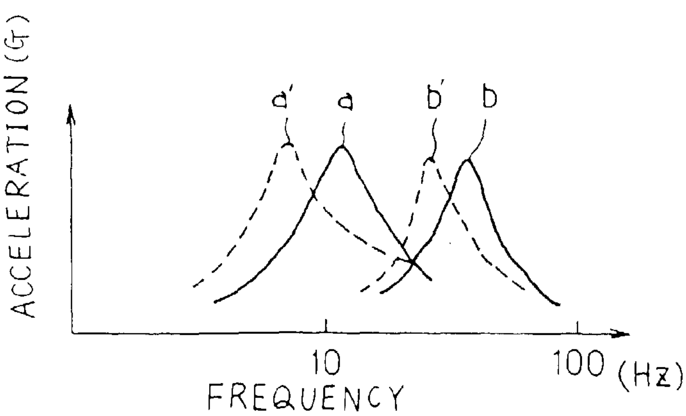


FIG.3

FIG.4

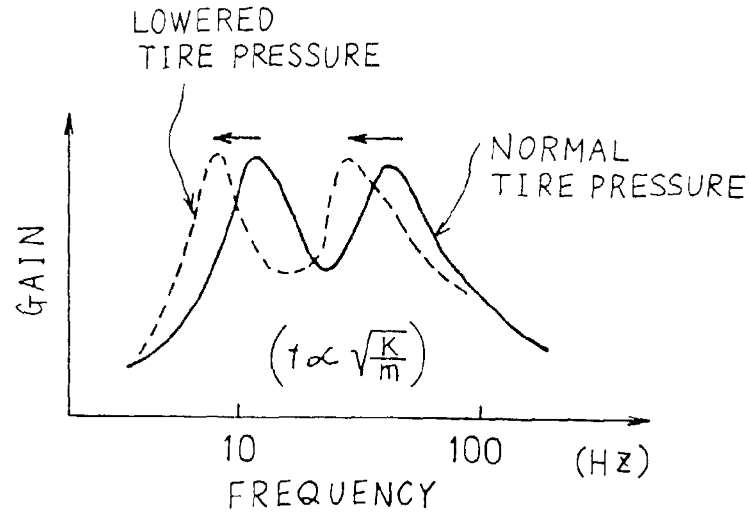


FIG.5

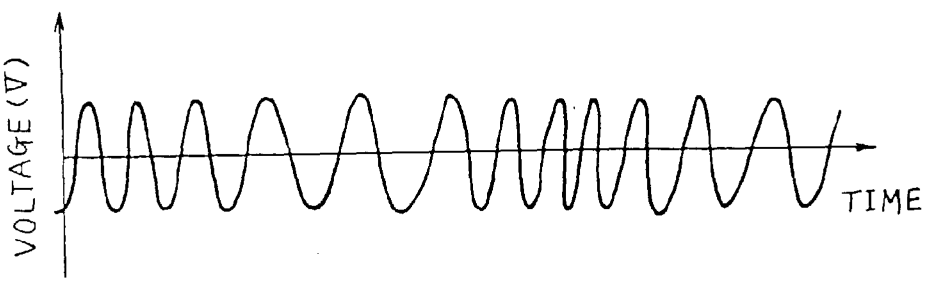


FIG.6

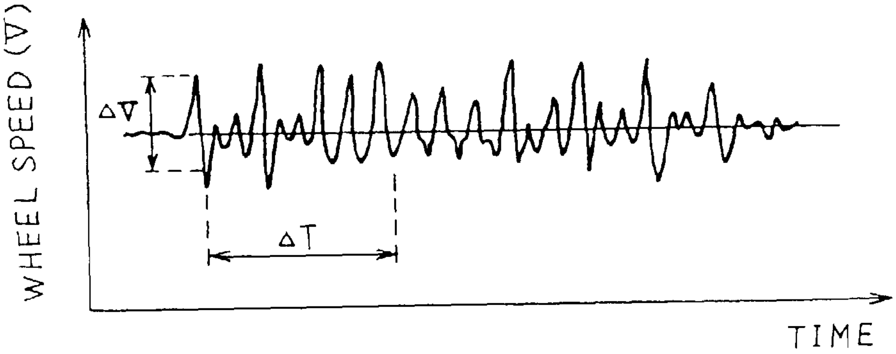

FIG.7

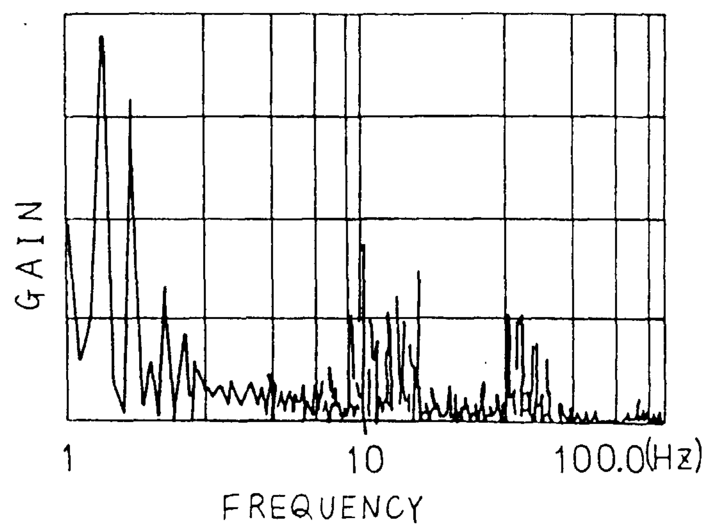
GAIN
1
10
100.0(Hz)
FREQUENCY

FIG.8

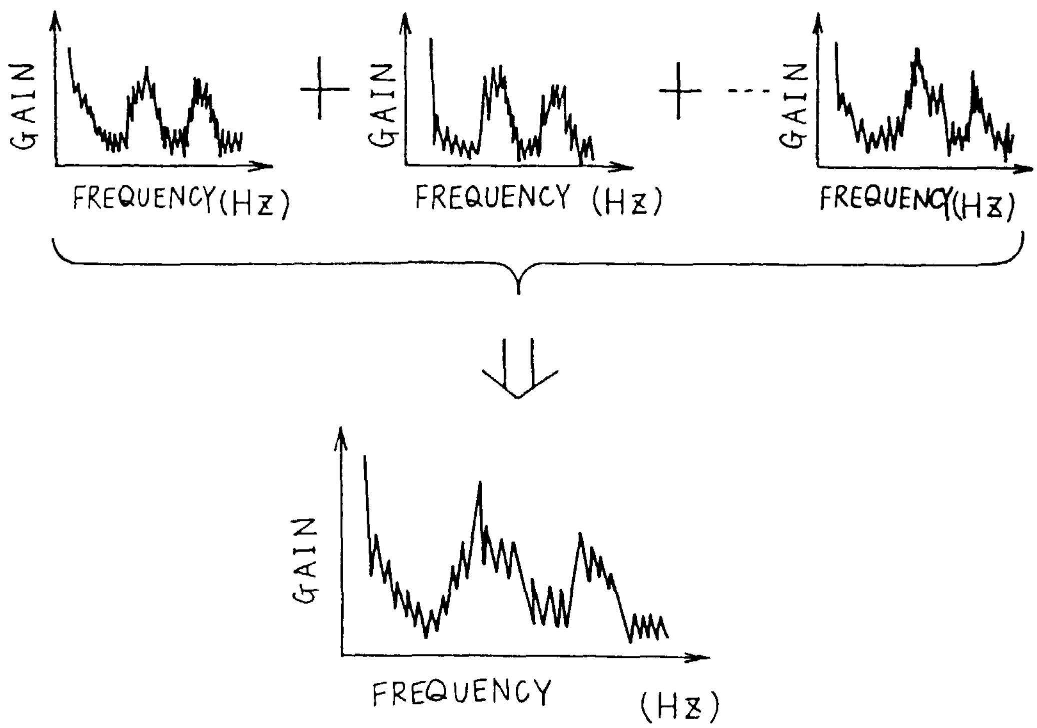
GAIN
FREQUENCY(Hz)
GAIN
FREQUENCY (Hz)
GAIN
FREQUENCY(Hz)
GAIN
FREQUENCY (Hz)

FIG.9

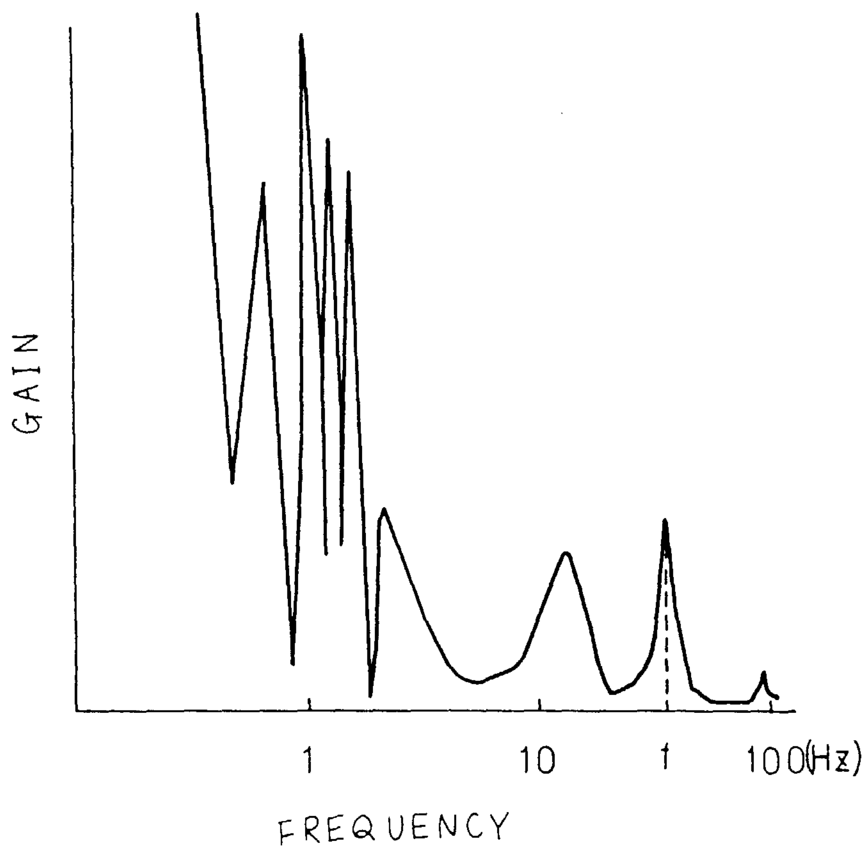

FIG.10

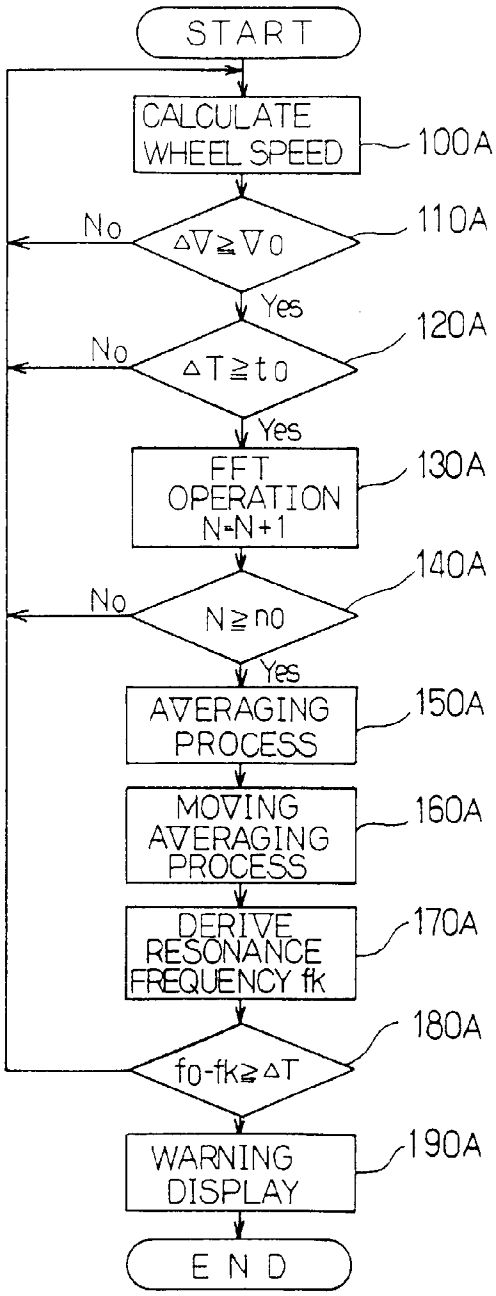


FIG.11

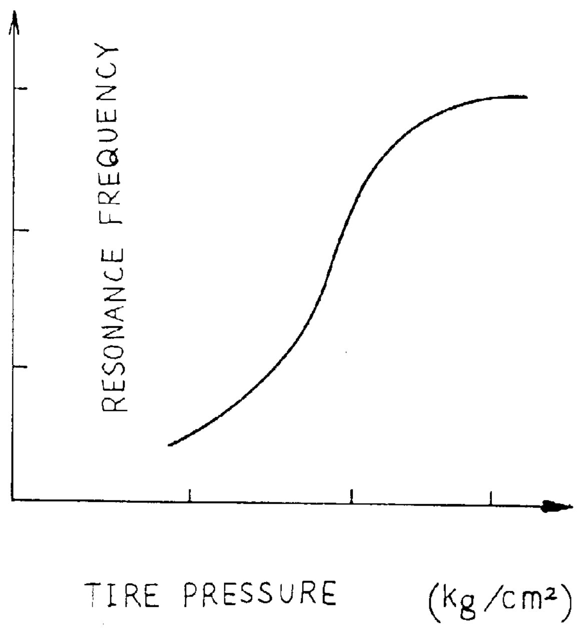


FIG.12

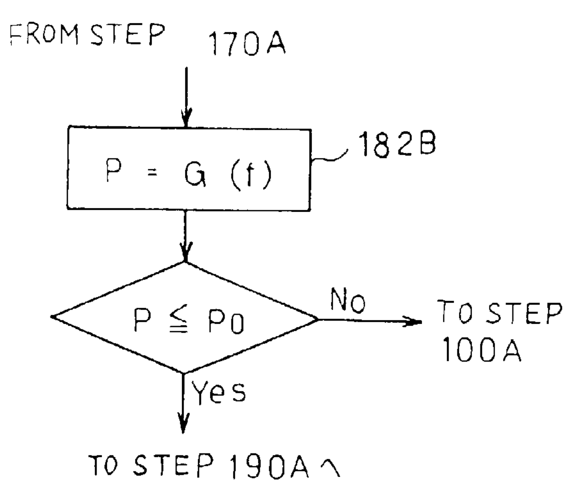

FIG.13

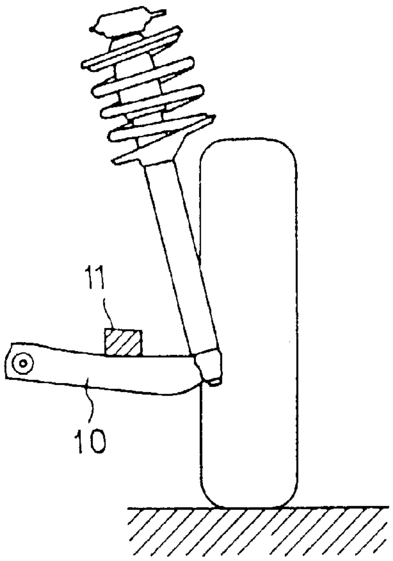


FIG.14

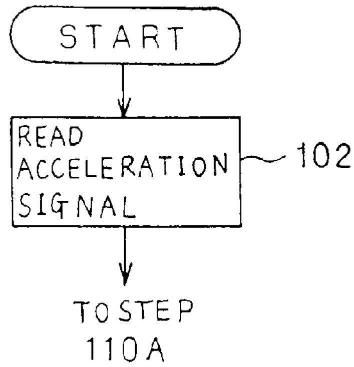


FIG.15

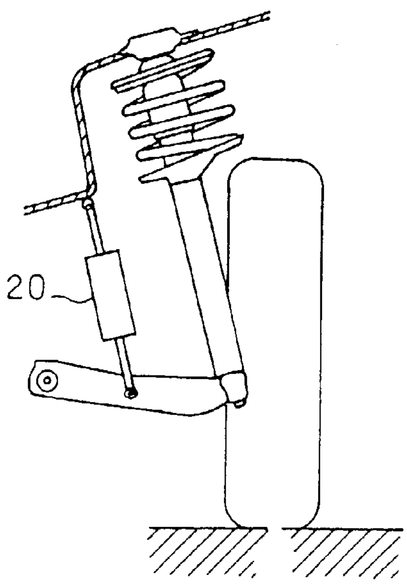


FIG.16

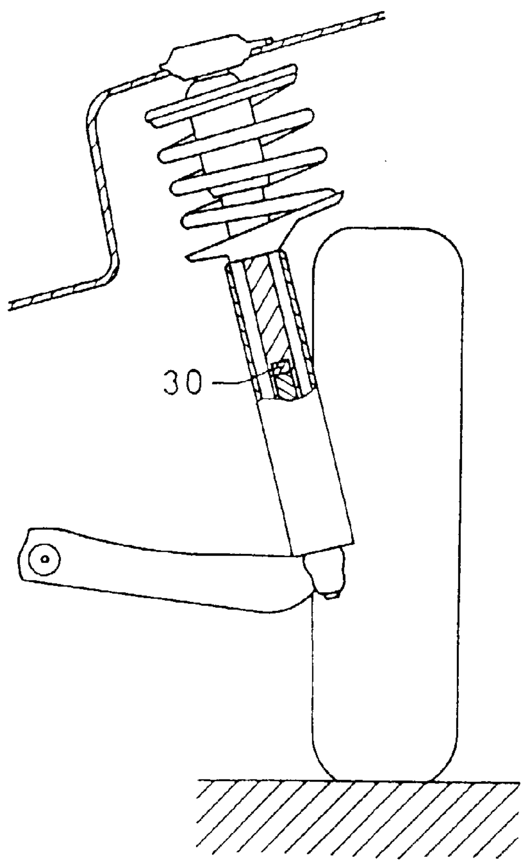

FIG.17

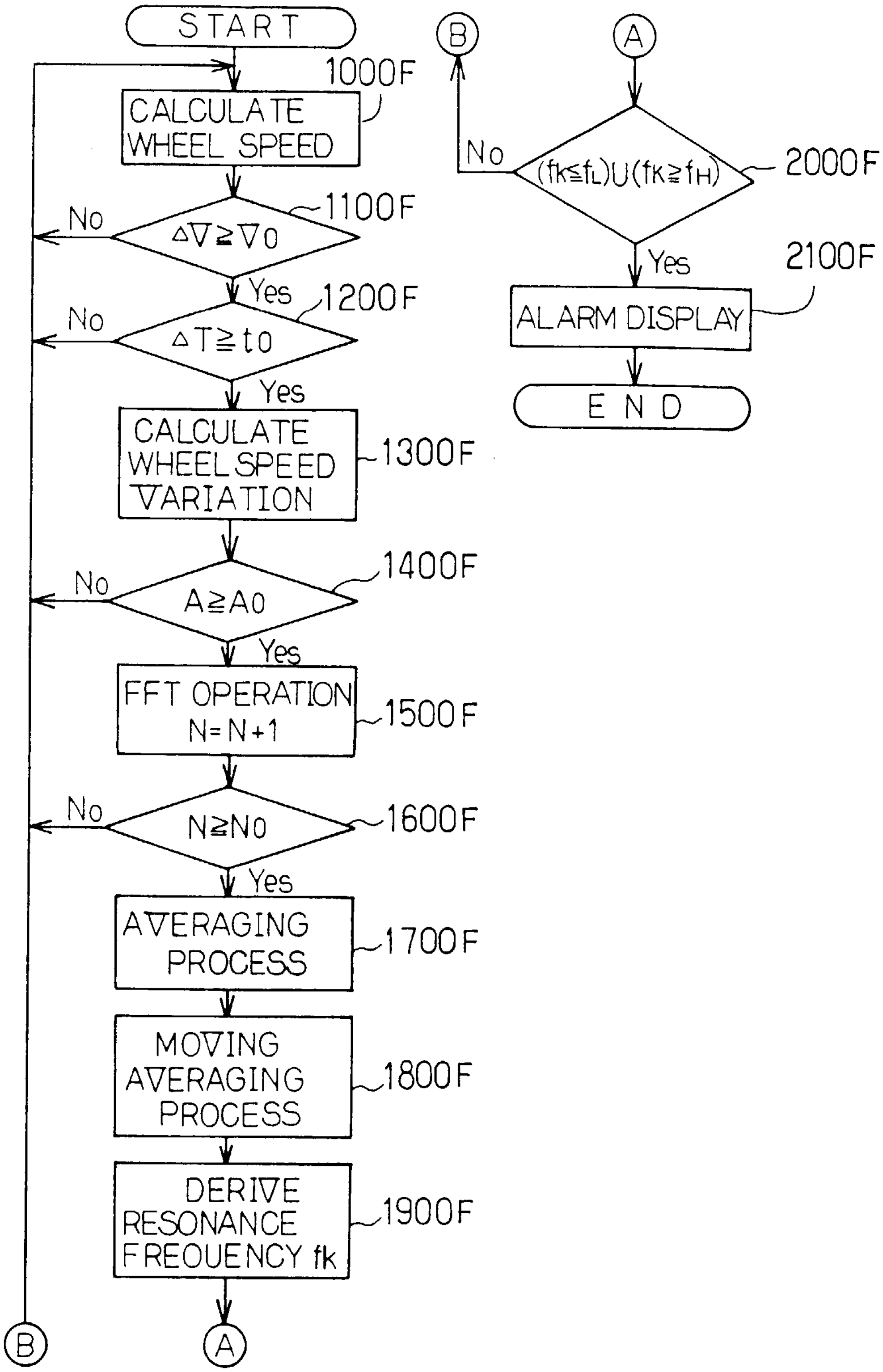
START
CALCULATE WHEEL SPEED
1000F
ΔV≧V0
1100F
No
Yes
ΔT≧t0
1200F
No
Yes
CALCULATE WHEEL SPEED VARIATION
1300F
A≧A0
1400F
No
Yes
FFT OPERATION N=N+1
1500F
N≧N0
1600F
No
Yes
AVERAGING PROCESS
1700F
MOVING AVERAGING PROCESS
1800F
DERIVE RESONANCE FREQUENCY fk
1900F
B
A
B
A
(fk≦fL)U(fk≧fH)
2000F
No
Yes
ALARM DISPLAY
2100F
END

FIG.18

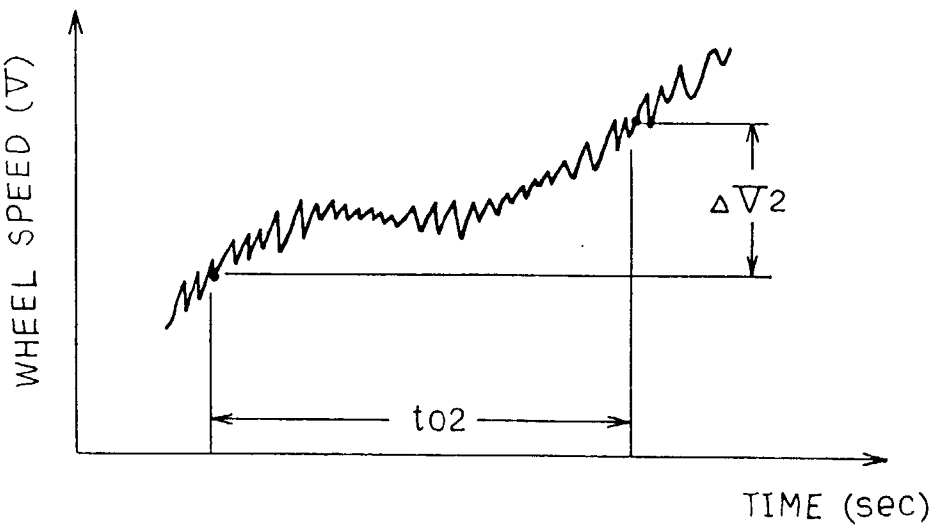
WHEEL SPEED (V)
ΔV2
to2
TIME (sec)

FIG.19

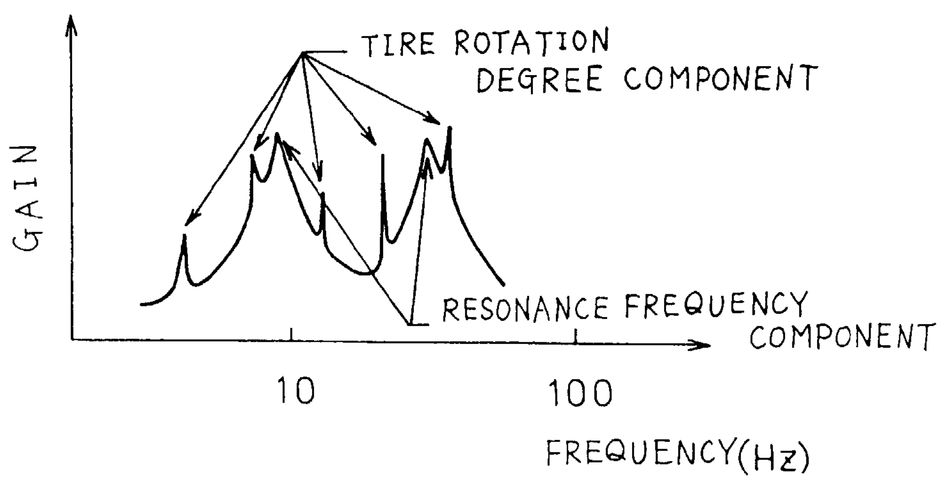
TIRE ROTATION DEGREE COMPONENT
GAIN
RESONANCE FREQUENCY COMPONENT
10
100
FREQUENCY(Hz)

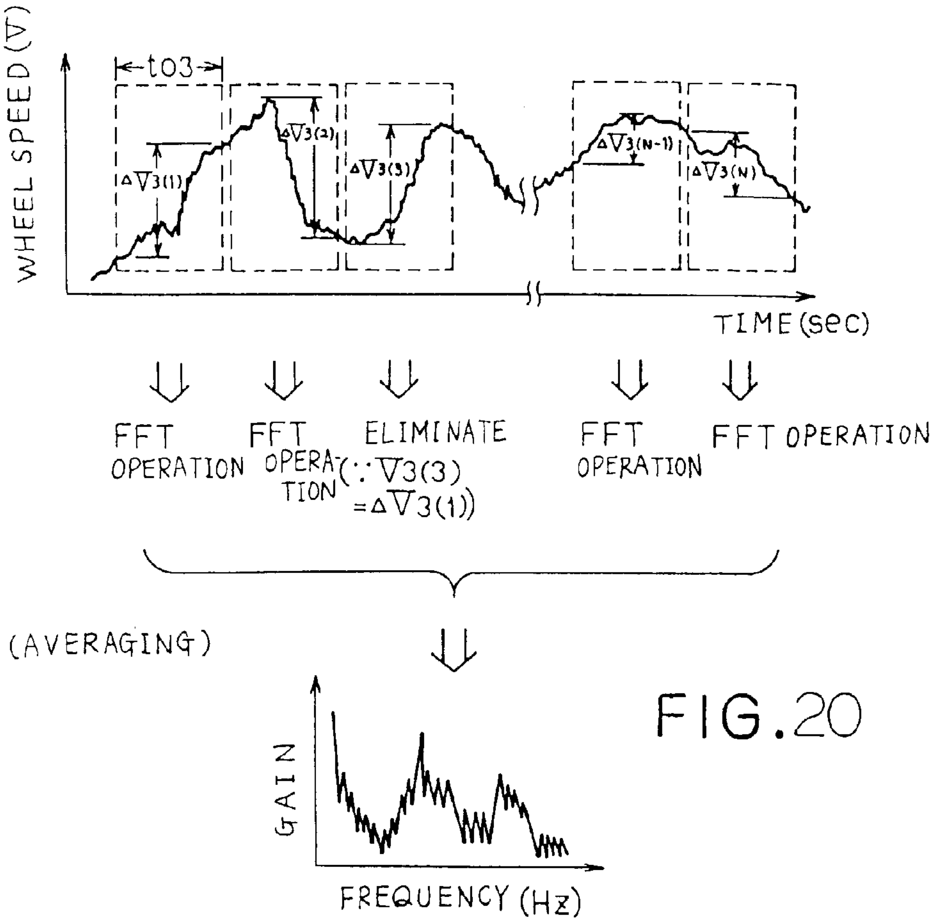
WHEEL SPEED ($\bar{V}$)
t03
$\Delta\bar{V}3(1)$
$\Delta\bar{V}3(2)$
$\Delta\bar{V}3(3)$
$\Delta\bar{V}3(N-1)$
$\Delta\bar{V}3(N)$
TIME (sec)
FFT OPERATION
FFT OPERATION
ELIMINATE (∵ $\bar{V}3(3) = \Delta\bar{V}3(1)$)
FFT OPERATION
FFT OPERATION
(AVERAGING)
GAIN
FREQUENCY (Hz)

FIG.20

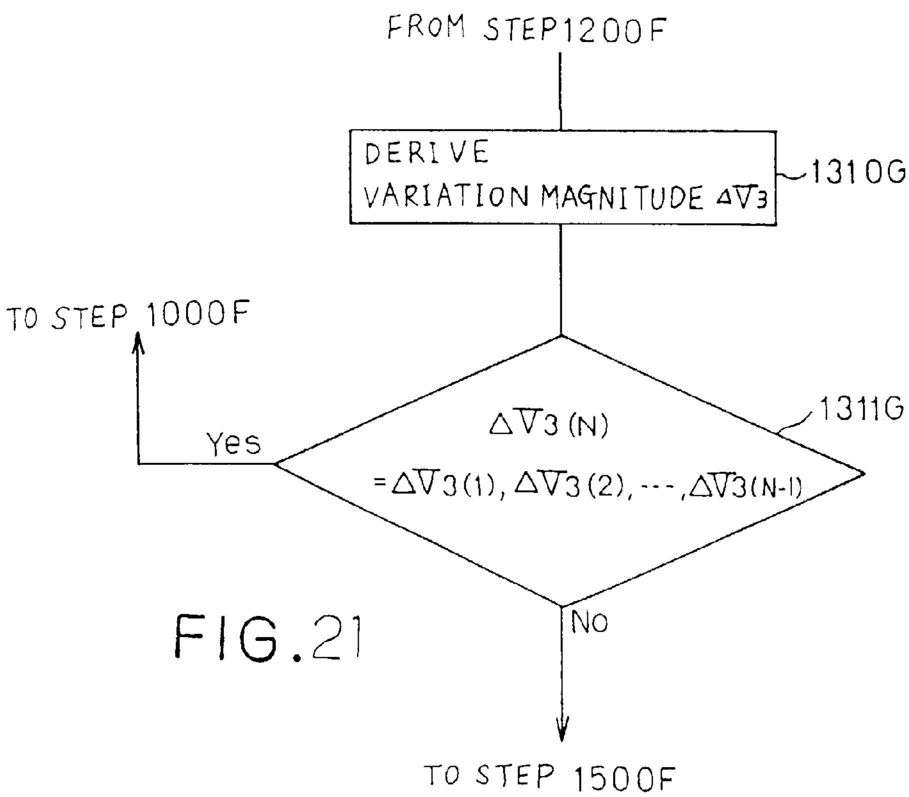
FROM STEP1200F
DERIVE VARIATION MAGNITUDE $\Delta\bar{V}3$
1310G
TO STEP 1000F
Yes
$\Delta\bar{V}3$ (N) $= \Delta\bar{V}3(1), \Delta\bar{V}3(2), \cdots, \Delta\bar{V}3(N-1)$
1311G
No
TO STEP 1500F

FIG.21

FIG. 22

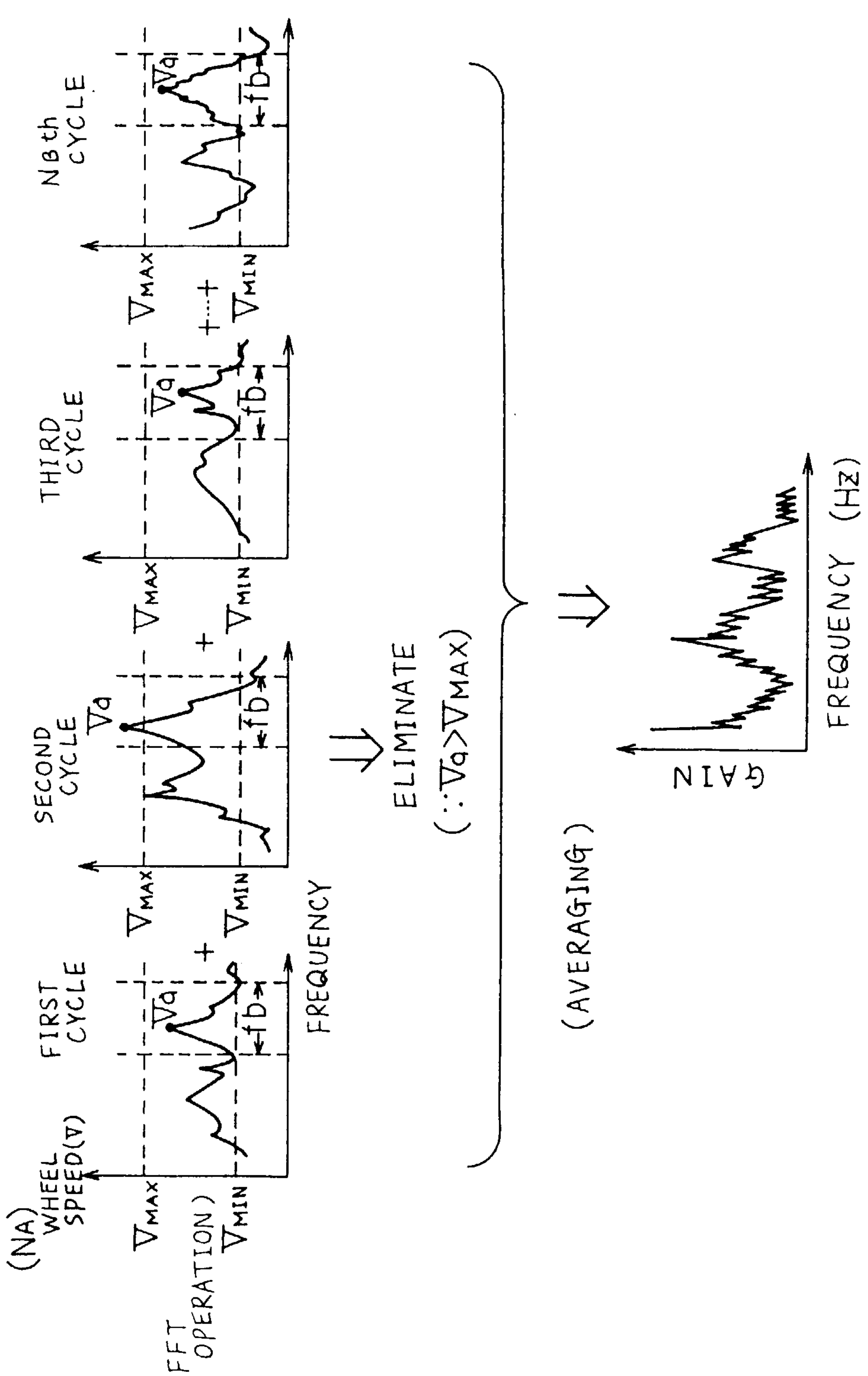
(NA)
WHEEL SPEED(V)
(FFT OPERATION)
VMAX
VMIN
FIRST CYCLE
SECOND CYCLE
THIRD CYCLE
NBth CYCLE
Va
fb
FREQUENCY
ELIMINATE
(∵Va>VMAX)
(AVERAGING)
GAIN
FREQUENCY (Hz)

FIG.23

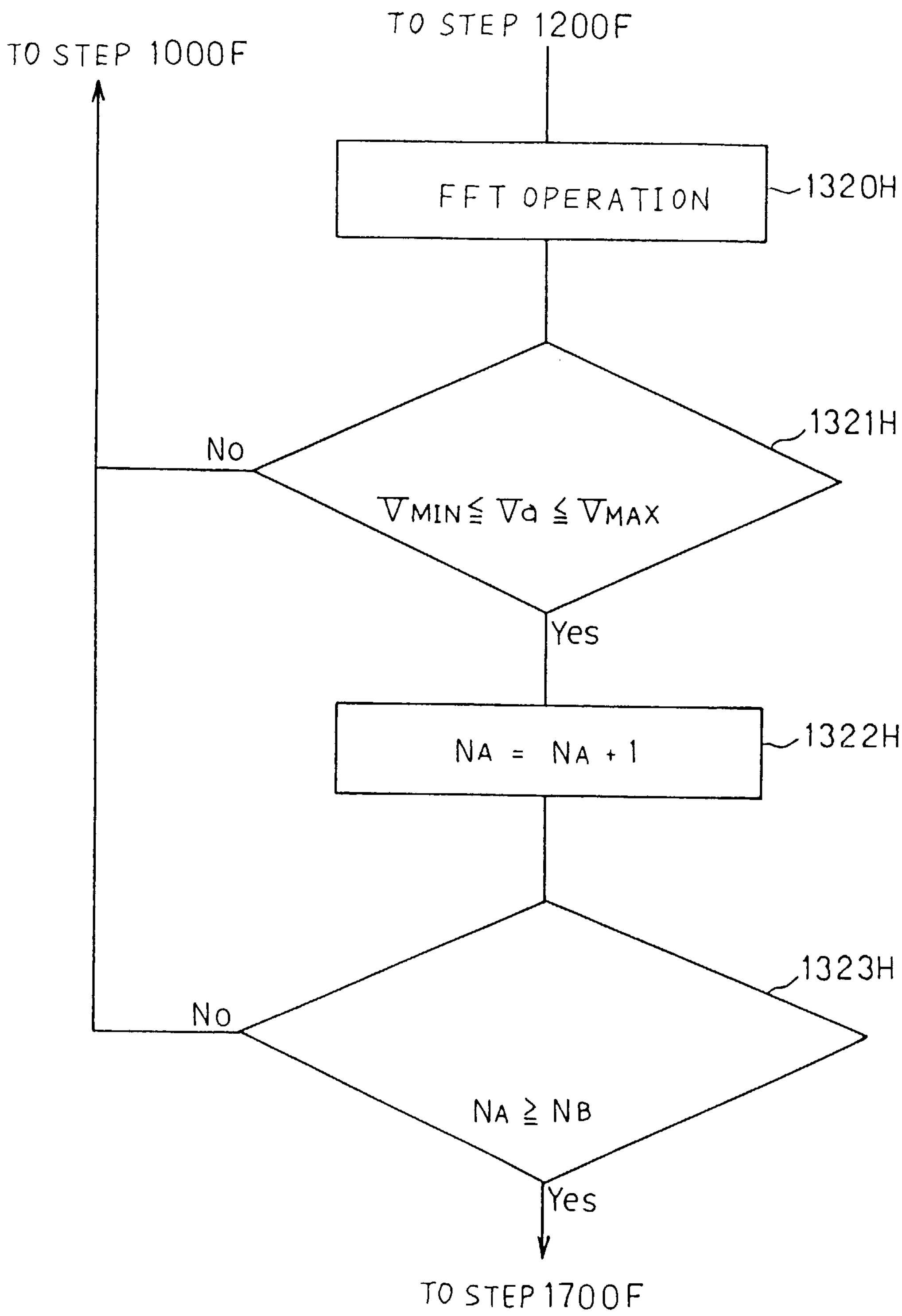
TO STEP 1200F
TO STEP 1000F
FFT OPERATION
1320H
1321H
No
∇MIN ≦ ∇a ≦ ∇MAX
Yes
NA = NA + 1
1322H
1323H
No
NA ≧ NB
Yes
TO STEP 1700F

FIG.24

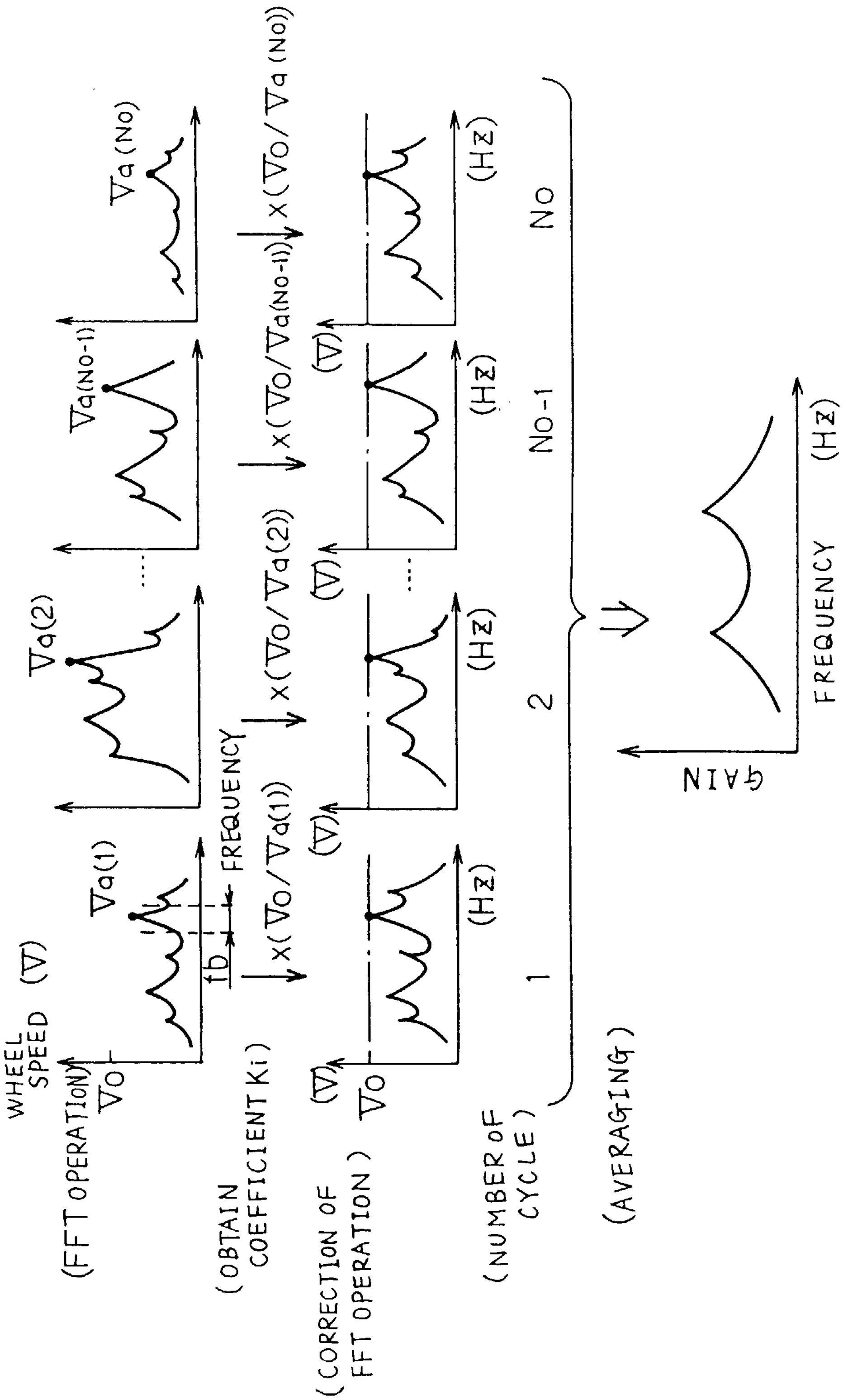
(FFT OPERATION)
WHEEL SPEED (V)
VO
Va(1)
fb
FREQUENCY
Va(2)
Va(NO-1)
Va(NO)
(OBTAIN COEFFICIENT Ki)
x(VO/Va(1))
x(VO/Va(2))
x(VO/Va(NO-1))
x(VO/Va(NO))
(CORRECTION OF FFT OPERATION)
(V)
(Hz)
(NUMBER OF CYCLE)
1
2
NO-1
NO
(AVERAGING)
GAIN
FREQUENCY
(Hz)

FIG.25

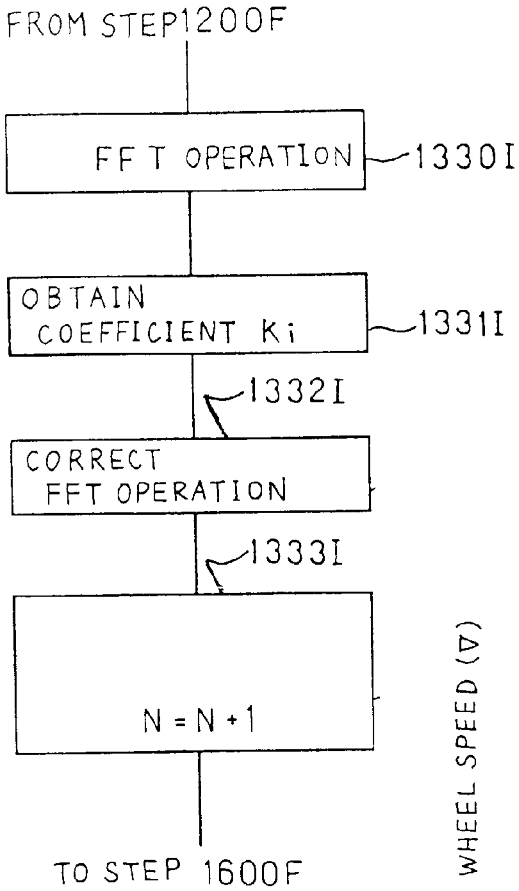


FIG.26 (a)

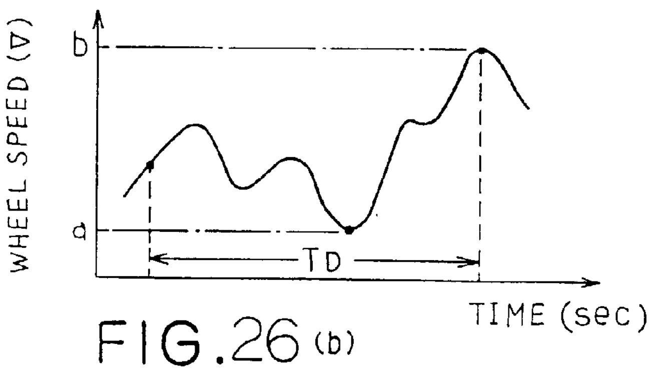


FIG.26 (b)

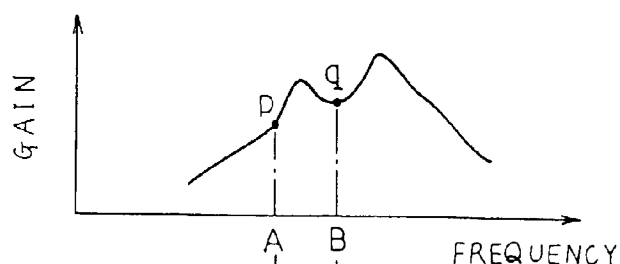


FIG.26 (c)

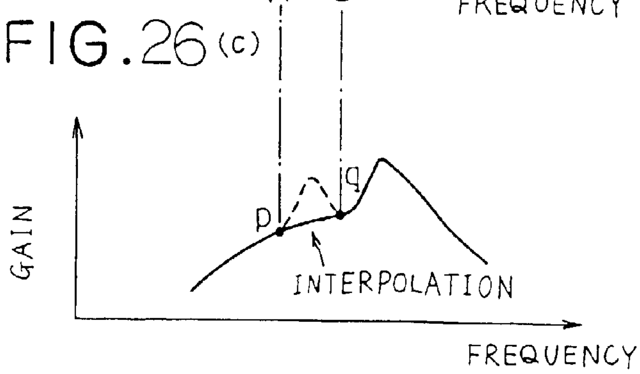

FIG.27

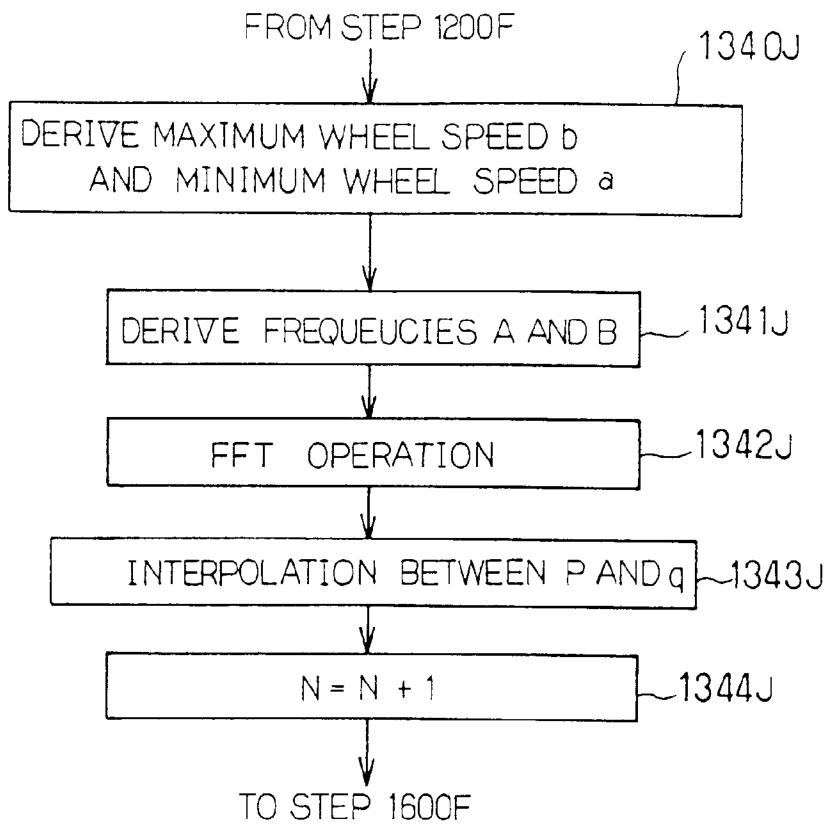


FIG.28(a)

FIG.28(b)

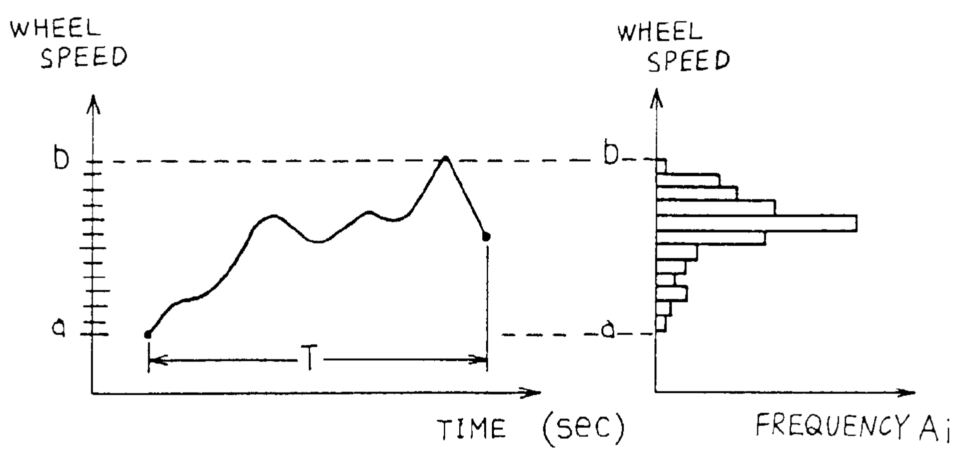

FIG.29

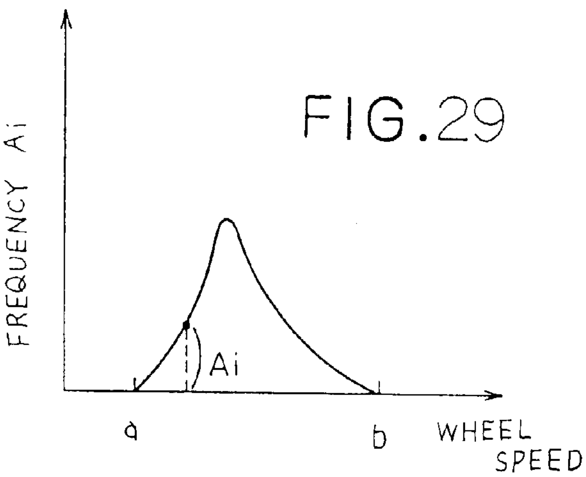


FIG.30

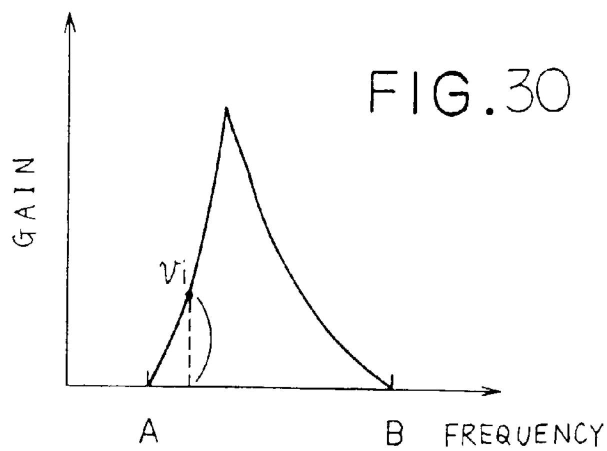


FIG.31

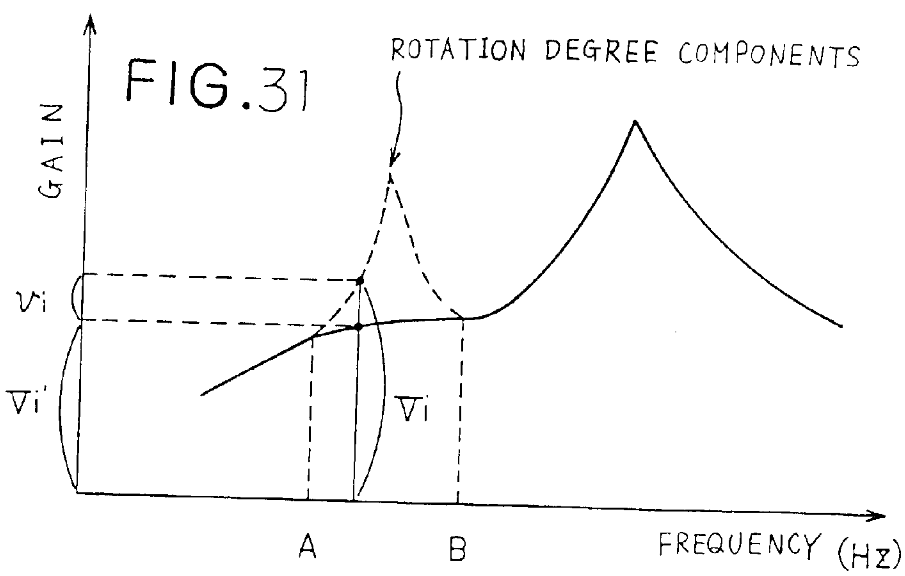

FIG.32

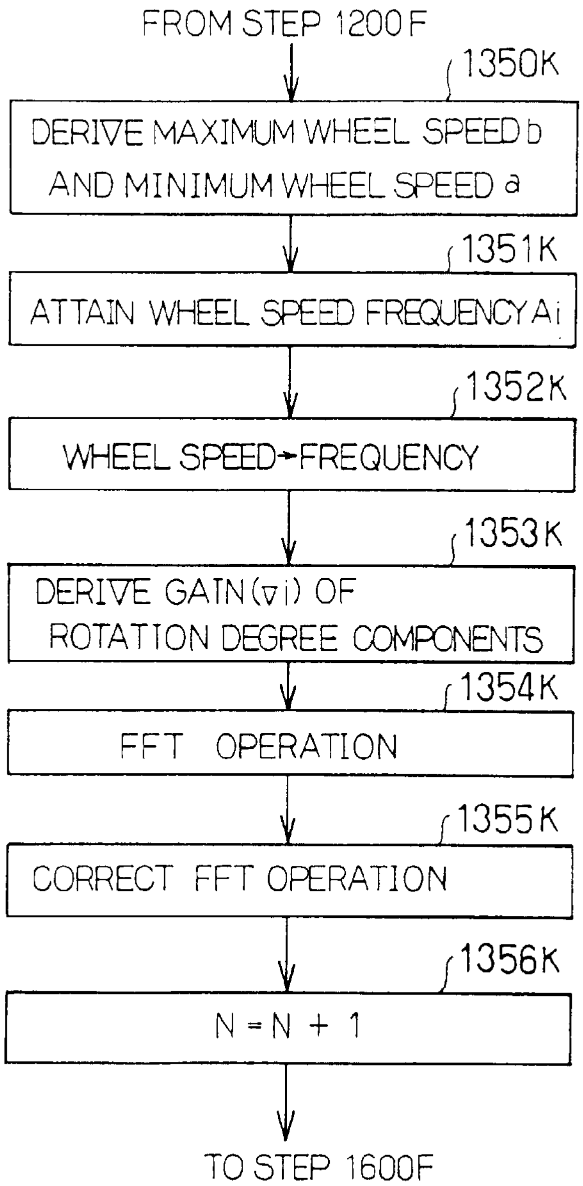


FIG.33 (a) FIG.33 (b) FIG.33 (c)

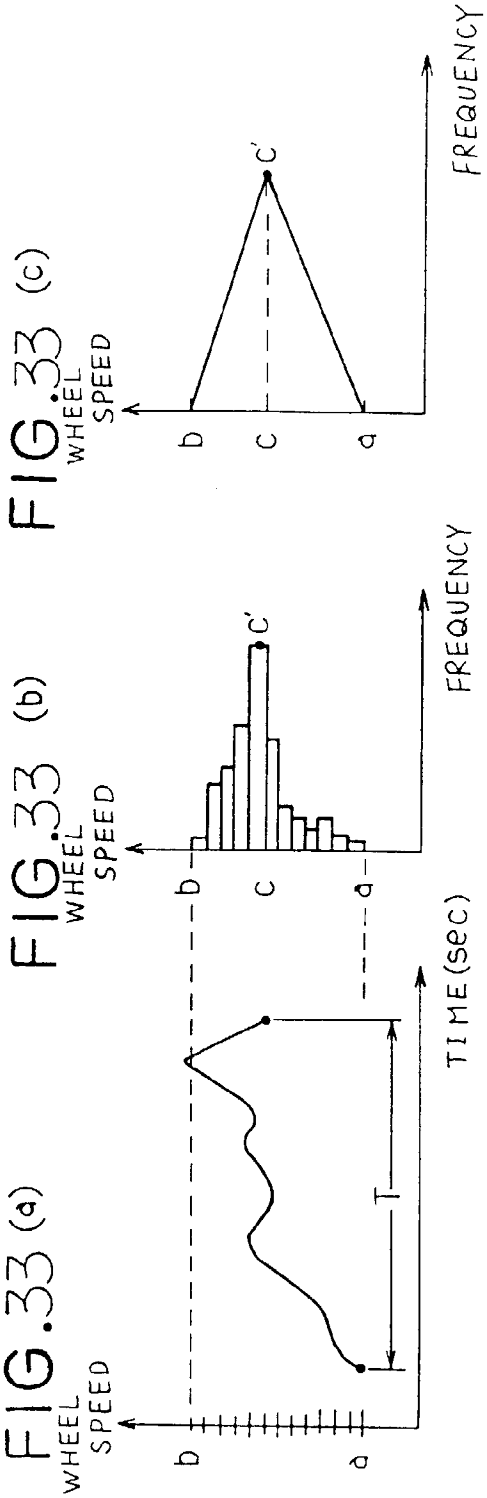

FIG.37

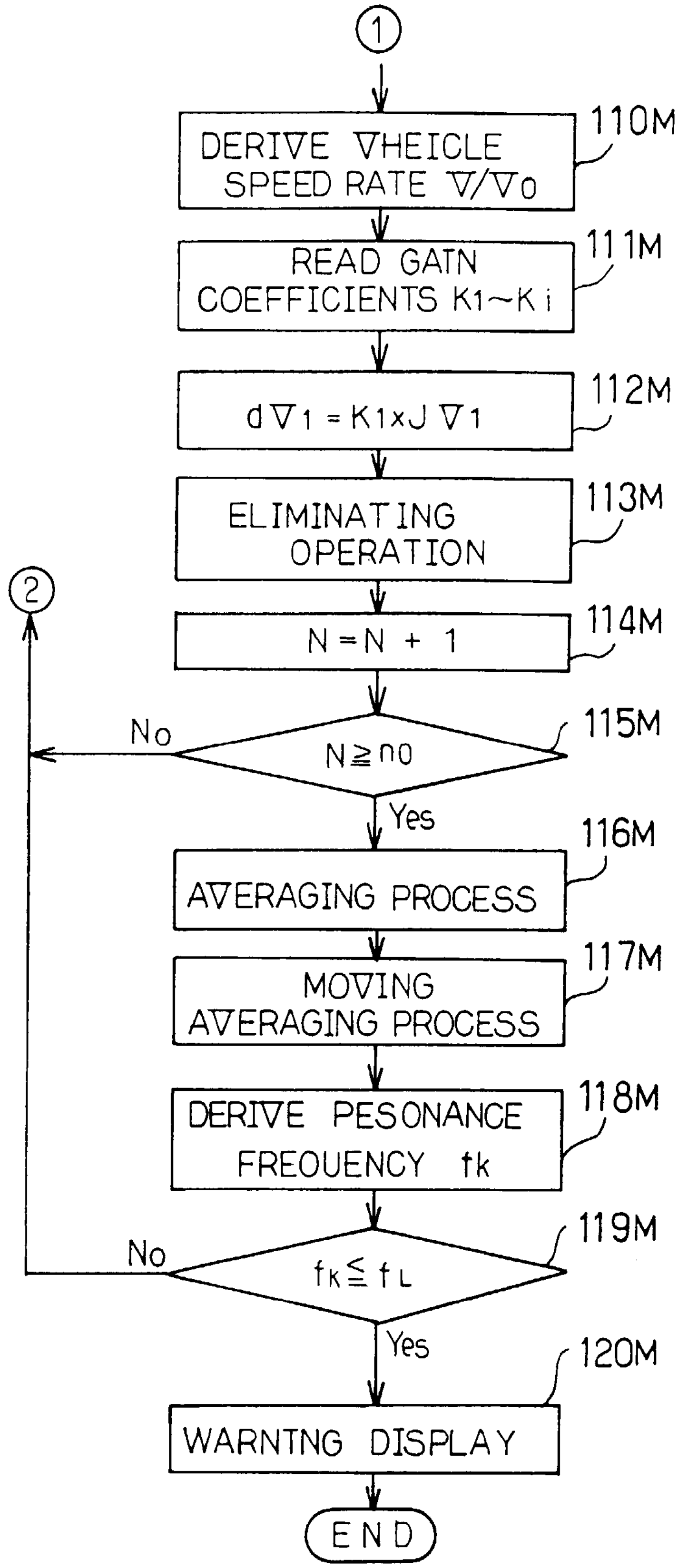
1
DERIVE VHEICLE SPEED RATE V/V0
110M
READ GAIN COEFFICIENTS K1~Ki
111M
dV1 = K1xJ V1
112M
ELIMINATING OPERATION
113M
N = N + 1
114M
N≧n0
115M
No
2
Yes
AVERAGING PROCESS
116M
MOVING AVERAGING PROCESS
117M
DERIVE PESONANCE FREQUENCY fk
118M
fK≦fL
119M
No
Yes
WARNING DISPLAY
120M
END

FIG.34

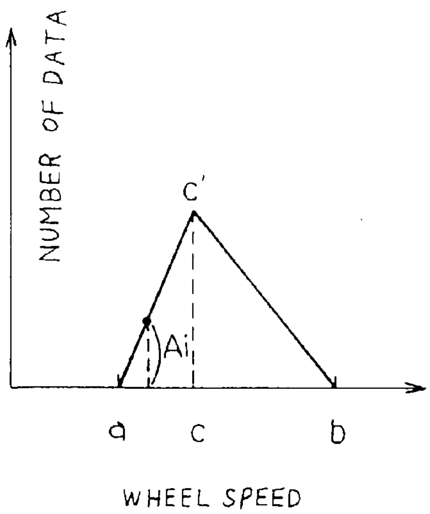


FIG.36

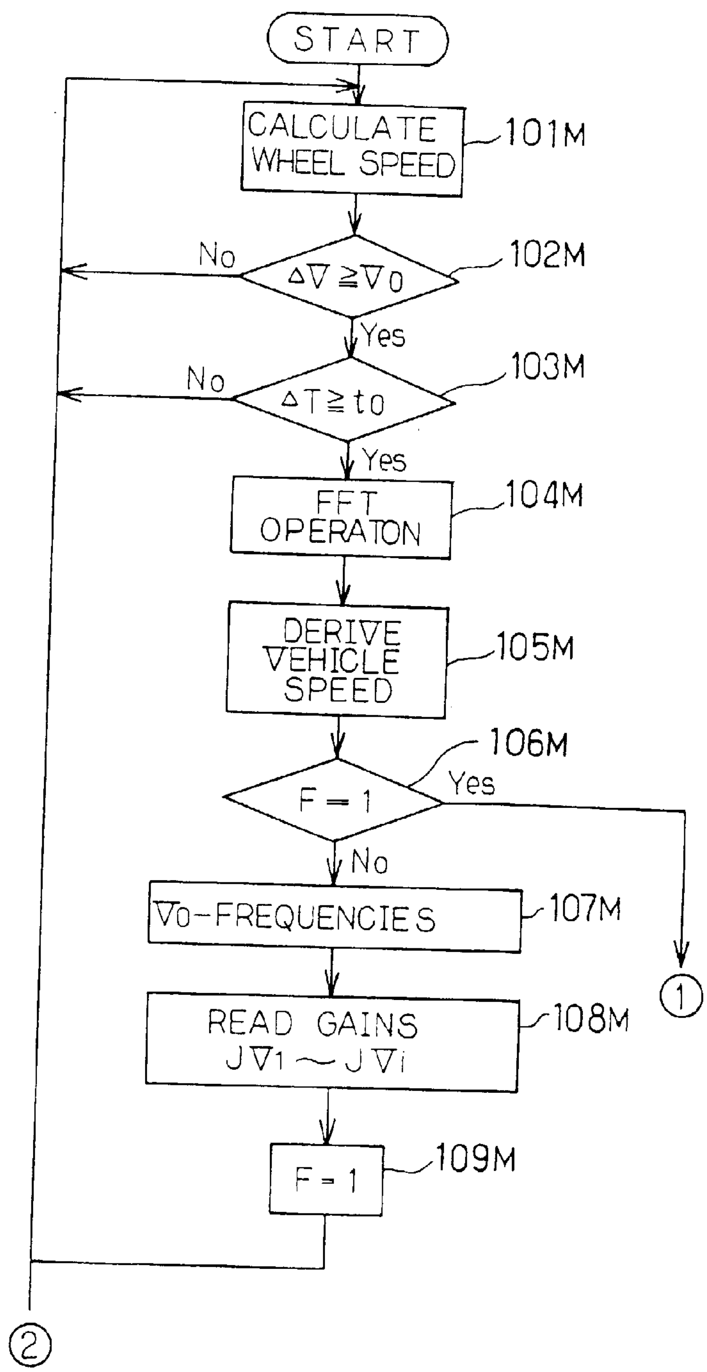


FIG.35

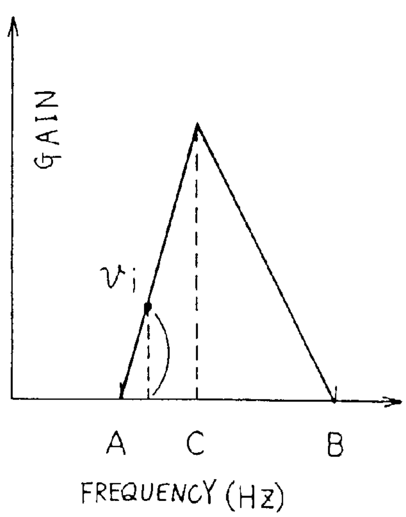

FIG.38

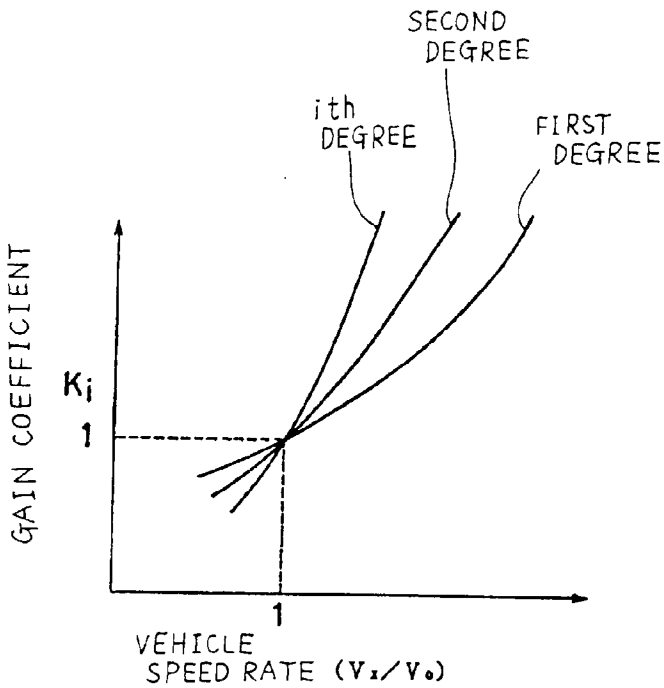
SECOND DEGREE
ith DEGREE
FIRST DEGREE
GAIN COEFFICIENT
Ki
1
1
VEHICLE SPEED RATE (Vx/V0)

FIG.39

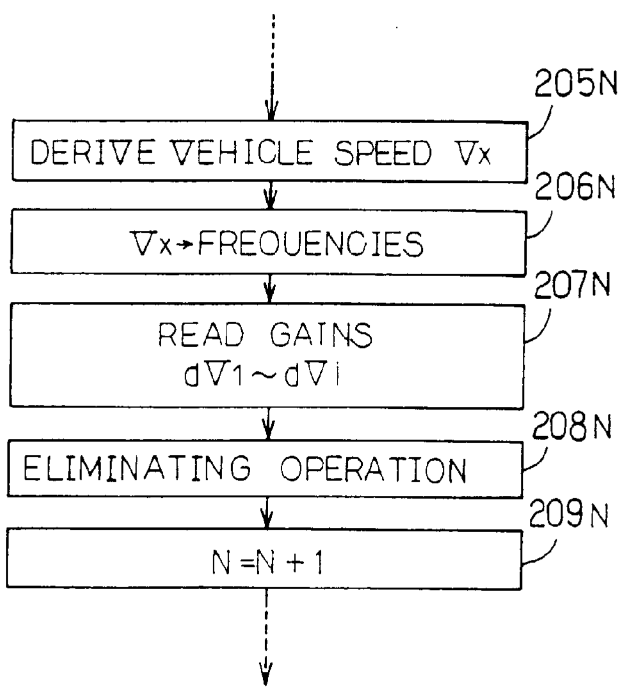
205N
DERIVE VEHICLE SPEED Vx
206N
Vx→FREQUENCIES
207N
READ GAINS dV1~dVi
208N
ELIMINATING OPERATION
209N
N=N+1

FIG.42

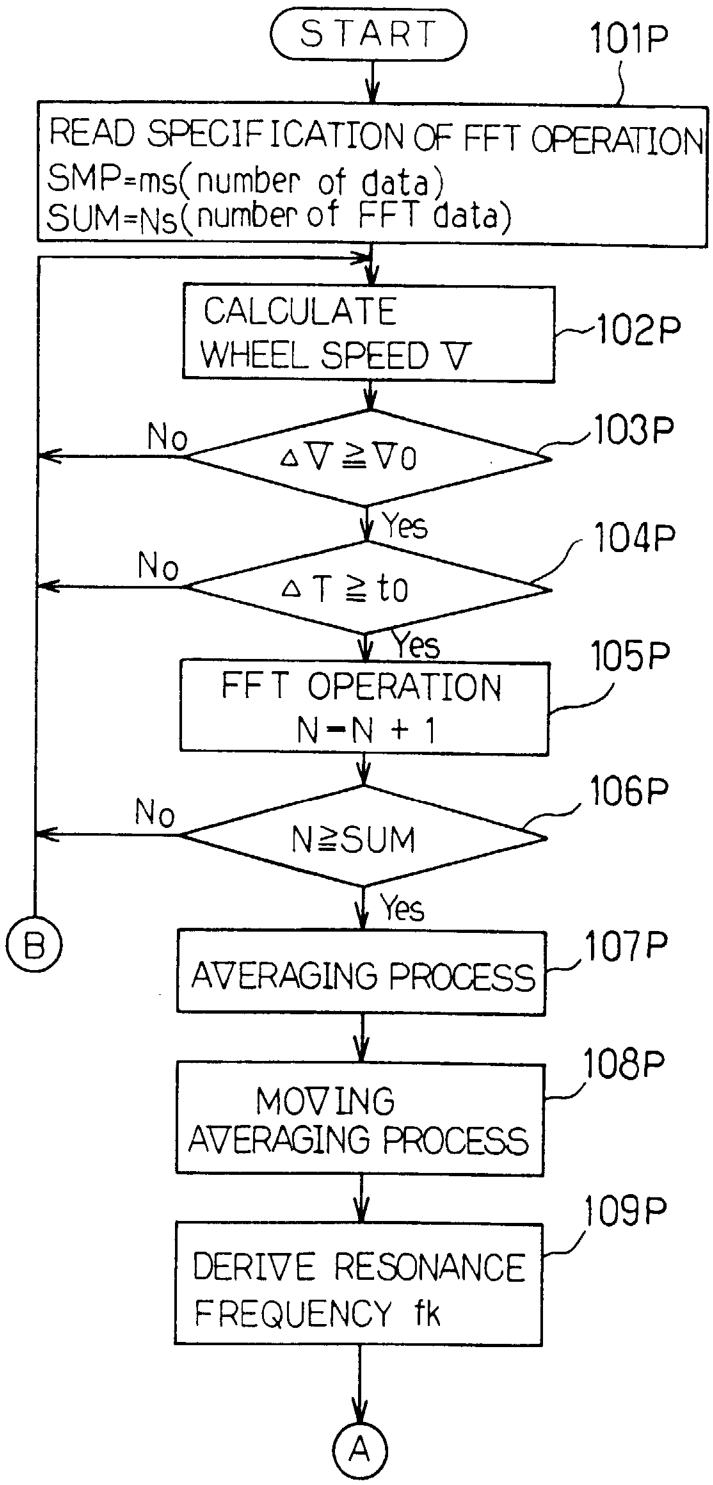
START
101P
READ SPECIFICATION OF FFT OPERATION
SMP=ms(number of data)
SUM=Ns(number of FFT data)
CALCULATE WHEEL SPEED V
102P
ΔV ≧ V0
103P
No
Yes
ΔT ≧ t0
104P
No
Yes
FFT OPERATION
N←N + 1
105P
N≧SUM
106P
No
Yes
B
AVERAGING PROCESS
107P
MOVING AVERAGING PROCESS
108P
DERIVE RESONANCE FREQUENCY fk
109P
A

FIG.43

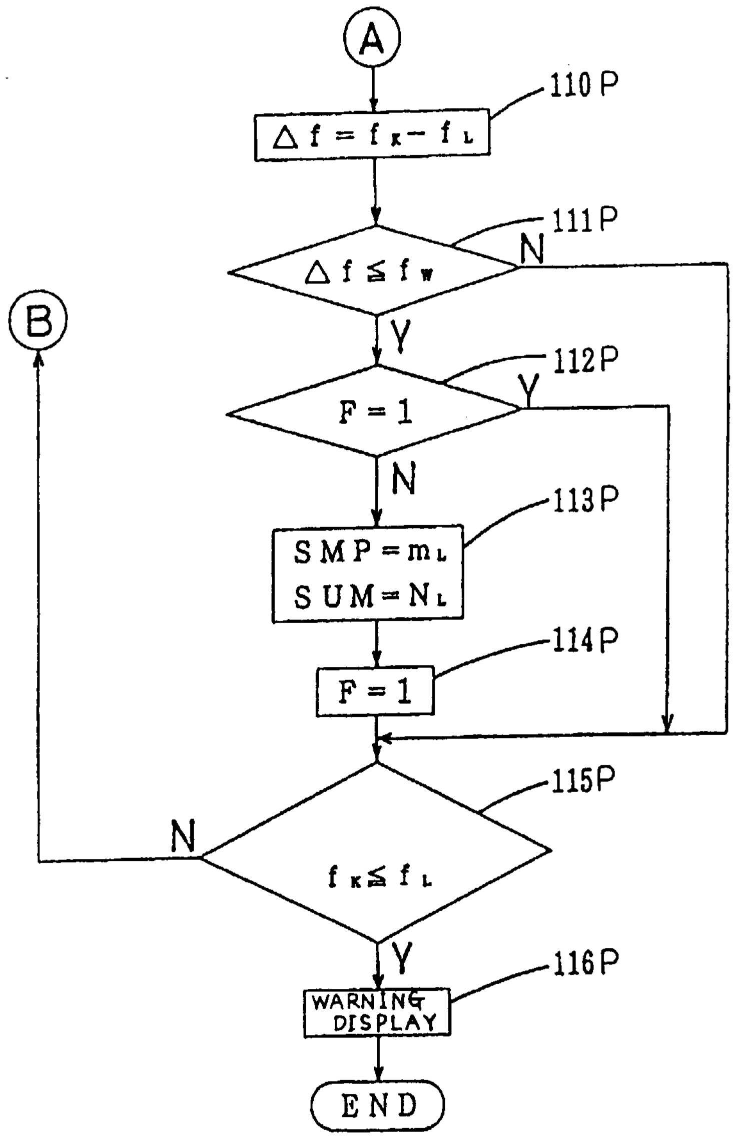
A
110P
△f = f_K − f_L
111P
△f ≦ f_W
N
Y
B
112P
F = 1
Y
N
113P
SMP = m_L
SUM = N_L
114P
F = 1
115P
N
f_K ≦ f_L
Y
116P
WARNING DISPLAY
END

FIG.44

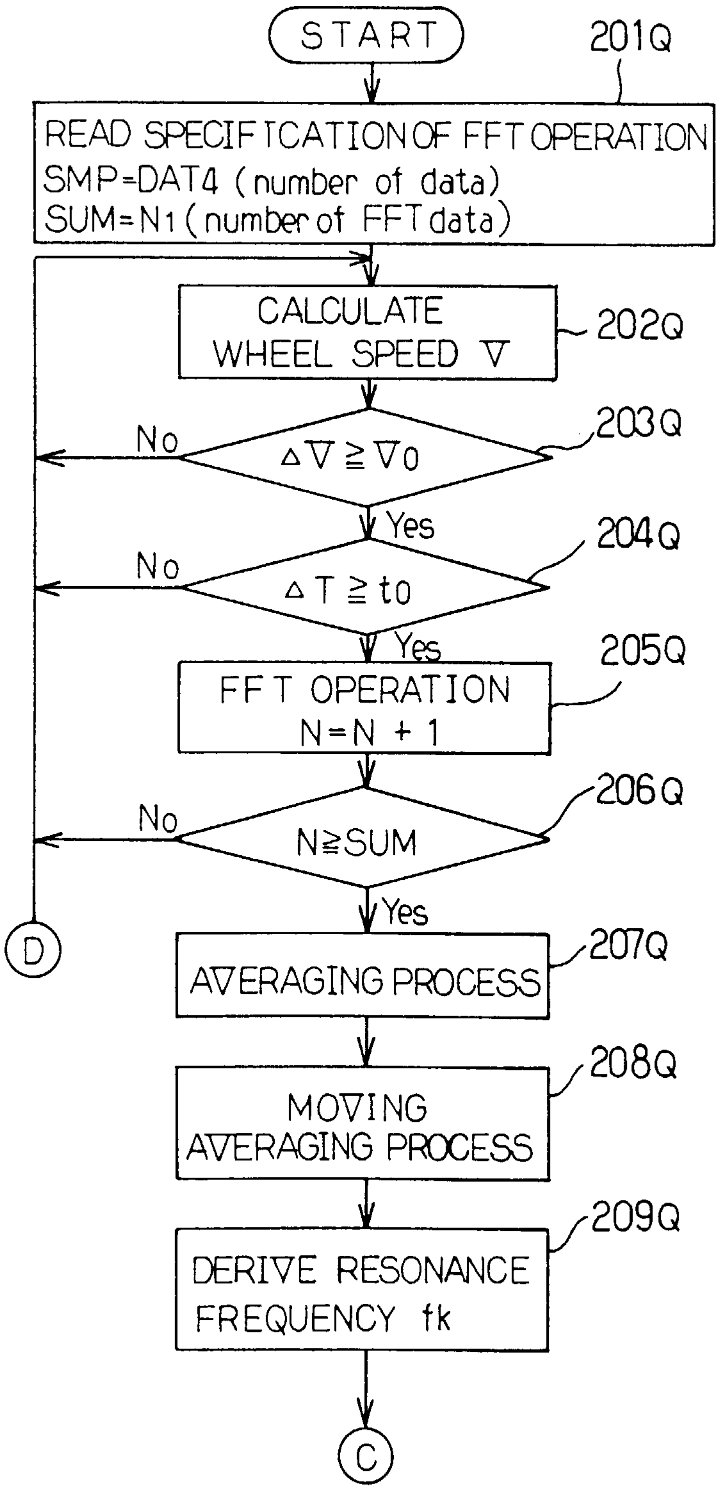
START
201Q
READ SPECIFICATION OF FFT OPERATION
SMP=DAT4 (number of data)
SUM=N1 (number of FFT data)
CALCULATE WHEEL SPEED V
202Q
ΔV ≧ V0
203Q
No
Yes
ΔT ≧ t0
204Q
No
Yes
FFT OPERATION
N=N + 1
205Q
N≧SUM
206Q
No
Yes
D
AVERAGING PROCESS
207Q
MOVING AVERAGING PROCESS
208Q
DERIVE RESONANCE FREQUENCY fk
209Q
C

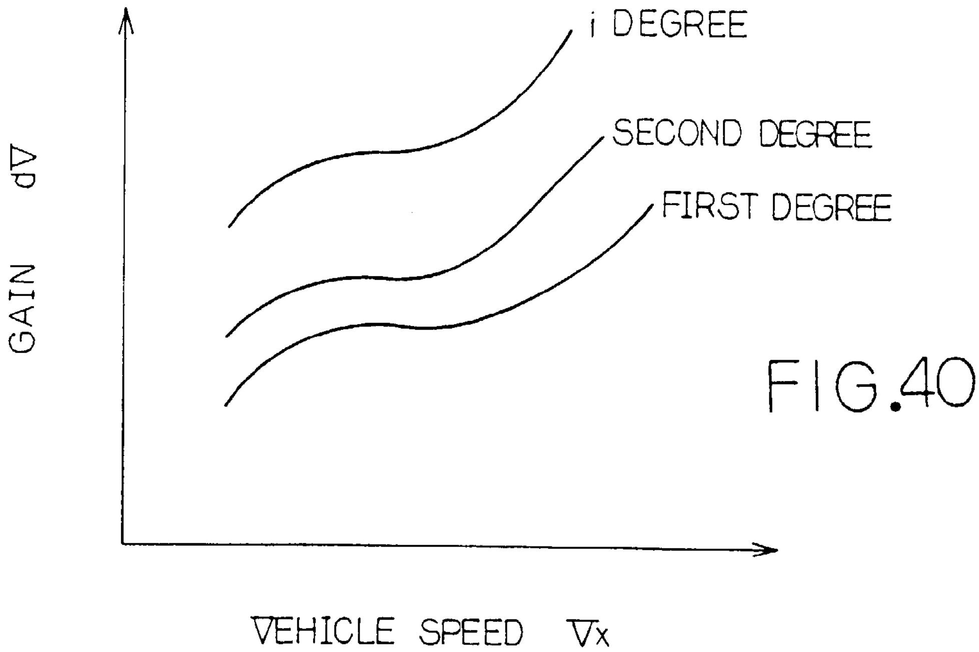
i DEGREE
SECOND DEGREE
FIRST DEGREE
GAIN dV
VEHICLE SPEED Vx

FIG.40

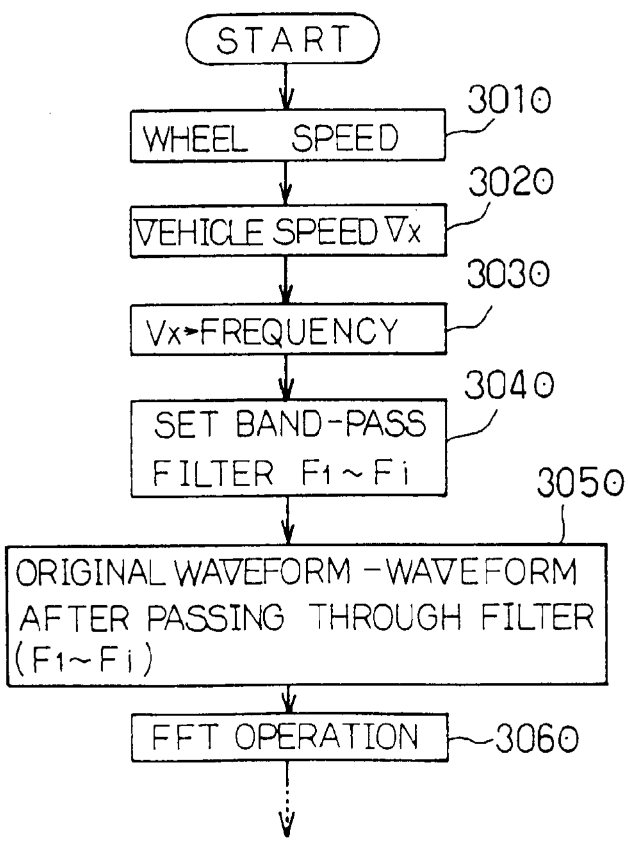
START
WHEEL SPEED
3010
VEHICLE SPEED Vx
3020
Vx→FREQUENCY
3030
SET BAND-PASS FILTER F1～Fi
3040
ORIGINAL WAVEFORM -WAVEFORM AFTER PASSING THROUGH FILTER (F1～Fi)
3050
FFT OPERATION
3060

FIG.41

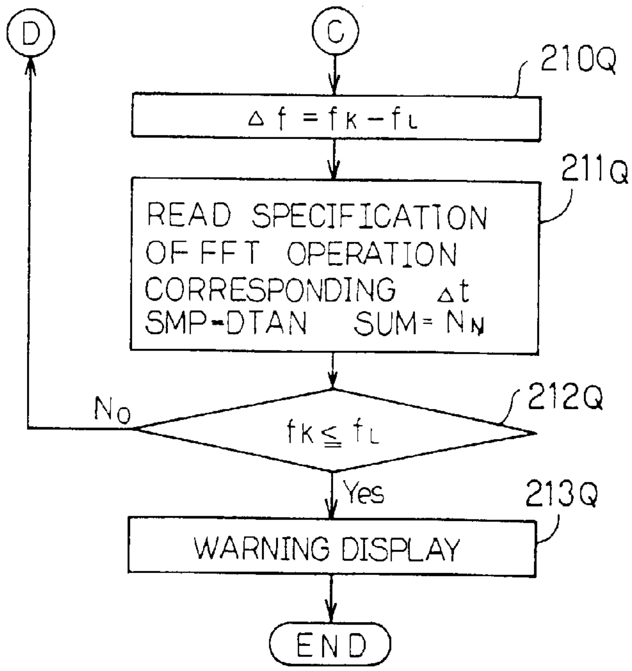


FIG.45

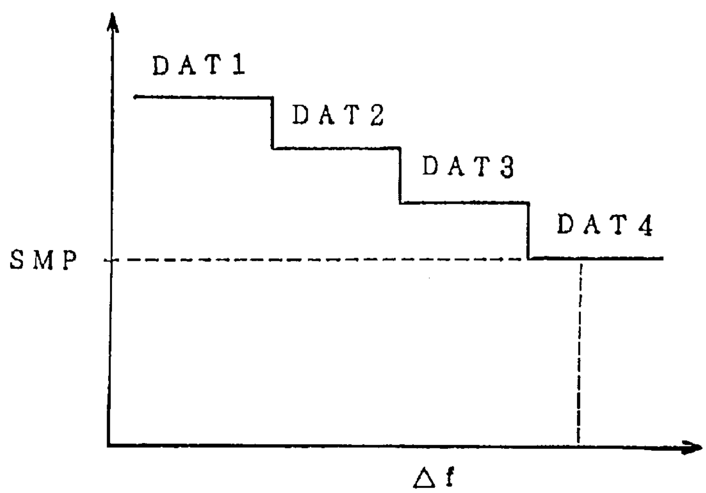


FIG.46

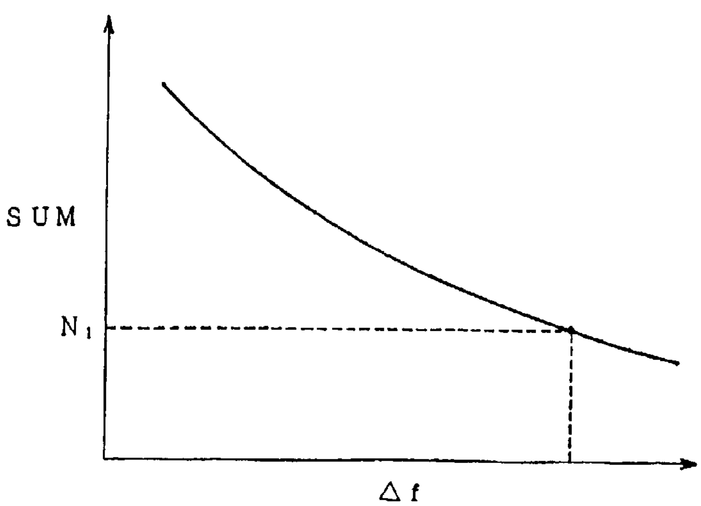


FIG.47

FIG.48

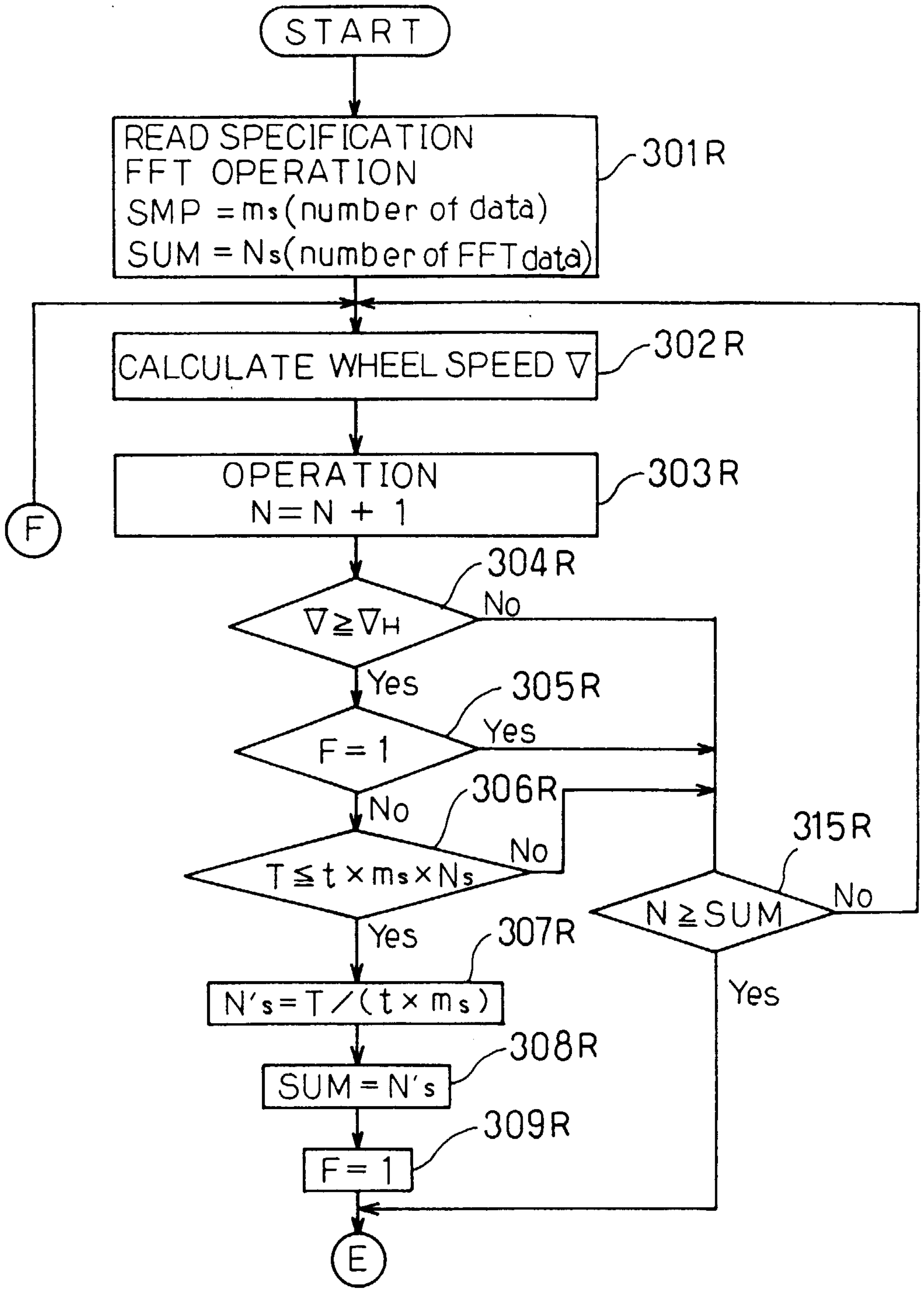
START
READ SPECIFICATION
FFT OPERATION
SMP = ms(number of data)
SUM = Ns(number of FFT data)
301R
CALCULATE WHEEL SPEED ∇
302R
OPERATION
N=N + 1
303R
F
∇≧∇H
304R
No
Yes
F=1
305R
Yes
No
306R
T≦t×ms×Ns
No
Yes
307R
N's=T/(t×ms)
308R
SUM=N's
309R
F=1
E
315R
N≧SUM
No
Yes

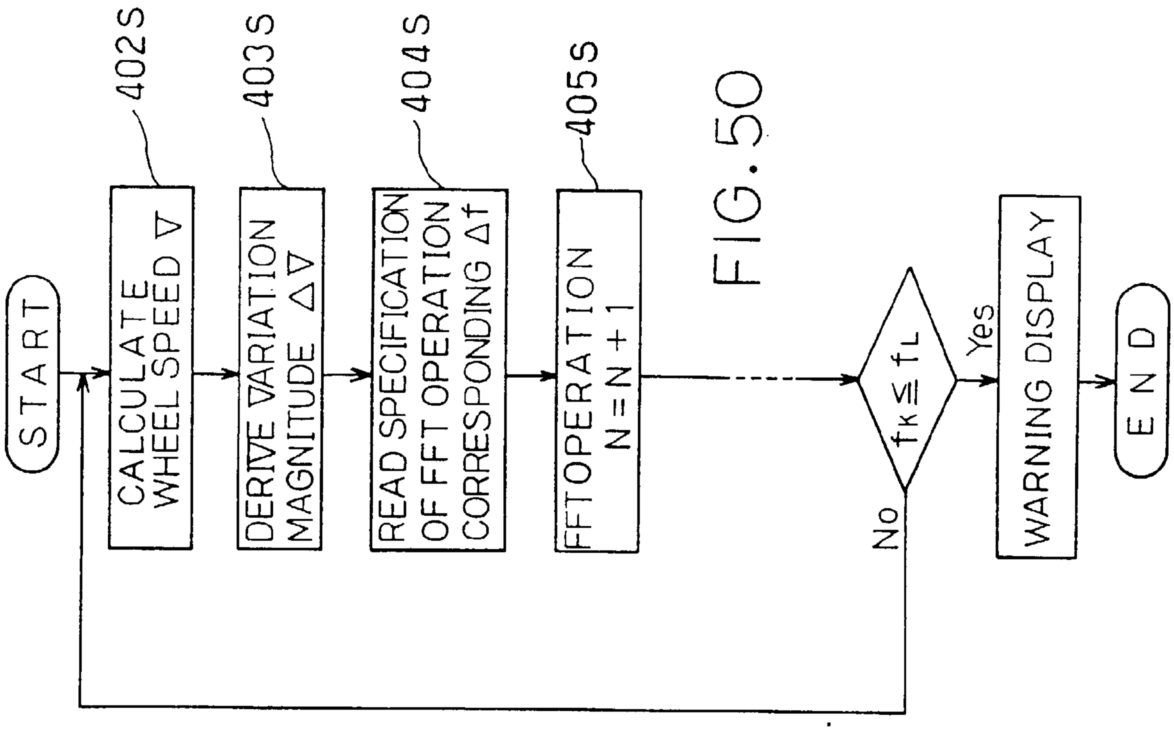
START
CALCULATE WHEEL SPEED V
402S
DERIVE VARIATION MAGNITUDE ΔV
403S
READ SPECIFICATION OF FFT OPERATION CORRESPONDING Δf
404S
FFTOPERATION N = N + 1
405S
$f_K \leqq f_L$
Yes
No
WARNING DISPLAY
END

FIG. 50

FIG.49

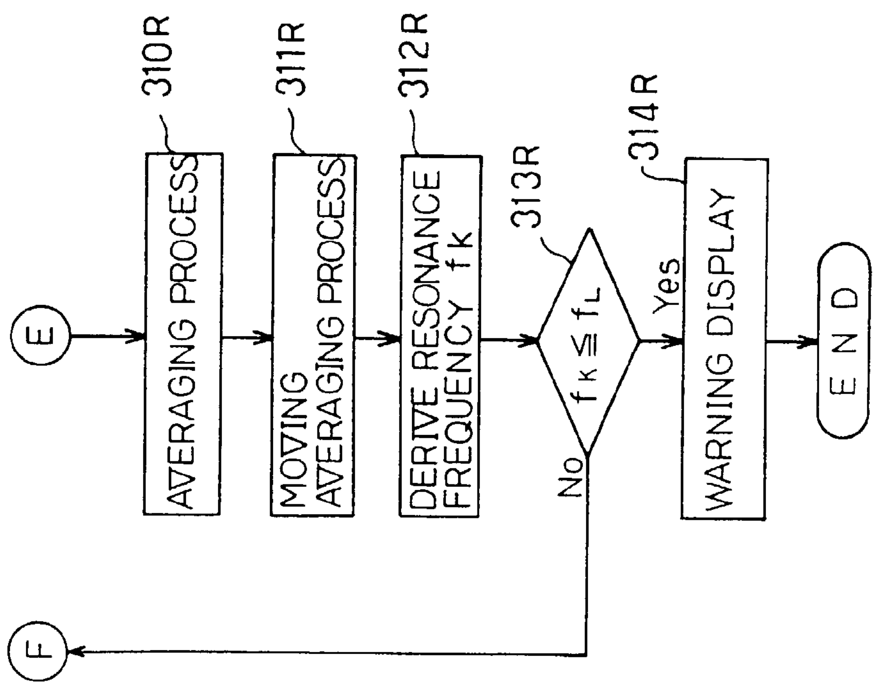
E
AVERAGING PROCESS
310R
MOVING AVERAGING PROCESS
311R
DERIVE RESONANCE FREQUENCY fk
312R
$f_K \leqq f_L$
313R
Yes
No
WARNING DISPLAY
314R
END
F

FIG.51 (a)

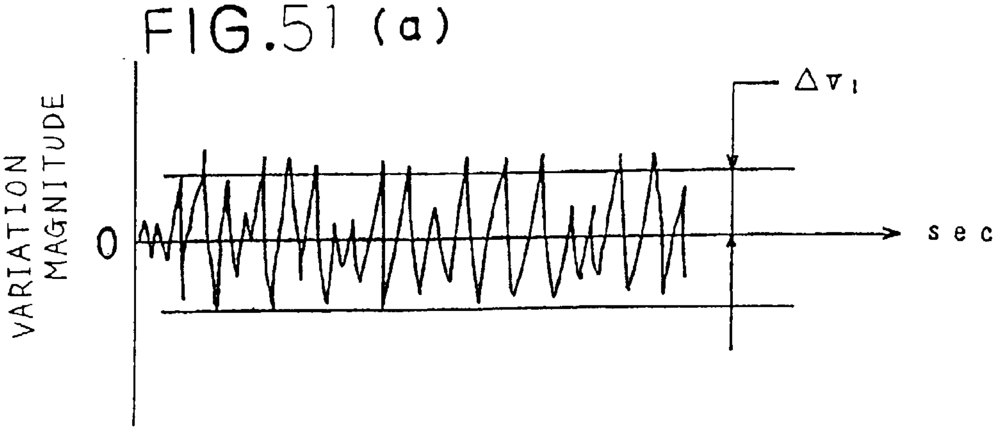


FIG.51 (b)

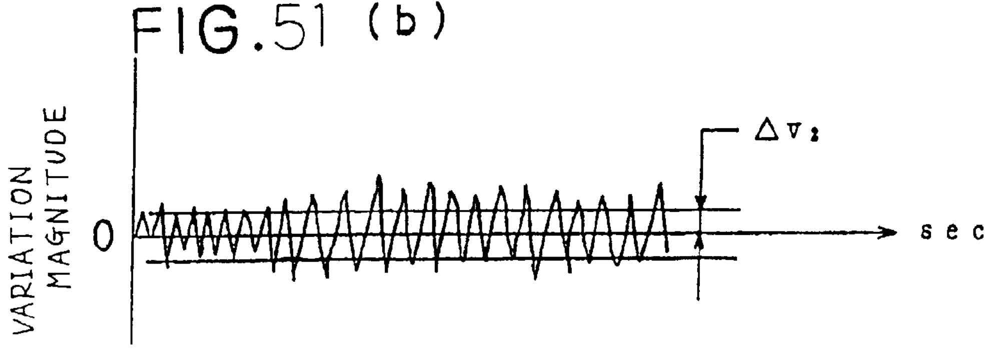


FIG.52

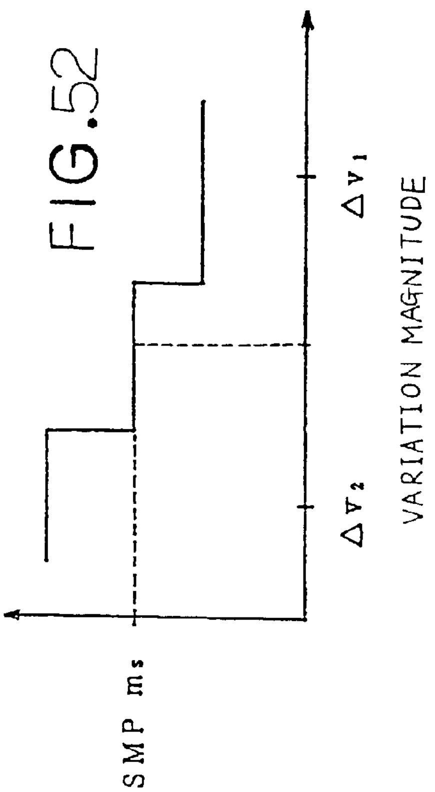


FIG.53

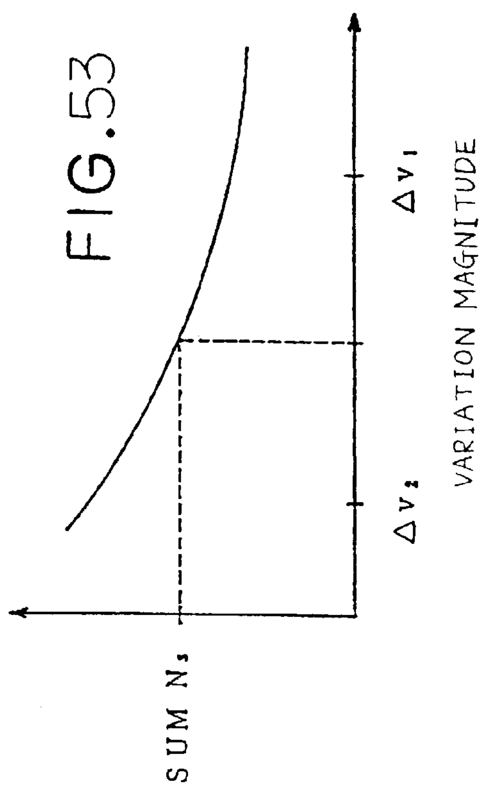

FIG. 54

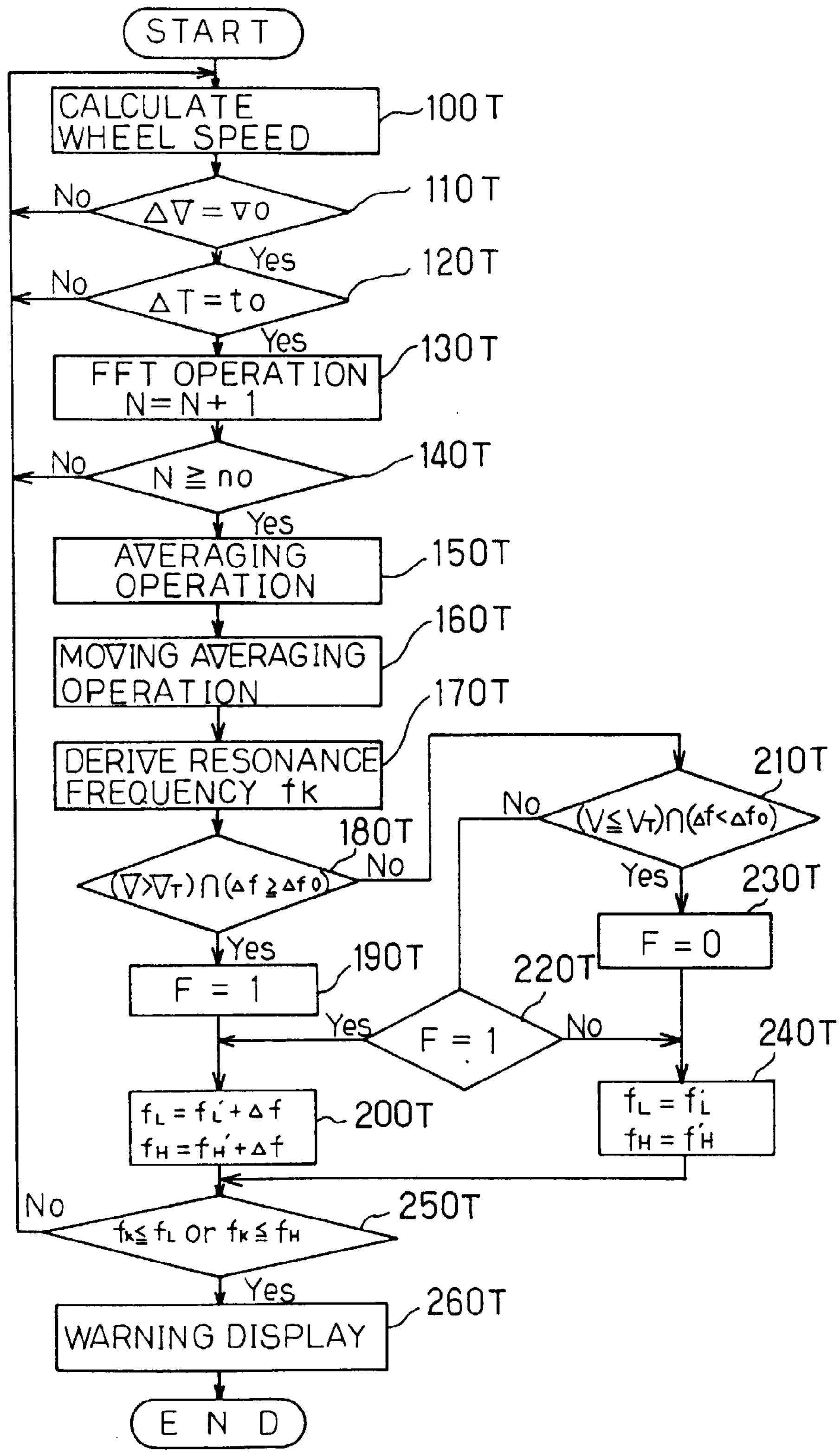
START
CALCULATE WHEEL SPEED
100T
No
ΔV = Vo
110T
Yes
No
ΔT = to
120T
Yes
FFT OPERATION N=N+1
130T
No
N ≧ no
140T
Yes
AVERAGING OPERATION
150T
MOVING AVERAGING OPERATION
160T
DERIVE RESONANCE FREQUENCY fk
170T
180T
(V>VT)∩(Δf≧Δfo)
No
Yes
210T
No
(V≦VT)∩(Δf<Δfo)
Yes
230T
F = 0
F = 1
190T
220T
Yes
F = 1
No
240T
fL = fL' + Δf
fH = fH' + Δf
200T
fL = fL'
fH = fH'
No
fk≦fL or fk≦fH
250T
Yes
WARNING DISPLAY
260T
END

FIG.55

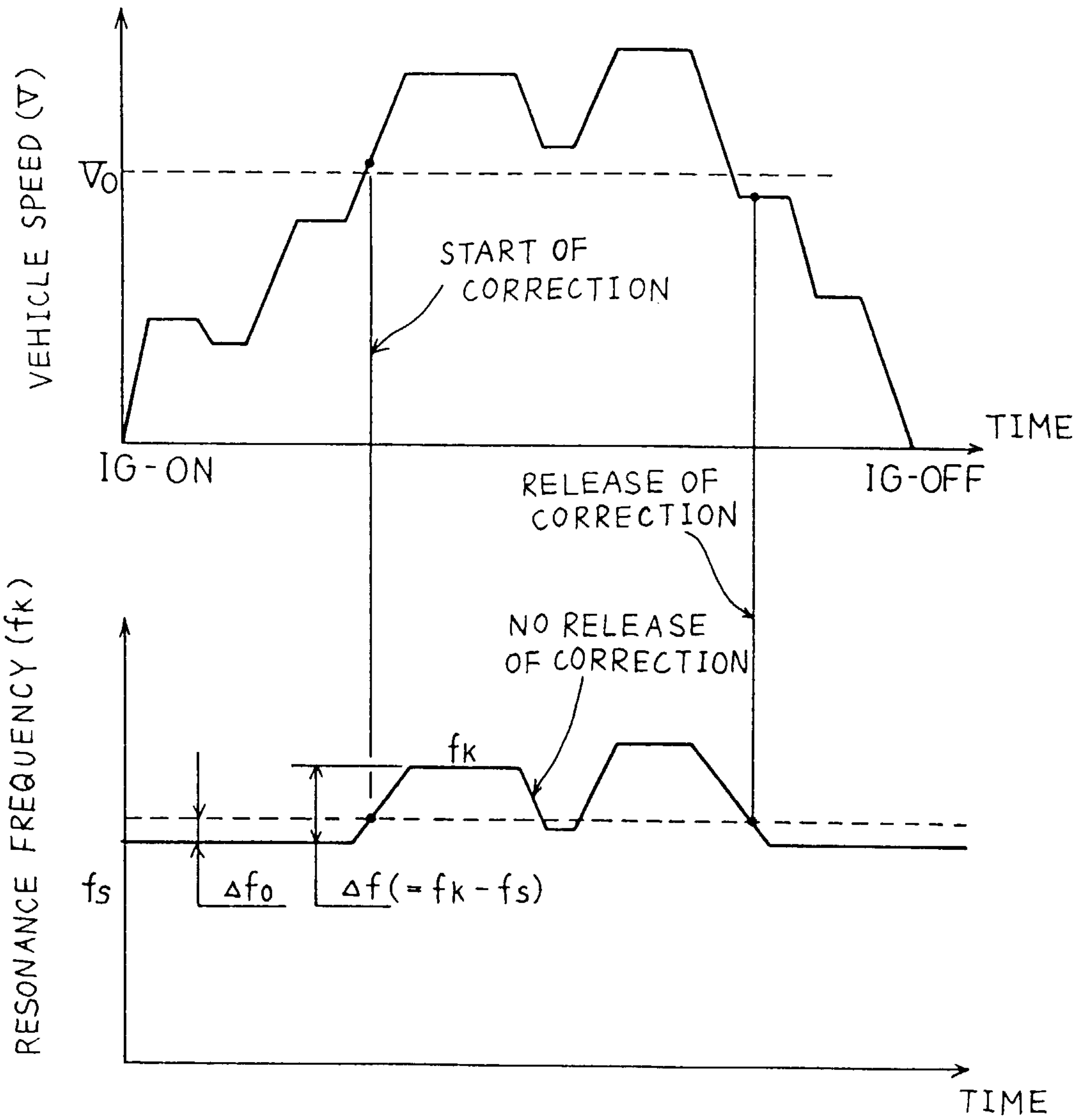
VEHICLE SPEED (V)
V0
START OF CORRECTION
TIME
IG-ON
IG-OFF
RELEASE OF CORRECTION
NO RELEASE OF CORRECTION
RESONANCE FREQUENCY (fK)
fK
fs
Δf0
Δf(=fK-fs)
TIME

FIG. 56

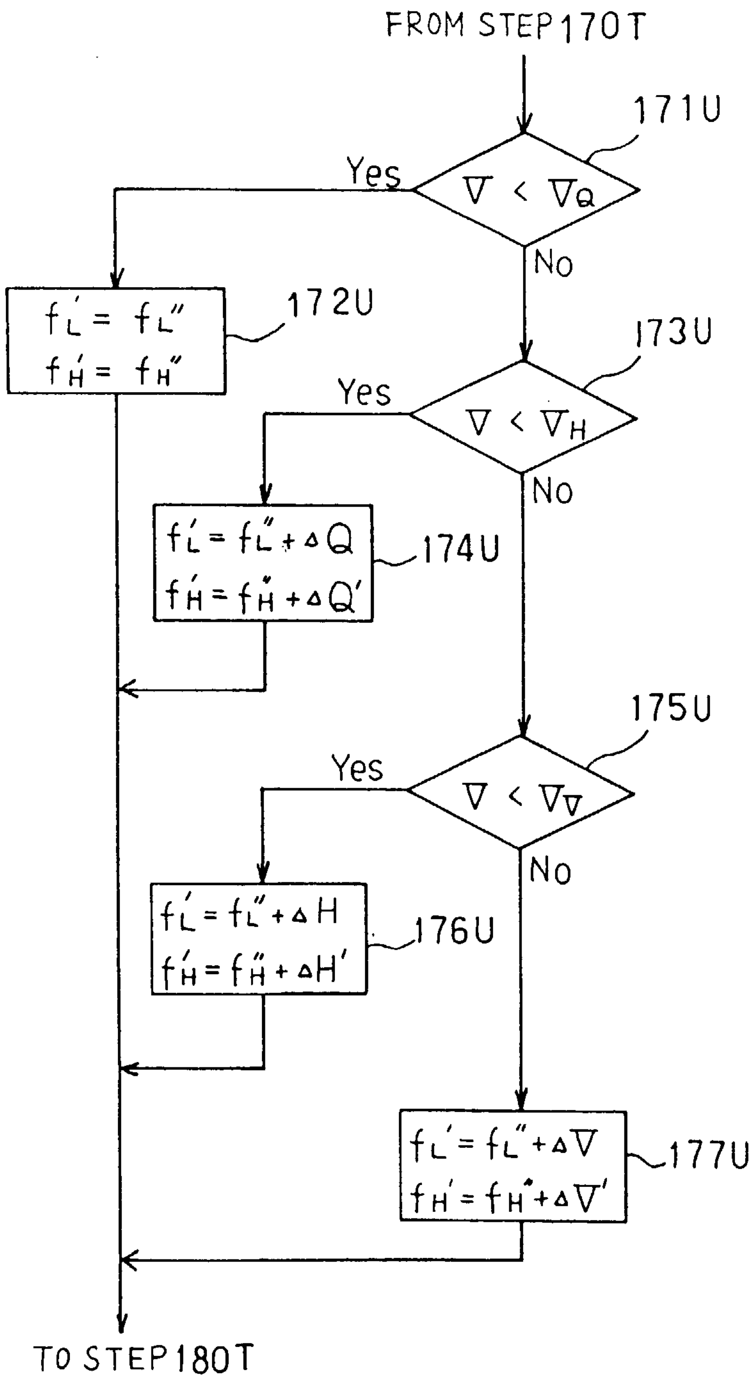
FROM STEP 170T
171U
Yes
No
172U
173U
Yes
No
174U
175U
Yes
No
176U
177U
TO STEP 180T

FIG. 57(a)

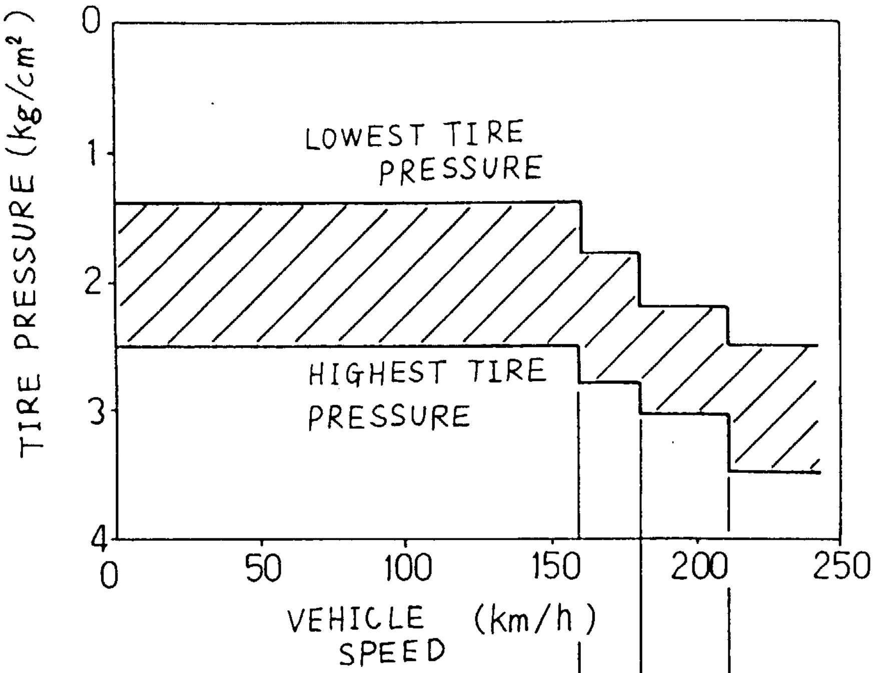


FIG. 57(b)

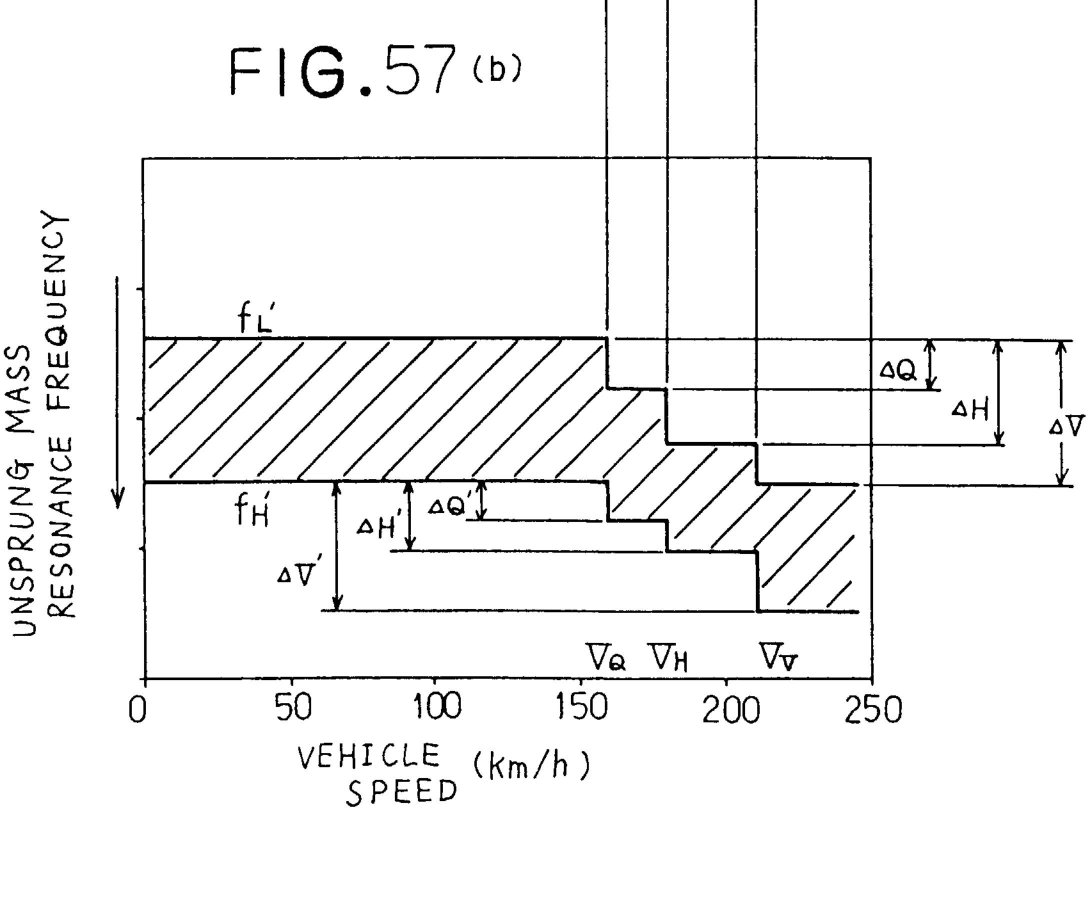

FIG.58

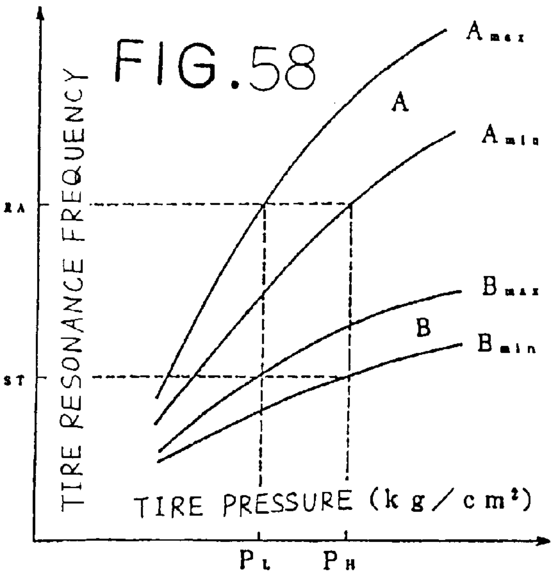
TIRE RESONANCE FREQUENCY
TIRE PRESSURE (kg/cm²)
fRA
fST
Amax
A
Amin
Bmax
B
Bmin
PL
PH

FIG.59

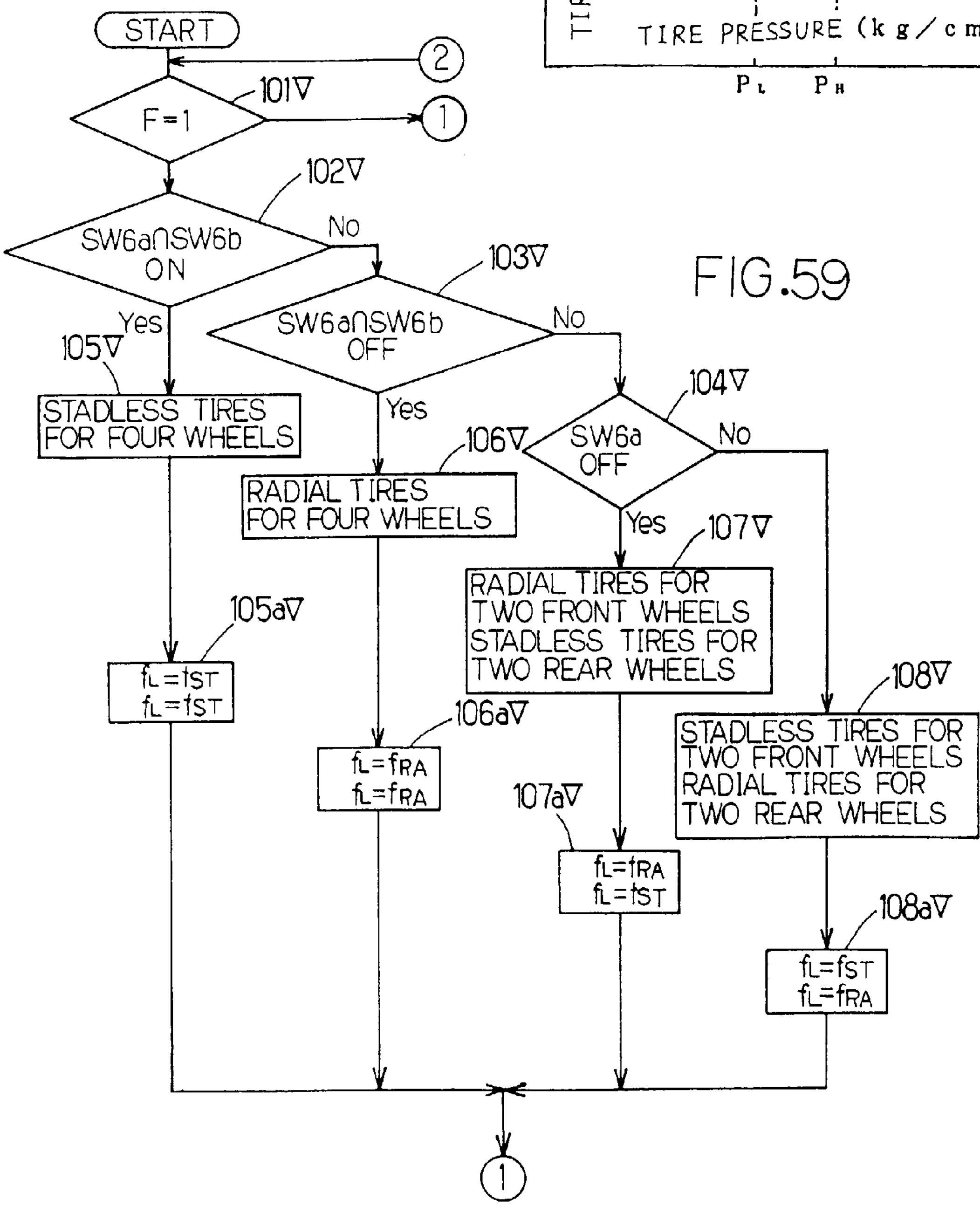
START
F=1
101
SW6a∩SW6b ON
102
No
Yes
SW6a∩SW6b OFF
103
104
105
STADLESS TIRES FOR FOUR WHEELS
RADIAL TIRES FOR FOUR WHEELS
106
SW6a OFF
RADIAL TIRES FOR TWO FRONT WHEELS STADLESS TIRES FOR TWO REAR WHEELS
107
STADLESS TIRES FOR TWO FRONT WHEELS RADIAL TIRES FOR TWO REAR WHEELS
108
105a
fL=fST
fL=fST
106a
fL=fRA
fL=fRA
107a
fL=fRA
fL=fST
108a
fL=fST
fL=fRA

FIG.60

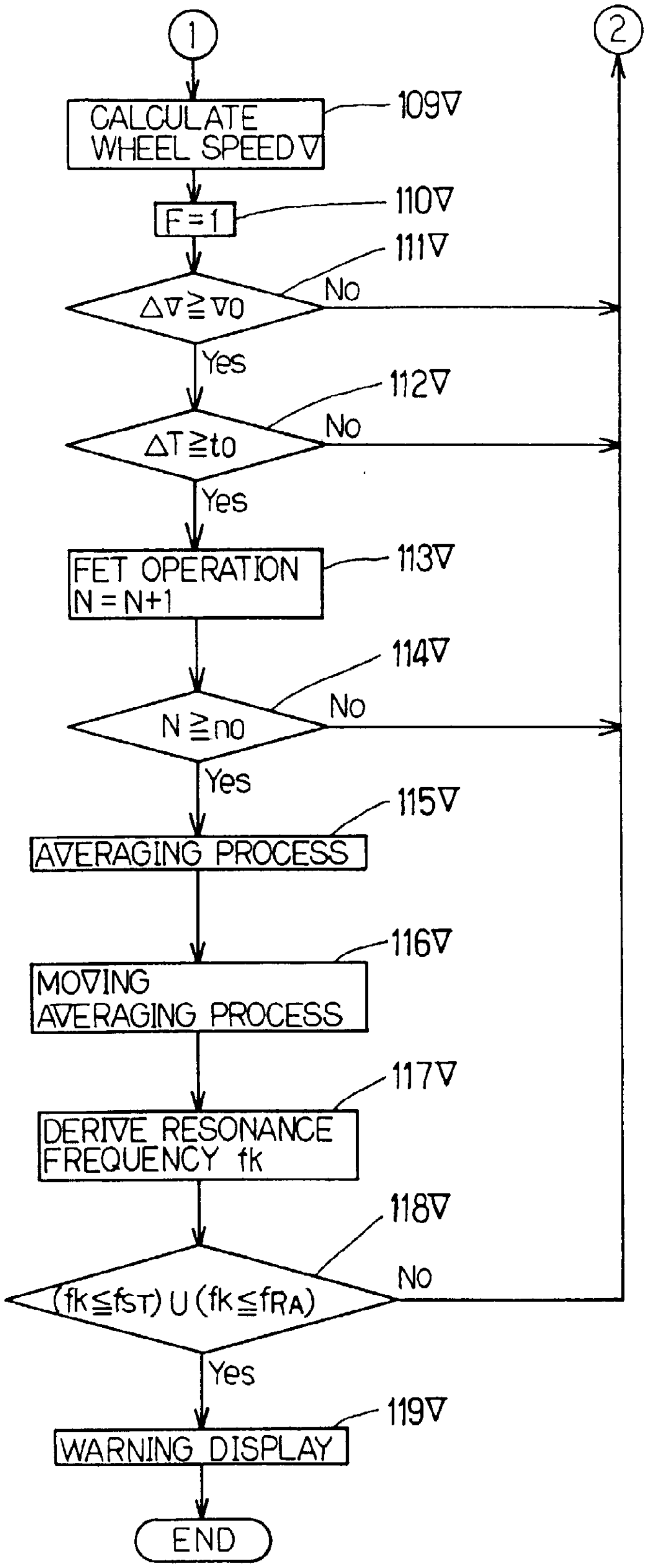
1
2
CALCULATE WHEEL SPEED V
109V
F=1
110V
111V
ΔV≧V0
No
Yes
112V
ΔT≧t0
No
Yes
FET OPERATION N=N+1
113V
114V
N≧n0
No
Yes
115V
AVERAGING PROCESS
116V
MOVING AVERAGING PROCESS
117V
DERIVE RESONANCE FREQUENCY fk
118V
(fk≦fST) U (fk≦fRA)
No
Yes
119V
WARNING DISPLAY
END

FIG.61

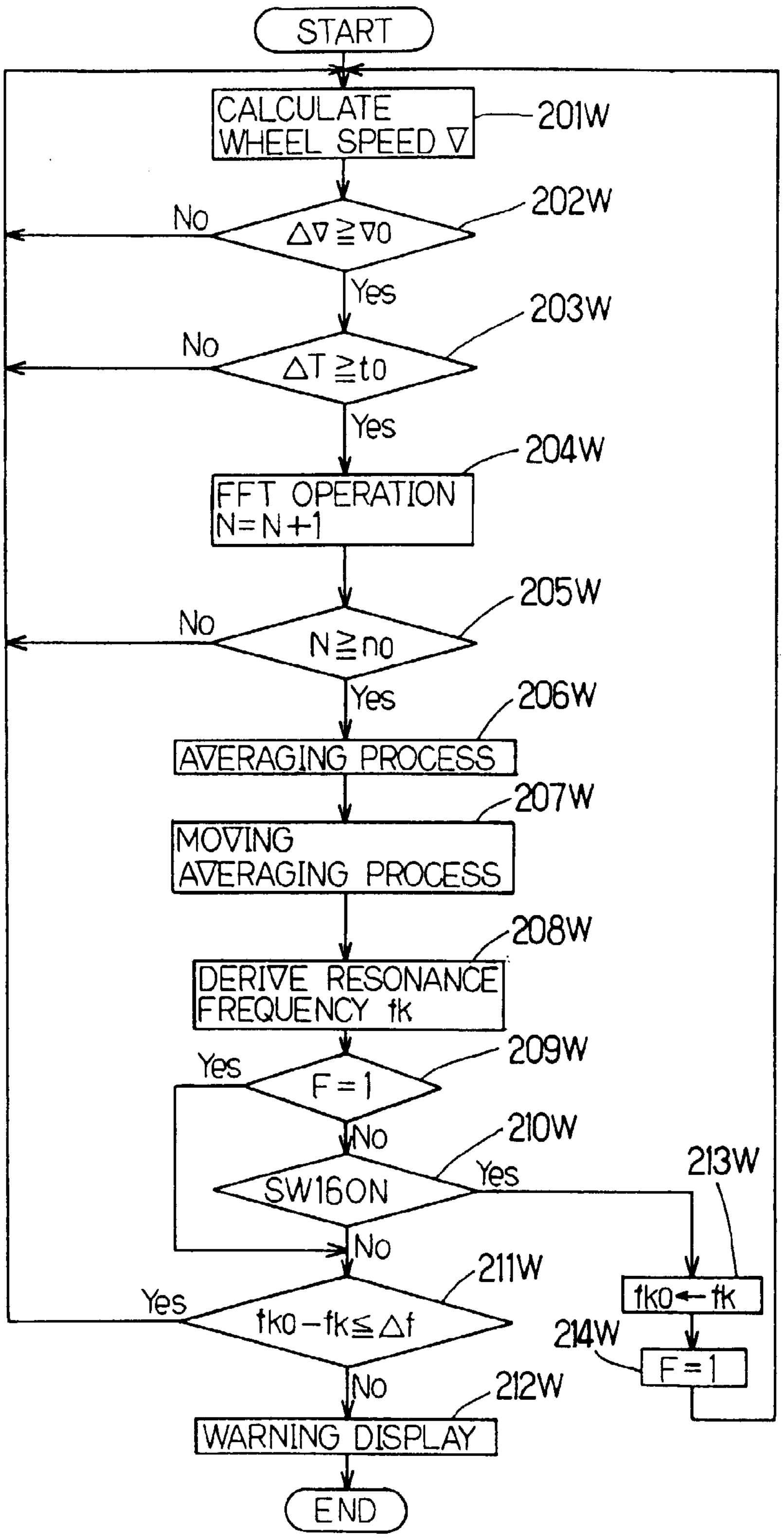
START
CALCULATE WHEEL SPEED V
201W
No
ΔV ≧ V0
202W
Yes
No
ΔT ≧ t0
203W
Yes
FFT OPERATION N=N+1
204W
No
N ≧ n0
205W
Yes
AVERAGING PROCESS
206W
MOVING AVERAGING PROCESS
207W
DERIVE RESONANCE FREQUENCY fk
208W
Yes
F=1
209W
No
SW16ON
210W
Yes
213W
No
Yes
fk0−fk ≦ Δf
211W
fk0←fk
214W
F=1
No
WARNING DISPLAY
212W
END

FIG.62

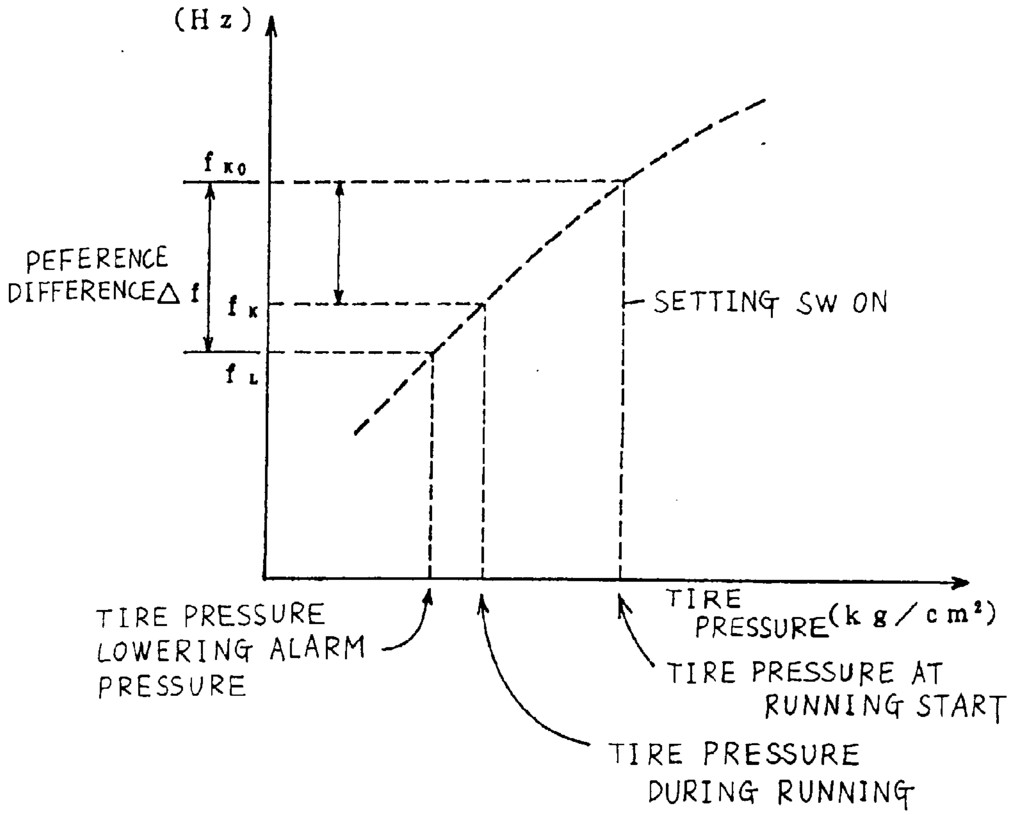
(Hz)
$f_{K0}$
PEFERENCE DIFFERENCE Δ f
$f_K$
$f_L$
SETTING SW ON
TIRE PRESSURE (kg/cm²)
TIRE PRESSURE LOWERING ALARM PRESSURE
TIRE PRESSURE AT RUNNING START
TIRE PRESSURE DURING RUNNING

FIG.63

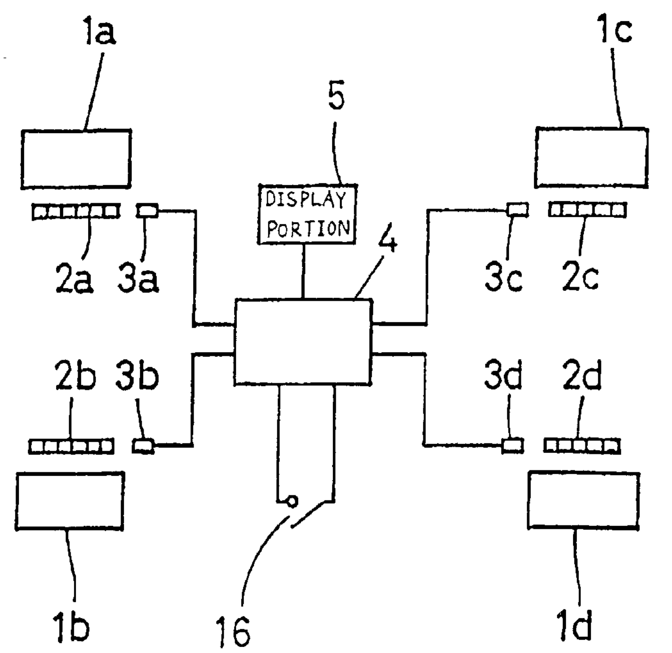
1a
1c
5
DISPLAY PORTION
4
2a 3a
3c 2c
2b 3b
3d 2d
1b
16
1d

FIG.64

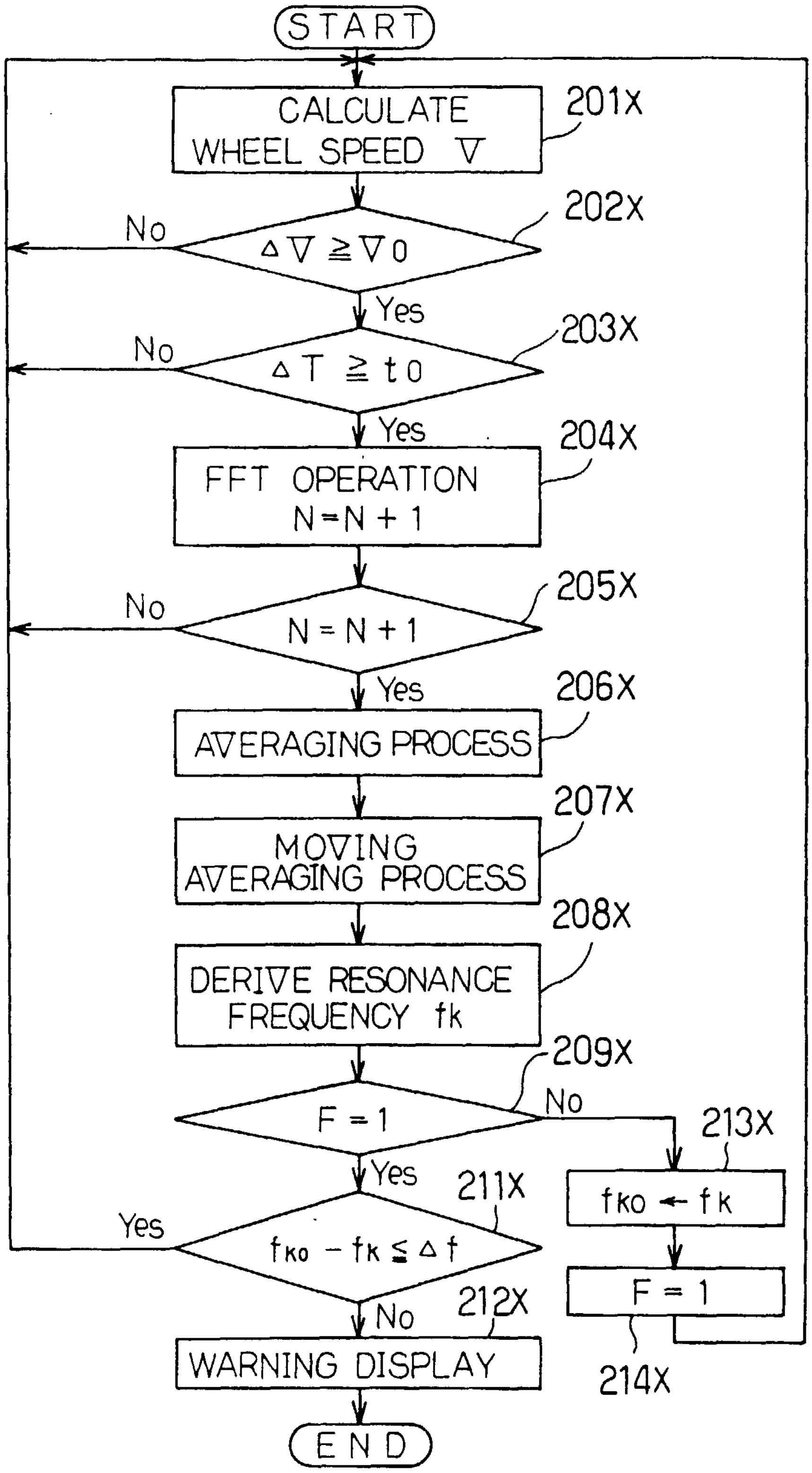
START
CALCULATE WHEEL SPEED V
201X
ΔV ≧ V0
202X
No
Yes
ΔT ≧ t0
203X
No
Yes
FFT OPERATION N=N+1
204X
N = N + 1
205X
No
Yes
AVERAGING PROCESS
206X
MOVING AVERAGING PROCESS
207X
DERIVE RESONANCE FREQUENCY fk
208X
F = 1
209X
No
Yes
fko ← fk
213X
F = 1
214X
fko − fk ≦ Δf
211X
Yes
No
WARNING DISPLAY
212X
END

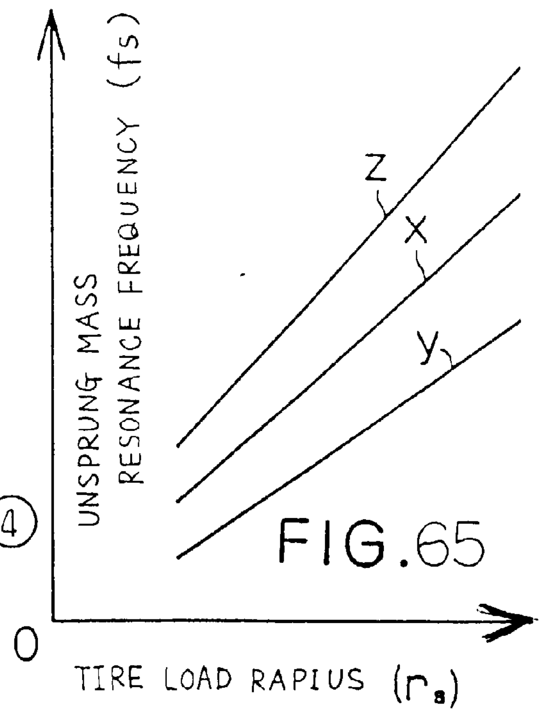
UNSPRUNG MASS
RESONANCE FREQUENCY (fs)
Z
X
y
0
TIRE LOAD RAPIUS (rs)

FIG.65

FIG.66

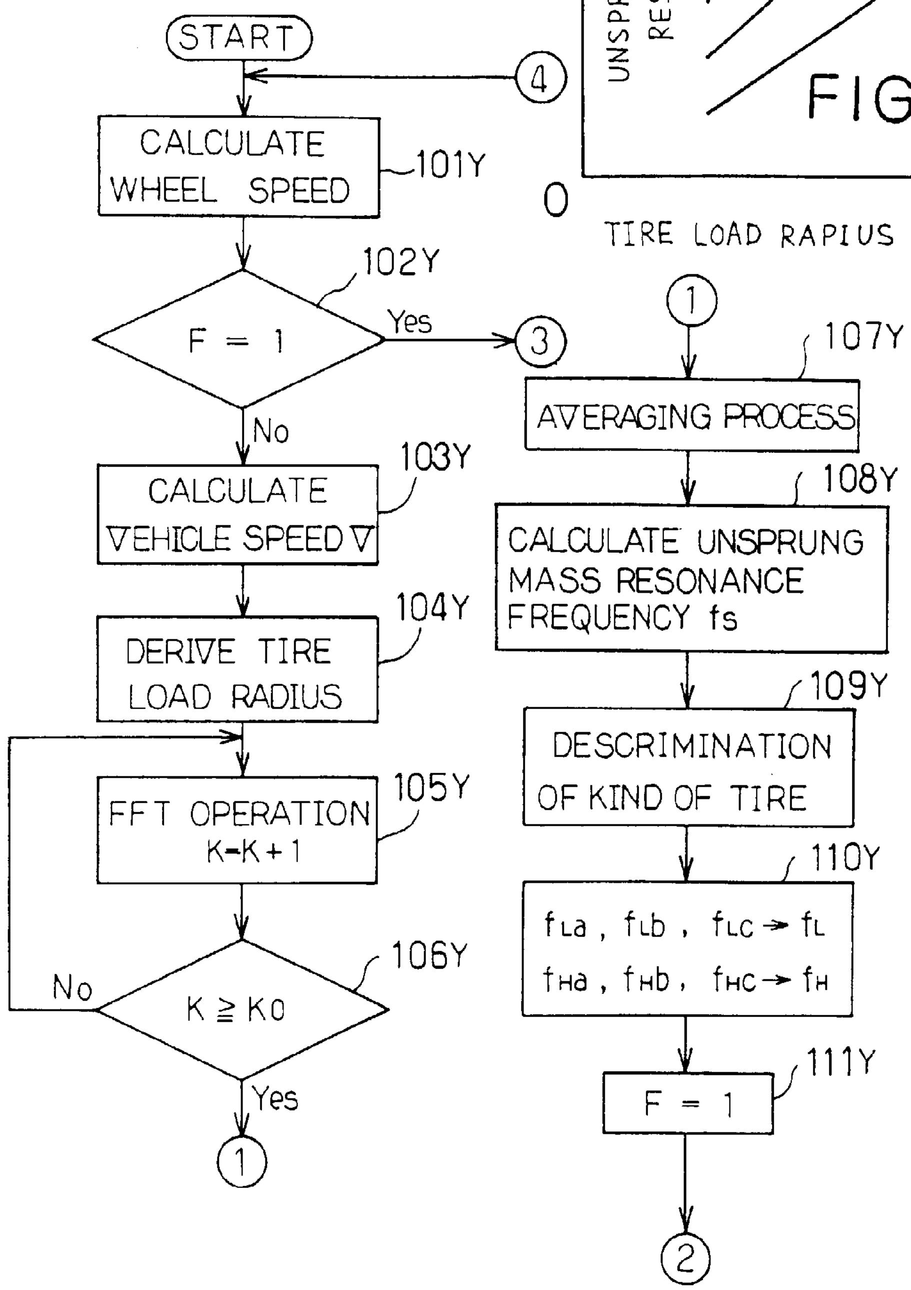
START
4
CALCULATE WHEEL SPEED
101Y
102Y
F = 1
Yes
3
No
CALCULATE VEHICLE SPEED V
103Y
DERIVE TIRE LOAD RADIUS
104Y
FFT OPERATION K=K+1
105Y
106Y
K ≧ K0
No
Yes
1
1
107Y
AVERAGING PROCESS
108Y
CALCULATE UNSPRUNG MASS RESONANCE FREQUENCY fs
109Y
DESCRIMINATION OF KIND OF TIRE
110Y
fLa , fLb , fLc → fL
fHa , fHb , fHc → fH
111Y
F = 1
2

FIG.67

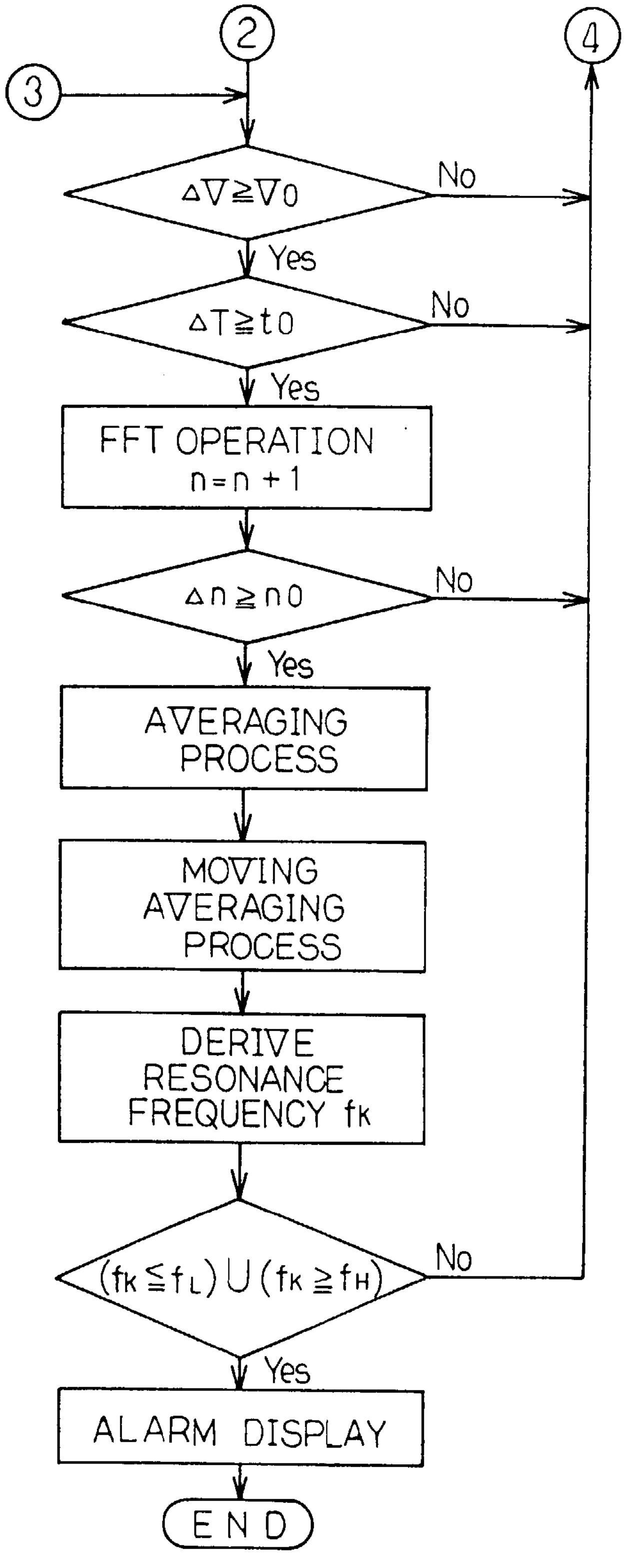
2
3
4
ΔV≧V0
No
Yes
ΔT≧t0
No
Yes
FFT OPERATION
n=n+1
Δn≧n0
No
Yes
AVERAGING PROCESS
MOVING AVERAGING PROCESS
DERIVE RESONANCE FREQUENCY fK
(fK≦fL)∪(fK≧fH)
No
Yes
ALARM DISPLAY
END

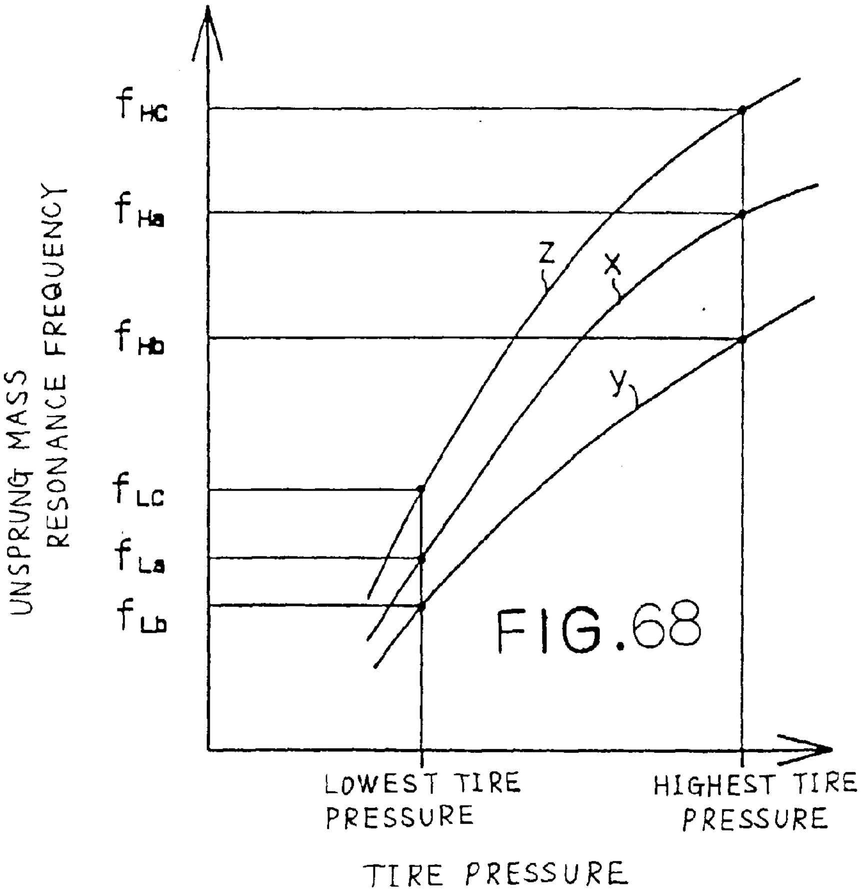
UNSPRUNG MASS
RESONANCE FREQUENCY
f HC
f Ha
f Hb
f LC
f La
f Lb
Z
X
y
LOWEST TIRE
PRESSURE
HIGHEST TIRE
PRESSURE
TIRE PRESSURE

FIG.68

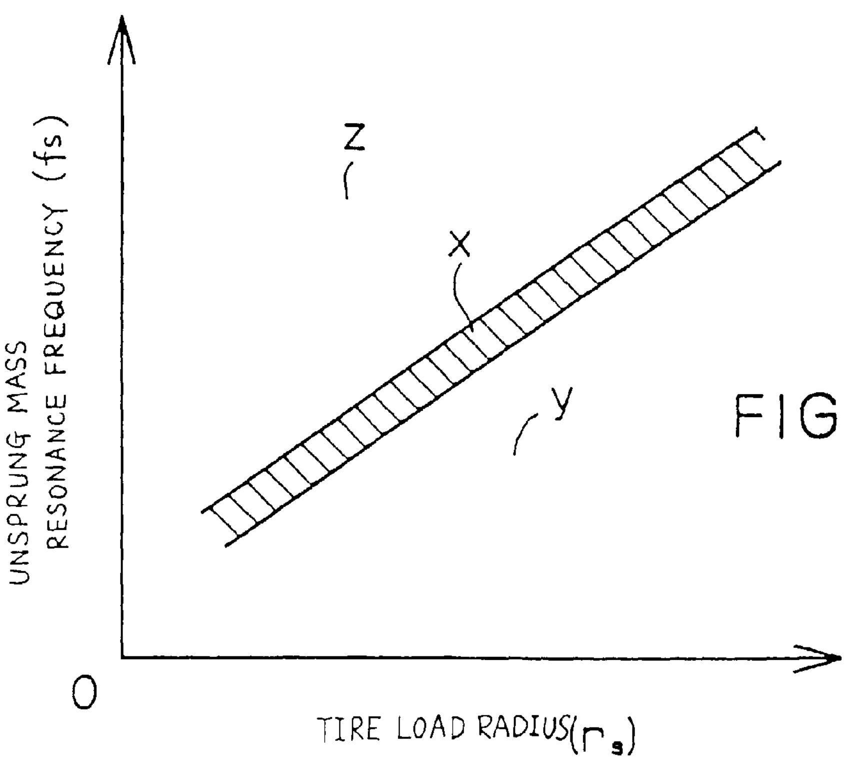
UNSPRUNG MASS
RESONANCE FREQUENCY (fs)
Z
X
y
0
TIRE LOAD RADIUS(rs)

FIG.69

FIG.70

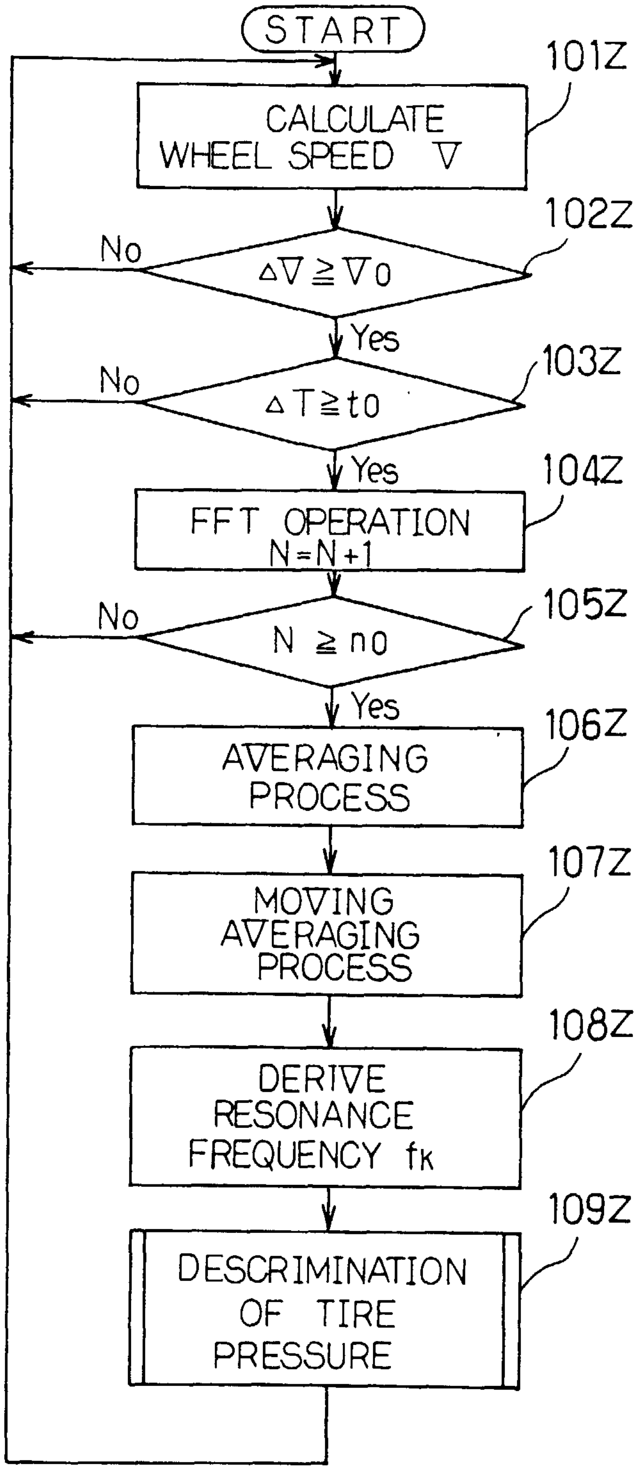
START
CALCULATE WHEEL SPEED V
101Z
ΔV ≧ V0
102Z
No
Yes
ΔT ≧ t0
103Z
No
Yes
FFT OPERATION N=N+1
104Z
N ≧ n0
105Z
No
Yes
AVERAGING PROCESS
106Z
MOVING AVERAGING PROCESS
107Z
DERIVE RESONANCE FREQUENCY fK
108Z
DESCRIMINATION OF TIRE PRESSURE
109Z

FIG.71

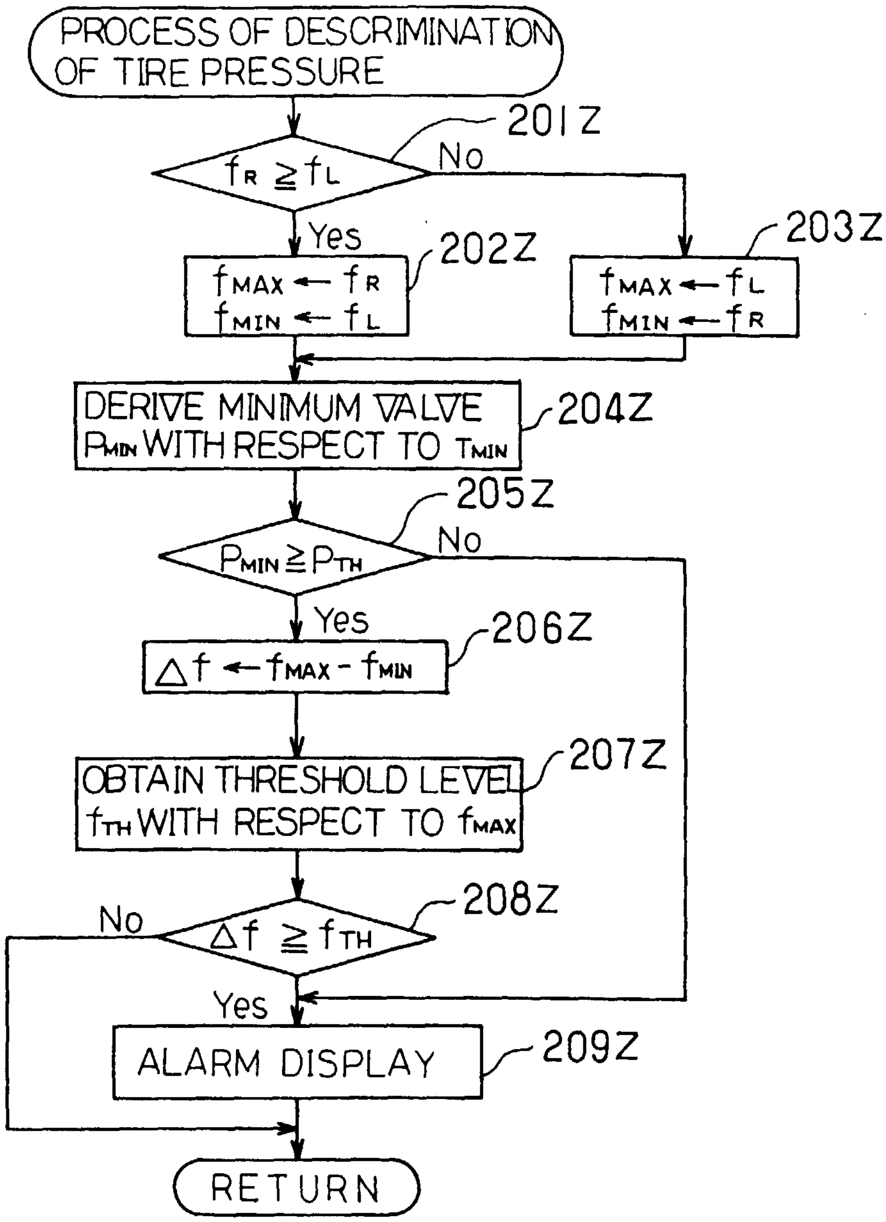
PROCESS OF DESCRIMINATION OF TIRE PRESSURE
201Z
$f_R \geq f_L$
No
Yes
202Z
$f_{MAX} \leftarrow f_R$
$f_{MIN} \leftarrow f_L$
203Z
$f_{MAX} \leftarrow f_L$
$f_{MIN} \leftarrow f_R$
DERIVE MINIMUM VALVE $P_{MIN}$ WITH RESPECT TO $T_{MIN}$
204Z
205Z
$P_{MIN} \geq P_{TH}$
No
Yes
206Z
$\Delta f \leftarrow f_{MAX} - f_{MIN}$
OBTAIN THRESHOLD LEVEL $f_{TH}$ WITH RESPECT TO $f_{MAX}$
207Z
208Z
No
$\Delta f \geq f_{TH}$
Yes
ALARM DISPLAY
209Z
RETURN

FIG.72

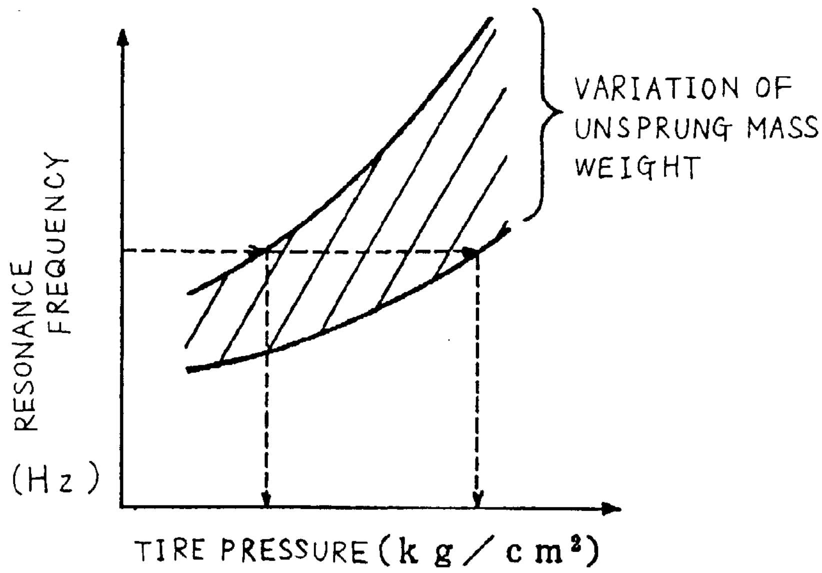
VARIATION OF UNSPRUNG MASS WEIGHT
RESONANCE FREQUENCY
(Hz)
TIRE PRESSURE (kg/cm²)

FIG.73

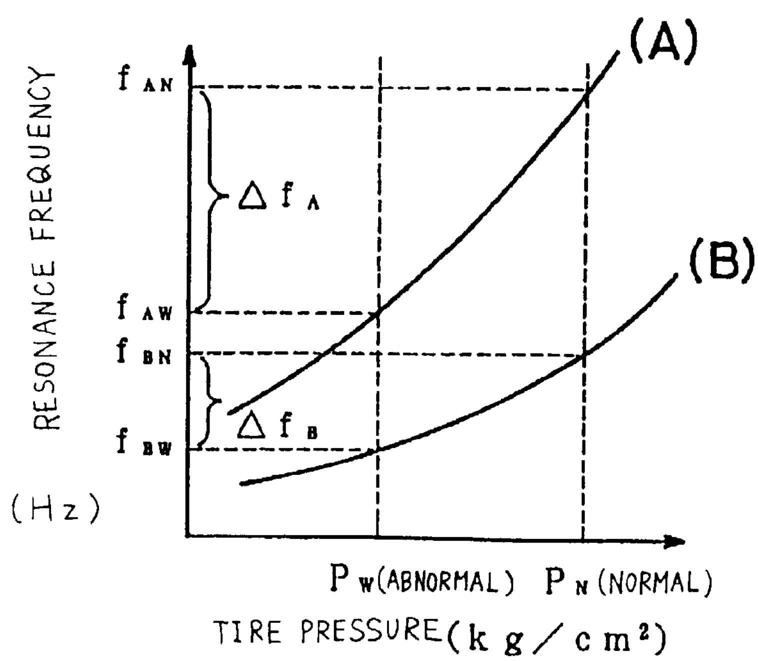
(A)
(B)
RESONANCE FREQUENCY
(Hz)
f AN
Δ f A
f AW
f BN
Δ f B
f BW
P W(ABNORMAL)
P N (NORMAL)
TIRE PRESSURE (kg/cm²)

FIG.74

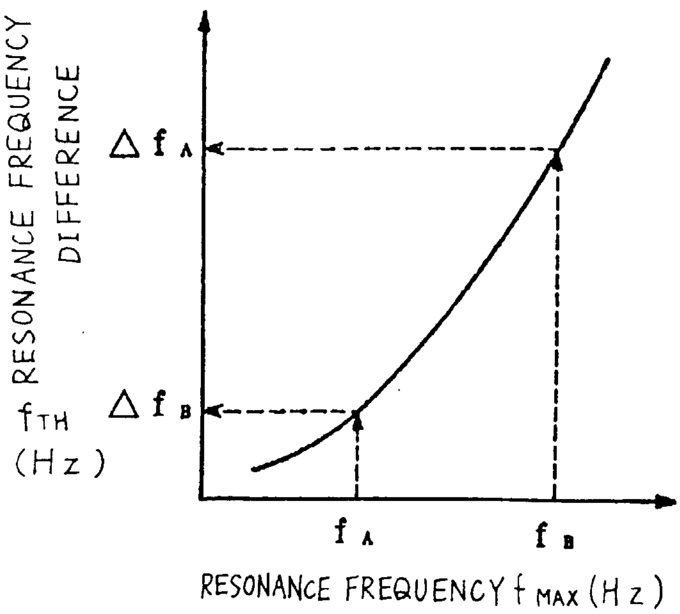
RESONANCE FREQUENCY DIFFERENCE
fTH (Hz)
Δf A
Δf B
f A
f B
RESONANCE FREQUENCY f MAX (Hz)

FIG.75

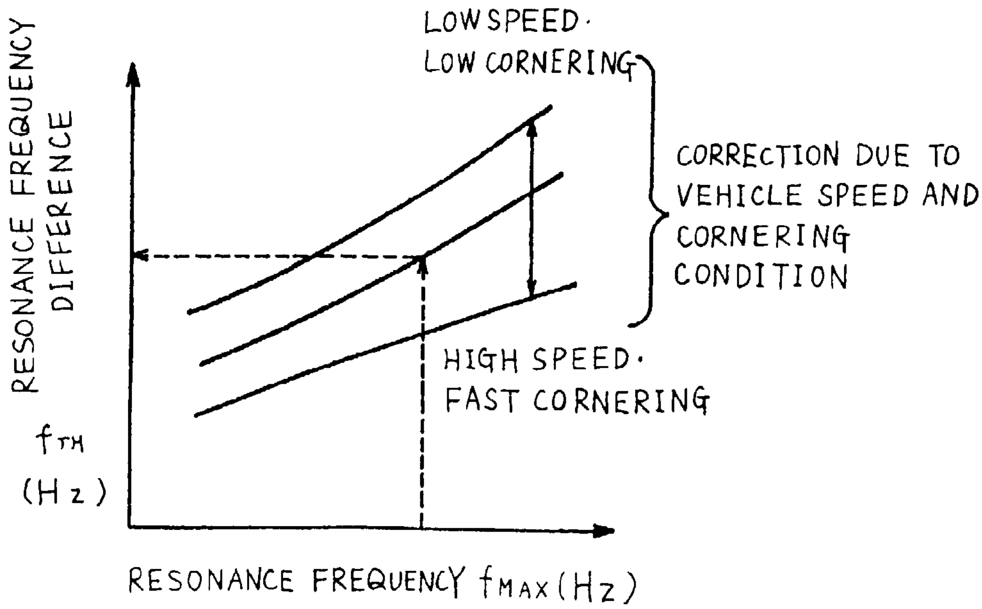
LOW SPEED·
LOW CORNERING
CORRECTION DUE TO VEHICLE SPEED AND CORNERING CONDITION
HIGH SPEED·
FAST CORNERING
RESONANCE FREQUENCY DIFFERENCE
fTH (Hz)
RESONANCE FREQUENCY fMAX (Hz)

FIG.76

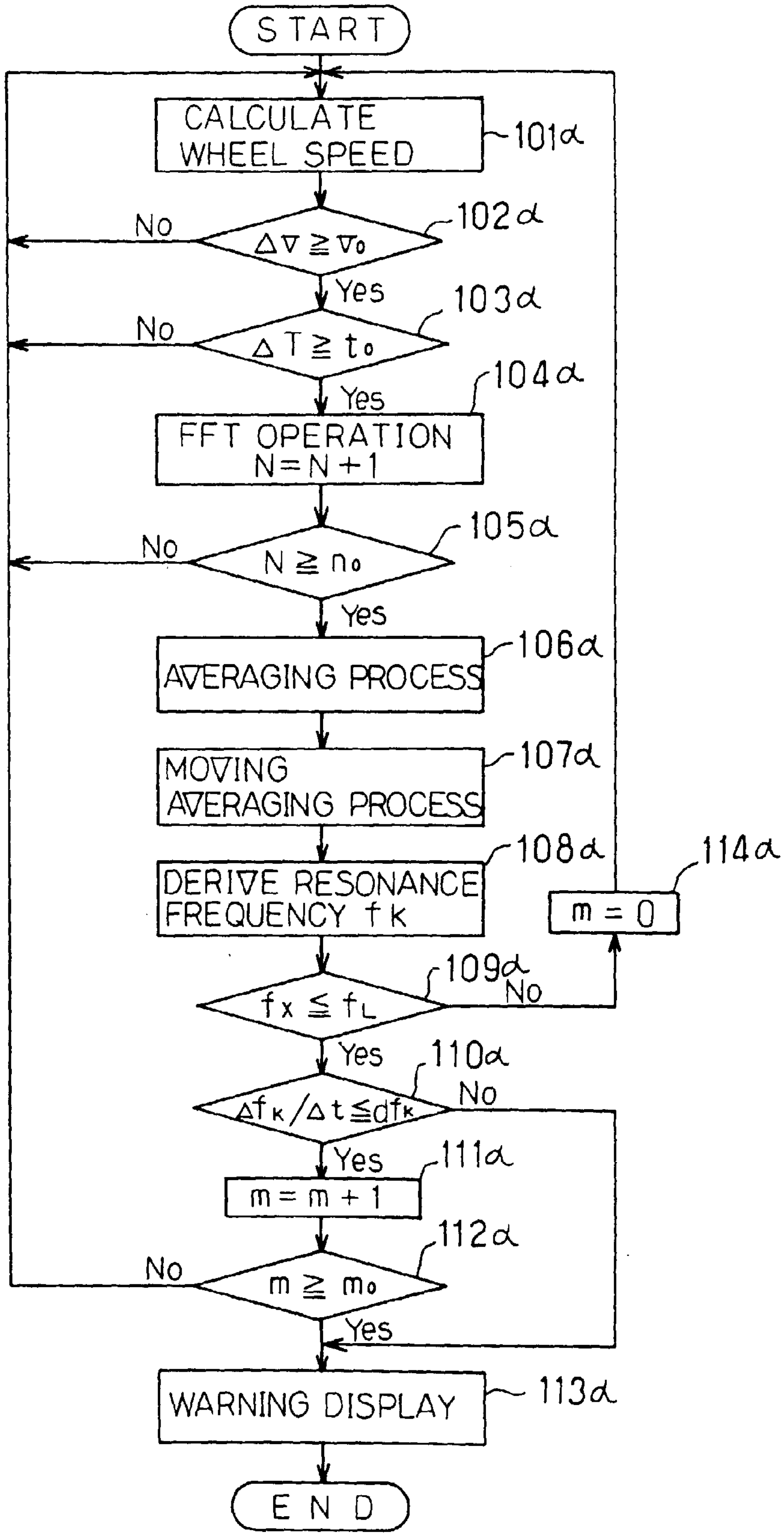
START
CALCULATE WHEEL SPEED
101α
Δv ≧ v0
102α
No
Yes
ΔT ≧ t0
103α
FFT OPERATION N=N+1
104α
N ≧ n0
105α
AVERAGING PROCESS
106α
MOVING AVERAGING PROCESS
107α
DERIVE RESONANCE FREQUENCY fk
108α
m = 0
114α
fx ≦ fL
109α
Δfk/Δt≦dfk
110α
m = m + 1
111α
m ≧ m0
112α
WARNING DISPLAY
113α
END